# EUROPEAN PATENT APPLICATION

(11) **EP 4 414 119 A1**
(43) Date of publication of application: **14.08.2024**
(21) Application number: 21956837.5
(22) Date of filing: 13.09.2021
(51) Int. Cl.: B23K 26/34, B23K 26/342, B33Y 30/00, B29C 64/153, B29C 64/188, B29C 64/227

(54) **PROCESSING SYSTEM**

(71) Applicant: NIKON CORPORATION, Minato-ku Tokyo 108-6290 (JP)
(72) Inventor: EGAMI, Shigeki, Tokyo 108-6290 (JP)
(74) Representative: Hoffmann Eitle
(86) International application number: PCT/JP2021/033523
(87) International publication number: WO 2023/037541

(57) **Abstract**

A processing system includes: a first processing apparatus that performs an additive manufacturing in a first processing area by emitting a first energy beam; a second processing apparatus that performs a removal processing in a second processing area by emitting a second energy beam; first and second placing apparatuses on which the additive manufacturing and the removal processing are performed; a positional change apparatus that relatively moves the first and second placing apparatuses between the first and second processing areas; and first and second light receiving apparatuses respectively disposed on the first and second placing apparatuses, wherein each of the first and second light receiving apparatuses may optically receive at least one of the first and second energy beams, and information related to a position of the first placing apparatus is acquired by an optical received result by the first light receiving apparatus, and information related to a position of the second placing apparatus is acquired by an optical received result by the second light receiving apparatus.

## Description

### Technical Field

The present invention relates to, for example, a technical field of a processing system configured to process an object.

### Background Art

Patent Literature 1 discloses an example of a processing system configured to process an object. One of technical problems of such a processing system is to properly process the object.

### Citation List

### Patent Literature

Patent Literature 1: U.S. PatentNo. 5,819,388B

### Summary of Invention

A first aspect provides a processing system including: a first processing apparatus that performs an additive manufacturing in a first processing area by emitting a first energy beam; a second processing apparatus that performs a removal processing in a second processing area by irradiating emitting a second energy beam; a first placing apparatus on which at least one of the additive manufacturing and the removal processing is performed; a second placing apparatus on which at least one of the additive manufacturing and the removal processing is performed; a positional change apparatus that is configured to change a positional relationship between each of the first processing apparatus and the second processing apparatus and each of the first placing apparatus and the second placing apparatus, such that each of the first placing apparatus and the second placing apparatus relatively moves between the first processing area and the second processing area; a first light receiving apparatus disposed on the first placing apparatus; and a second light receiving apparatus disposed on the second placing apparatus, wherein the first light receiving apparatus includes a first light receiving unit that is configured to optically receive at least one of the first energy beam and the second energy beam, the second light receiving apparatus includes a second light receiving unit that is configured to optically receive at least one of the first energy beam and the second energy beam, and information related to a position of the first placing apparatus is acquired by an optical received result by the first light receiving unit, and information related to a position of the second placing apparatus is acquired by an optical received result by the second light receiving unit.

A second aspect provides a processing system that builds a first build object, the processing system including: a first processing apparatus that performs an additive manufacturing in a first processing area by emitting a first energy beam; a second processing apparatus that performs a removal processing in a second processing area by emitting a second energy beam; a first placing apparatus on which each of the additive manufacturing and the removal processing is performed; a position change apparatus that is configured to change a positional relationship between the first placing apparatus and each of the first processing apparatus and the second processing apparatus such that the first placing apparatus relatively moves between the first processing area and the second processing area; and an input unit that inputs information related to a timing of a change in the positional relationship by the position change apparatus, wherein the first processing apparatus performs the additive manufacturing, thereby to additively build a first build part that is a part of the first build object, on the first placing apparatus, the first placing apparatus relatively moves from the first processing area to the second processing area after the first build part is additively built, based on the information related to the timing inputted by the input unit, the second processing apparatus performs the removal processing on a first processing target portion on which the removal processing is to be performed, of the first build part, after the first placing apparatus moves to the second processing area, the first placing apparatus relatively moves from the second processing area to the first processing area after the removal processing is performed on the first processing target portion, and the first processing apparatus performs the additive manufacturing after the first placing apparatus moves to the first processing area.

A third aspect provides a processing system that builds a first build object, the processing system including: a first processing apparatus that performs an additive manufacturing in a first processing area by emitting a first energy beam; a second processing apparatus that performs a removal processing in a second processing area by emitting a second energy beam; a first placing apparatus on which each of the additive manufacturing and the removal processing is performed; a position change apparatus that is configured to change a positional relationship between the first placing apparatus and each of the first processing apparatus and the second processing apparatus such that the first placing apparatus relatively moves between the first processing area and the second processing area; and a control unit that determines a timing of a change in the positional relationship by the position change apparatus, based on information related to a shape of the first build object, wherein the first processing apparatus performs the additive manufacturing, thereby to additively build a first build part that is a part of the first build object, on the first placing apparatus, the first placing apparatus relatively moves from the first processing area to the second processing area after the first build part is additively built, based on the timing determined by the control unit, the second processing apparatus performs the removal processing on a first processing target portion on which the removal processing is to be performed, of the first build part, after the first placing apparatus moves to the second processing area, the first placing apparatus relatively moves from the second processing area to the first processing area after the removal processing is performed on the first processing target portion, and the first processing apparatus performs the additive manufacturing after the first placing apparatus moves to the first processing area.

A fourth aspect provides a processing system including: a first processing apparatus that performs a first processing in a first processing area by irradiating the first processing area with a first energy beam; a second processing apparatus that performs a second processing in a second processing area by irradiating the second processing area with a second energy beam; a first placing apparatus on which at least one of the first processing and the second processing is performed; a second placing apparatus on which at least one of the additive manufacturing and the removal processing is performed; a positional change apparatus that is configured to change a positional relationship between each of the first processing apparatus and the second processing apparatus and each of the first placing apparatus and the second placing apparatus, such that each of the first placing apparatus and the second placing apparatus relatively moves between the first processing area and the second processing area; a first light receiving apparatus disposed on the first placing apparatus; and a second light receiving apparatus disposed on the second placing apparatus, wherein the first light receiving apparatus includes a first light receiving unit that is configured to optically receive the first energy beam, the second light receiving apparatus includes a second light receiving unit that is configured to optically receive the first energy beam, and information related to a position of the first placing apparatus is acquired by an optical received result by the first light receiving unit, and information related to a position of the second placing apparatus is acquired by an optical received result by the second light receiving unit.

A fifth aspect provides a processing system that builds a first build object, the processing system including: a first processing apparatus that performs an additive manufacturing in a first processing area by irradiating the first processing area with a first energy beam; a second processing apparatus that performs a removal processing in a second processing area by irradiating the second processing area with a second energy beam; a first placing apparatus on which each of the additive manufacturing and the removal processing is performed; and a position change apparatus that is configured to change a positional relationship between the first placing apparatus and each of the first processing apparatus and the second processing apparatus such that the first placing apparatus relatively moves between the first processing area and the second processing area, wherein the first processing apparatus performs the additive manufacturing, thereby to additively build a first build part that is a part of the first build object, on the first placing apparatus, the first placing apparatus relatively moves from the first processing area to the second processing area after the first build part is additively built, the second processing apparatus performs the removal processing on a first processing target portion on which the removal processing is to be performed, of the first build part, after the first placing apparatus moves to the second processing area, and the first placing apparatus relatively moves from the second processing area to the first processing area after the removal processing is performed on the first processing target portion.

A sixth aspect provides a processing system including: a first processing apparatus that performs a first processing in a first processing area by irradiating the first processing area with a first energy beam; a second processing apparatus that performs a second processing, which is different in type from the first processing, in a second processing area by irradiating the second processing area with a second energy beam, a first placing apparatus that is configured to place thereon a first object on which at least one of the first processing and the second processing is performed; a second placing apparatus that is configured to place thereon a second object on which at least one of the first processing and the second processing is performed; a first moving apparatus that is configured to move each of the first and second processing apparatuses; and a second moving apparatus that is configured to move each of the first and second placing apparatuses.

The operation and other advantages of the present invention will be apparent from the following detailed description of example embodiments.

### Brief Description of Drawings

[FIG. 1] FIG. 1 is a perspective view illustrating a configuration of a processing system in a first example embodiment.
[FIG. 2] FIG. 2 is a block diagram illustrating the configuration of the processing system in the first example embodiment.
[FIG. 3] FIG. 3 is a perspective view illustrating a configuration of a processing head for performing a removal processing.
[FIG. 4] FIG. 4 is a cross-sectional view illustrating a configuration of a processing head for performing an additive manufacturing.
[FIG. 5] FIG. 5 is a perspective view illustrating a configuration of a measurement head.
[FIG. 6] FIG. 6 is a flowchart illustrating a flow of a processing operation by the processing system.
[FIG. 7] FIG. 7 is a flowchart illustrating a flow of the processing operation by the processing system.
[FIG. 8] FIG. 8 is a flowchart illustrating a flow of the processing operation by the processing system.
[FIG. 9] FIG. 9 is a plan view illustrating a positional relationship among two processing heads (two processing areas), a measurement head (a measurement area), and two stages (two workpieces) in a case where one step of the processing operation is performed.
[FIG. 10] FIG. 10 is a plan view illustrating a positional relationship among two processing heads (two processing areas), a measurement head (a measurement area), and two stages (two workpieces) in a case where one step of the processing operation is performed.
[FIG. 11] Each of FIG. 11A and FIG. 11B is a cross-sectional view illustrating a build object built on a workpiece.
[FIG. 12] FIG. 12 is a plan view illustrating a positional relationship among two processing heads (two processing areas), a measurement head (a measurement area), and two stages (two workpieces) in a case where one step of the processing operation is performed.
[FIG. 13] FIG. 13 is a plan view illustrating a positional relationship among two processing heads (two processing areas), a measurement head (a measurement area), and two stages (two workpieces) in a case where one step of the processing operation is performed.
[FIG. 14] FIG. 14 is a plan view illustrating a positional relationship among two processing heads (two processing areas), a measurement head (a measurement area), and two stages (two workpieces) in a case where one step of the processing operation is performed.
[FIG. 15] FIG. 15 is a cross-sectional view illustrating an example of another build part that blocks irradiation with a processing light to a removal processing target portion of one build part.
[FIG. 16] FIG. 16 is a cross-sectional view illustrating a processing light applied to the removal processing target portion of one build part illustrated in FIG. 15.
[FIG. 17] FIG. 17 is a cross-sectional view illustrating an example of another build part that blocks irradiation with a processing light to a removal processing target portion of one build part.
[FIG. 18] FIG. 18 is a cross-sectional view illustrating a processing light applied to the removal processing target portion of one build part illustrated in FIG. 17.
[FIG. 19] FIG. 19 is a perspective view illustrating a configuration of a processing system in a modified example.
[FIG. 20] FIG. 20 is a perspective view illustrating a configuration of a processing system in a modified example.
[FIG. 21] FIG. 21 is a perspective view illustrating a configuration of a processing system in a modified example.
[FIG. 22] FIG. 22 is a perspective view illustrating a configuration of a processing system in a modified example.
[FIG. 23] FIG. 23 is a perspective view illustrating a configuration of a processing system in a modified example.
[FIG. 24] FIG. 24 is a cross-sectional view illustrating a configuration of a processing system in a modified example.
[FIG. 25] FIG. 25 is a perspective view illustrating a configuration of a processing system in the second example embodiment.
[FIG. 26] FIG. 26 is a block diagram illustrating a configuration of a processing system in a third example embodiment.
[FIG. 27] FIG. 27 is a perspective view illustrating a configuration of a processing system in a fourth example embodiment.
[FIG. 28] FIG. 28 is a cross-sectional view illustrating a configuration of a light receiving apparatus.
[FIG. 29] Each of FIG. 29A and FIG. 29B illustrates an example of a processing baseline.
[FIG. 30] Each of FIG. 30A and FIG. 30B illustrates an example of the processing baseline.
[FIG. 31] Each of FIG. 31A and FIG. 31B illustrates an example of the processing baseline.
[FIG. 32] Each of FIG. 32A and FIG. 32B illustrates an example of the processing baseline.
[FIG. 33] Each of FIG. 33A and FIG. 33B illustrates an example of a measurement baseline.
[FIG. 34] Each of FIG. 34A and FIG. 34B illustrates an example of the measurement baseline
[FIG. 35] FIG. 35 is a cross-sectional view illustrating a configuration of a light receiving apparatus in a fifth example embodiment.
[FIG. 36] FIG. 36 is a plan view illustrating a supply trace of a build material formed on a workpiece W.
[FIG. 37] FIG. 37 is a plan view illustrating a configuration of a stage driving system in a sixth example embodiment.
[FIG. 38] FIG. 38 is a cross-sectional view illustrating a stage in the sixth example embodiment.
[FIG. 39] FIG. 39 is a plan view illustrating a configuration of a stage unit in a seventh example embodiment.
[FIG. 40] FIG. 40 is a plan view illustrating a configuration of a stage unit in an eighth example embodiment.
[FIG. 41] FIG. 41 is a plan view illustrating a configuration of a stage driving system in a ninth example embodiment.
[FIG. 42] FIG. 42 is a plan view illustrating the configuration of the stage driving system in the ninth example embodiment.
[FIG. 43] FIG. 43 is a plan view illustrating the configuration of the stage driving system in the ninth example embodiment.
[FIG. 44] FIG. 44 is a plan view illustrating the configuration of the stage driving system in the ninth example embodiment.
[FIG. 45] FIG. 45 is a plan view illustrating the configuration of the stage driving system in the ninth example embodiment.

### Description of Example embodiments

Hereinafter, with reference to the drawings, a processing system according to example embodiments will be described. The following describes a processing system SYS to which the processing system according to the example embodiments is applied. The present invention, however, is not limited to the example embodiments described below.

Furthermore, in the following description, a positional relationship of various components that constitute the processing system SYS will be described by using an XYZ rectangular coordinate system that is defined by an X axis, a Y axis and a Z axis that are perpendicular to one another. Note that in the following description, for convenience of description, each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction). Moreover, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Processing system SYS in First Example Embodiment

Firstly, the processing system SYS in a first example embodiment will be described. In the following description, the processing system SYS in the first example embodiment is referred to as a "processing system SYSa".

### (1-1) Configuration of Processing System SYSa

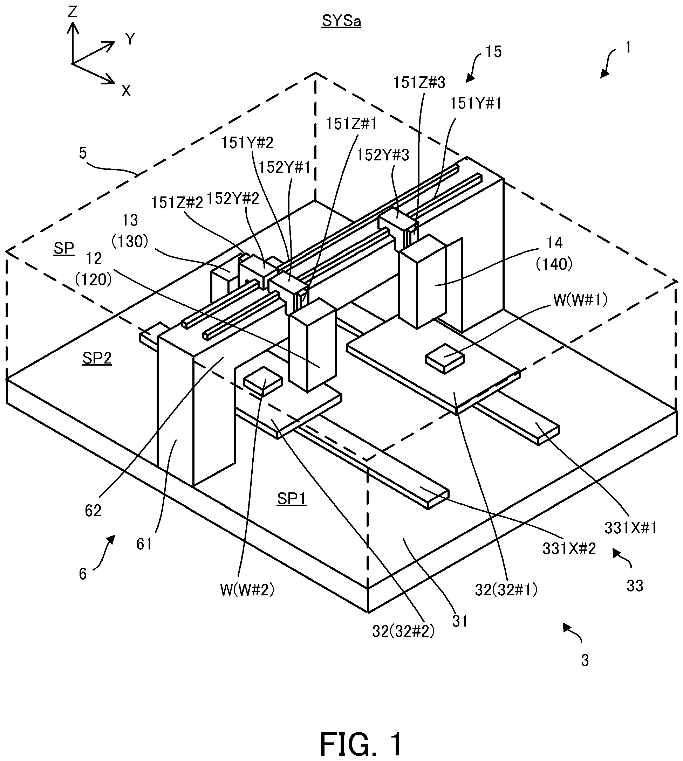

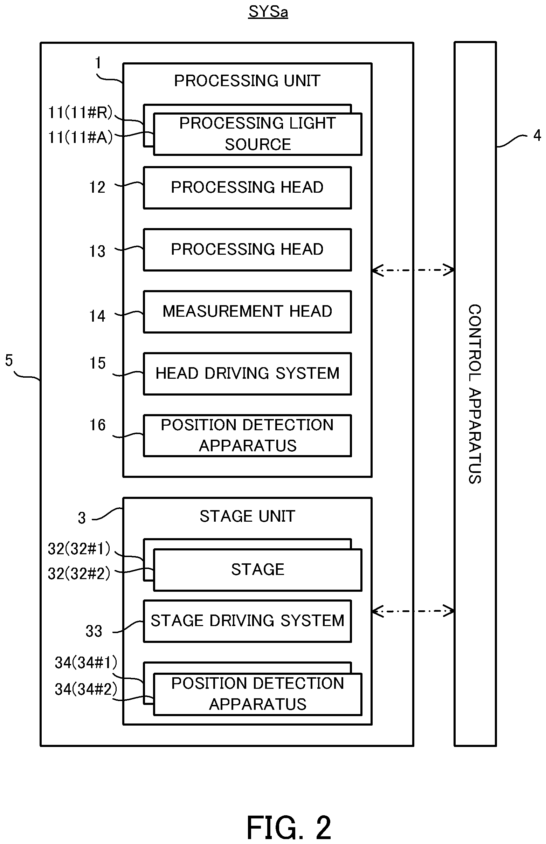

Firstly, with reference to FIG. 1 and FIG. 2, a configuration of the processing system SYSa will be described. FIG. 1 is a perspective view illustrating the configuration of the processing system SYSa. FIG. 2 is a block diagram illustrating the configuration of the processing system SYSa.

As illustrated in FIG. 1 and 2, the processing system SYSa includes a processing unit 1, a stage unit 3, and a control apparatus 4. The processing unit 1 and the stage unit 3 are contained in a housing 5. That is, the processing unit 1 and the stage unit 3 are disposed in a housing space SP inside the housing 5. At least a part of the processing unit 1 and the stage unit 3, however, may not be contained in the housing 5. The processing system SYSa may not include the housing 5 for containing the processing unit 1 and the stage unit 3.

The processing unit 1 is configured to process a workpiece W by irradiating the workpiece W with a processing light L, under the control of a control apparatus 4. The workpiece W is an object that is processed by the processing unit 1. The workpiece W may be metal, may be alloy (e.g., duralumin, etc.), may be a semiconductor (e.g., silicon), may be resin, may be a composite material such as CFRP(Carbon Fiber Reinforced Plastic), may be glass, may be ceramic, or may be an object made of any other materials, for example. An example of the any other materials includes at least one of gypsum, rubber such as polyurethane, and elastomer. In addition, a part of the workpiece W may be made of a certain material, and another part may be made of another material.

In order to process the workpiece W, the processing unit 1 includes a processing light source 11, a processing head 12, a processing head 13, a measurement head 14, a head driving system 15, and a position detection apparatus 16.

The processing light source 11 is configured to emit, as the processing light L, for example, at least one of an infrared light, a visible light, an ultraviolet light, and an extreme ultraviolet light, under the control of the control apparatus 4. Another type of light, however, may be used as the processing light L. The processing light L may include a pulsed light (i.e., a plurality of pulsed beams). The processing light L may be a laser light. In this case, the processing light source 11 may include a laser light source (e.g., a semiconductor laser such as a laser diode (LD)). The laser light source may include at least one of a fiber laser, a CO₂ laser, a YAG laser, and an excimer laser and the like. The processing light L, however, may not be a laser light. The processing light source 11 may include any light source (e.g., at least one of a LED (Light Emitting Diode) and a discharge lamp and the like).

Each of the processing heads 12 and 13 processes the workpiece W, by irradiating the workpiece W with the processing light L emitted by the processing light source 11, under the control of the control apparatus 4. Therefore, each of the processing heads 12 and 13 may be referred to as a processing apparatus. Specifically, the processing head 12 may perform a first processing on the workpiece W, by using the processing light L. The processing head 13 may perform a second processing on the workpiece W, by using the processing light L. The first processing may be the same type of processing as the second processing. Alternatively, the first processing may be a different type of processing from the second processing.

At least one of the first processing and the second processing may include a removal processing for removing a part of the workpiece W. At least one of the first processing and the second processing may include an additive manufacturing for adding a new build object to the workpiece W. At least one of the first processing and the second processing may include a melt processing for melting at least a part of a surface of the workpiece W. The melt processing may be a processing for smoothing at least a part of the surface of the workpiece W. In this case, the melt processing may be referred to as a smoothing processing or a polishing processing. Furthermore, at least one of the first processing and the second processing may be a joint processing for joining/bonding a plurality of workpieces W. The joint processing may include a processing for joining a plurality of workpieces W by welding or the like, for example. At least one of the first processing and the second processing may be a cutting processing for cutting the workpiece W. The first example embodiment describes an example in which the processing head 12 performs the removal processing and the processing head 13 performs the additive manufacturing.

The removal processing may include a thermal processing. Specifically, the processing head 12 may irradiate a processing target area of the workpiece W with the processing light L. When the processing target area of the workpiece W is irradiated with the processing light L, an energy of the processing light L is transferred to the processing target area of the workpiece W and a part close to the processing target area. When a heat caused by the energy of the processing light L is transferred, a material that constitutes the processing target area and the part close to the processing target area of the workpiece W, is melted by the heat caused by the energy of the processing light L. The melted material is scattered as drops/droplets of liquid. Alternatively, the melted material is evaporated by the heat caused by the energy of the processed light L. Consequently, the processing target area and the part close to the processing target area of the workpiece W are removed. In this case, it can be said that the processing head 12 performs the removal processing on the workpiece W by utilizing a principle of a so-called thermal processing. In a case where the thermal processing is performed, the processing light L may include a pulsed light or continuous light with a light emission time of a millisecond or more.

On the other hand, depending on the characteristics of the processing light L, the processing head 12 may perform the removal processing on the workpiece W, by utilizing a principle of a non-thermal processing (e.g., an ablation processing). That is, the processing head 12 may perform the non-thermal processing (e.g., the ablation processing) on the workpiece W. For example, when a light with high photon density (in other words, fluence) is used as the processing light L, the material that constitutes the processing target area and the part close to the processing target area of the workpiece W, is instantaneously evaporated and scattered. That is, the material that constitutes the processing target area and the part close to the processing target area of the workpiece W, is evaporated and scattered within a time sufficiently shorter than a thermal diffusion time of the workpiece W. In this case, the material that constitutes the processing target area and the part close to the processing target area of the workpiece W, may be released from the workpiece W, as at least one of ions, atoms, radicals, molecules, clusters, and solid pieces. In a case where the non-thermal processing is performed, the processing light L may include a pulsed light with a light emission time of a picosecond or less (or, in some cases, a nanosecond or a femtosecond or less). In a case where the pulsed light with a light emission time of a picosecond or less (or, in some cases, a nanosecond or a femtosecond or less) is used as the processing light L, the material that constitutes the processing target area and the part close to the processing target area of the workpiece W, may be sublimated without being in a melted state. Therefore, it is possible to process the workpiece W, while reducing as much as possible an influence on the workpiece W by the heat caused by the energy of the processing light L.

The processing head 13 may perform an additive manufacturing based on any processing method. The first example embodiment describes an example in which the processing head 13 performs an additive manufacturing based on the Laser Metal Deposition (LMD). The additive manufacturing based on the Laser Metal Deposition is an additive manufacturing for building a build object that is integrated with or separable from the workpiece W, by melting a build material M supplied to the workpiece W, with the processing light L (i.e., an energy beam in a form of light). The processing head 13, however, may perform an additive manufacturing based on a different method from the Laser Metal Deposition. For example, the processing head 13 may perform an additive manufacturing based on at least one of Powder Bed Fusion such as Selective Laser Sintering (SLS), Binder Jetting, Material Jetting, and Laser Metal Fusion (LMF).

The build material M is a material that is meltable by the irradiation with the processing light L having a predetermined intensity or higher. At least one of a metal material and a resin material is usable as the build material M, for example. However, another material that is different from the metal material and the resin material may be used as the build material M. An example of the other material includes at least one of metal powder, alloy powder, gypsum, rubber such as polyurethane, and elastomer. The build material M may include the same material as the material that constitutes the workpiece W. The build material M may include a material having a similar composition to that of the material that constitutes the workpiece W. The build material M may include a different material from the material that constitutes the workpiece W. The build material M is a powder-like or grain-like material. That is, the build material M is a powdery material. The build material M, however, may not be a powdery material. For example, at least one of a wired-like build material and a gas-like build material may be used as the build material M.

The processing heads 12 and 13 may process the workpiece W, by using the processing light L emitted from a single processing light source 11. Alternatively, the processing heads 12 and 13 may process the workpiece W, by using different processing lights L emitted from different processing light sources 11, respectively. The first example embodiment describes an example in which the processing head 12 processes the workpiece W by using the processing light L emitted by a first processing light source 11, and the processing head 13 processes the workpiece W by using the processing light L emitted by a second processing light source 11 that is different from the first processing light source 11. In the following description, if necessary, the first processing light source 11 is referred to as a "processing light source 11R" and the second processing light source 11 is referred to as a "processing light source 11A", thereby to distinguish between the two. Furthermore, the processing light L emitted by the processing light source 11R is referred to as a "processing light RL", and the processing light L emitted by the processing light source 11A is referred to as a "processing light AL", thereby to distinguish the two.

As the processing light RL used by the processing head 12 to perform the removal processing on the workpiece W, a pulsed light may be used. As an example, a pulsed light with a pulse duration of the order of femtoseconds, picoseconds, or nanoseconds may be used as the processing light RL. In this case, the processing light source 11R may emit, as the processing light RL, a pulsed light (e.g., a pulsed light with a pulse duration of the order of femtoseconds, picoseconds or nanoseconds). As the processing light RL, however, a different light from the pulsed light (e.g., a continuous light) may be used.

As the processing light AL used by the processing head 13 to perform the additive manufacturing on the workpiece W, a continuous light may be used. In this instance, the processing light source 11A may emit a continuous light, as the processing light AL. As the processing light AL, however, a different light from the continuous light (e.g., a pulsed light) may be used.

The processing head 12 performs the removal processing on the workpiece W placed on a stage 32 described later. That is, the removal processing is performed on the stage 32. Similarly, the processing head 13 performs the additive manufacturing on the workpiece W placed on the stage 32. That is, the additive manufacturing is performed on the stage 32.

The workpiece W processed by using at least one of the processing heads 12 and 13, may be referred to as a "workpiece W". For example, an object obtained by combining a workpiece W and a build object added to the workpiece W (wherein this build object may be a build object after the completion of the additive manufacturing, or may be a build object in the middle of the additive manufacturing) may be referred to as a "workpiece W". For example, the workpiece W on which the removal processing is performed by using the processing head 12, may be referred to as a "workpiece W". The build object may include not only an object built by the additive manufacturing, but also an object built by the removal processing. That is, in the first example embodiment, an operation of building the build object may include at least one of an operation of building the build object by the additive manufacturing and an operation of building the build object by the removal processing. It is because even the removal processing forms an object of a physical shape. For example, in a case where the processing head 12 performs the removal processing on the workpiece W, the workpiece W a part of which is removed by the removal processing, may be referred to as a build object.

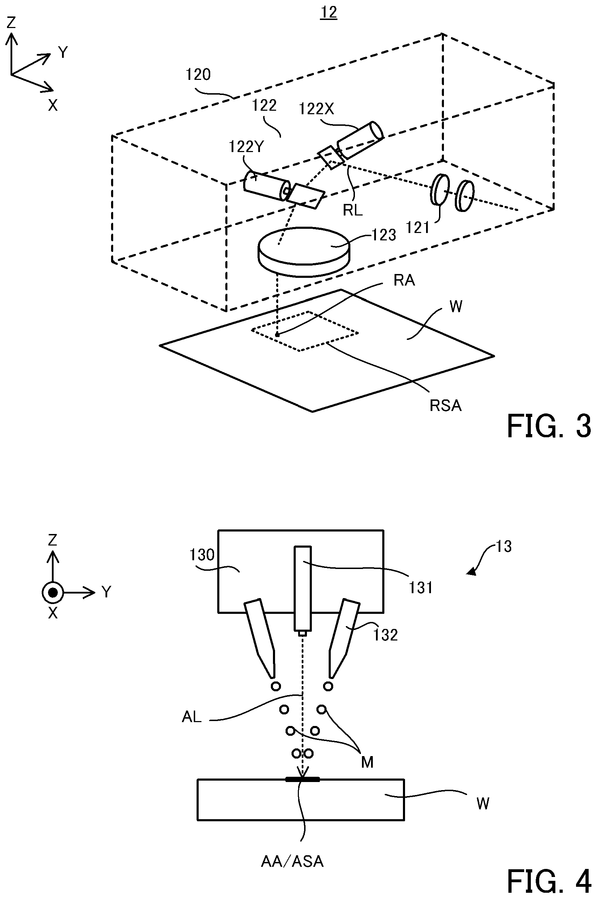

The processing head 12 may be disposed above the stage 32 where the workpiece W is placed. For example, the processing head 12 may be attached to a gate-shaped support frame 6 disposed on a surface plate 31 provided in the stage unit 3. The support frame 6 may include: a pair of leg members 61 protruding along the Z axis direction from the surface plate 31; and a beam member 62 for connecting the pair of leg members 61 through upper ends of the pair of leg members 61. The beam member 62 may be disposed above the stage 32. The processing head 12 (more specifically, a head housing 120 described in FIG. 3) may be attached to the beam member 62. In the example illustrated in FIG. 1, the processing head 12 is attached to the beam member 62 through the head driving system 15 described later. In a case where the processing head 12 is disposed above the stage 32, the processing head 12 may irradiate the workpiece W with the processing light RL by emitting the processing light RL downward from the processing head 12. That is, the processing head 12 may irradiate the workpiece W with the processing light RL traveling along the Z axis direction, by emitting the processing light RL traveling along the Z axis direction.

Similarly, the processing head 13 may be disposed above the stage 32 on which the workpiece W is placed. Specifically, the processing head 13, as in the processing head 12, may be attached to the beam member 62. In the example illustrated in FIG. 1, the processing head 13 (more specifically, a head housing 130 described in FIG. 4) is attached to the beam member 62 through the head driving system 15 described later. In a case where the processing head 13 is disposed above the stage 32, the processing head 13 may irradiate the workpiece W with the processing light AL, by emitting the processing light AL downward from the processing head 13. That is, the processing head 13 may irradiate the workpiece W with the processing light AL traveling along the Z axis direction, by emitting the processing light AL traveling along the Z axis direction.

A state where at least one of the processing heads 12 and 13 is disposed above the stage 32, may include a state where a direction of viewing at least one of the processing heads 12 and 13 from the stage 32 includes a vertical component or a gravitational component.

Referring now to FIG. 3 and FIG. 4, a configuration of each of the processing head 12 and the processing head 13 will be described. FIG. 3 is a perspective view illustrating the configuration of the processing head 12. FIG. 4 is a cross-sectional view illustrating the configuration of the processing head 13.

As illustrated in FIG. 3, the processing head 12 may include, for example, a focus changing optical system 121, a Galvano mirror 122, and an fθ lens 123. The focus changing optical system 121, the Galvano mirror 122, and the fθ lens 123 may be contained in the head housing 120. The processing head 12 may not include the focus changing optical system 121.

The focus changing optical system 121 is an optical member that is configured to change a light concentration position of the processing light RL (i.e., a convergence position of the processing light RL) along a traveling direction of the processing light RL. The focus changing optical system 121 may include, for example, a plurality of lenses arranged along the traveling direction of the processing light RL. In this case, the light concentration position of the processing light RL may be changed by at least one of the plurality of lenses moving along its optical axis.

The processing light RL passing through the focus changing optical system 121, enters the Galvano mirror 122. The Galvano mirror 122 changes an emission direction of the processing light RL from the Galvano mirror 122 by deflecting the processing light RL (i.e., by changing an emission angle of the processing light RL). When the emission direction of the processing light RL from the Galvano mirror 122 is changed, a position at which the processing light RL is emitted from the processing head 12 is changed. When the position at which the processing light RL is emitted from the processing head 12 is changed, a target irradiation area RA irradiated with the processing light RL on the surface of the workpiece W is changed. In a case where an intensity distribution of a light spot formed by the processing light RL on the surface of the workpiece W is an intensity distribution of the Gaussian distribution or the like (e.g., the tail of the intensity distribution is gradually changed), the target irradiation area RA may be a part in which light intensity is greater than or equal to a predetermined threshold. As the predetermined threshold, for example, at least one of 0, a value that is a 1/e² multiple of a maximum value of the light intensity of the light spot, a value that is half of the maximum value of the light intensity of the light spot, and 1/n of the maximum value of the light intensity of the light spot (where n is any real number) and the like, may be used.

The Galvano mirror 122 includes an X sweeping mirror 122X and a Y sweeping mirror 122Y, for example. Each of the X sweeping mirror 122X and the Y sweeping mirror 122Y is a tilt angle variable mirror an angle of which is variable relative to an optical path of the processing light RL entering each mirror. The X sweeping mirror 122X reflects the processing light RL to the Y sweeping mirror 122Y The X sweeping mirror 122X is swingable or rotatable about a rotational axis along the Y axis direction. Due to the swing or rotation of the X sweeping mirror 122X, the surface of the workpiece W is swept with the processing light RL along the X axis direction. Due to the swing or rotation of the X sweeping mirror 122X, the target irradiation area RA moves on the surface of the workpiece W along the X axis direction. The Y sweeping mirror 122Y reflects the processing light RL to the fθ lens 123. The Y sweeping mirror 122Y is swingable or rotatable about a rotational axis along the X axis direction. Due to the swing or rotation of the Y sweeping mirror 122Y, the surface of the workpiece W is swept with the processing light RL along the Y axis direction. Due to the swing or rotation of the Y sweeping mirror 122Y, the target irradiation area RA moves on the surface of the workpiece W along the Y axis direction. The Galvano mirror 122 may move an irradiation position of the processing light RL applied on the surface of the workpiece W.

Such a Galvano mirror 122 allows a processing area RSA defined with respect to the processing head 12, to be scanned or swept with the processing light RL. That is, the Galvano mirror 122 allows the target irradiation area RA to move in the processing area RSA defined with respect to the processing head 12. Note that the processing area RSA indicates an area (in other words, a range) in which the removal processing is performed by the processing head 12, while a positional relationship between the processing head 12 and the workpiece W is fixed (i.e., is not changed). Typically, the processing area RSA is set to be an area that is the same as or narrower than a sweeping range of the processing light RL deflected by the Galvano mirror 122 while the positional relationship between the processing head 12 and the workpiece W is fixed. Furthermore, the processing head 12 is moved by the head driving system 15 described later and/or the stage 32 is moved by a stage driving system 33, by which the processing area RSA (the target irradiation area RA) is relatively movable on the surface of the workpiece W. In accordance with a height of the surface of the workpiece W, the processing head 12 may be moved in the Z axis direction (a direction intersecting the surface of the workpiece W) by the head driving system 15, or the stage 32 may be moved in the Z axis direction by the stage driving system 33, or the light concentration position may be changed by using the focus changing optical system 12. At least two of these three methods may be used in combination.

The fθ lens 123 is an optical system for emitting the processing light RL from the Galvano mirror 122 toward the workpiece W. Especially, the fθ lens 123 is an optical element that is configured to condense the processing light RL from the Galvano mirror 122 on a condensed plane. The condensed plane of the fθ lens 123 may be set on the surface of the workpiece W, for example. Furthermore, the condensed plane of the fθ lens 123 may be set on a plane away from the surface of the workpiece W in a direction along an optical axis of the fθ lens 123. The condensed plane of the fθ lens 123 may be set to a plane including a rear focal position of the fθ lens 123. At this time, the Galvano mirror 122 may be disposed at a front focal position of the fθ lens 123 (in a case where the Galvano mirror 122 includes a plurality of sweeping mirrors (the X sweeping mirror 122X and the Y sweeping mirror 122Y), the front focal position of the fθ lens 123 may be set between the plurality of sweeping mirrors).

Subsequently, as illustrated in FIG. 4, the processing head 13 includes an irradiation optical system 131 and material nozzles 132. In the example illustrated in FIG. 3, the processing head 13 includes a plurality of material nozzles 132, but the processing head 13 may include a single material nozzle 132. The irradiation optical system 131 and the material nozzles 132 may be contained in the head housing 130.

The irradiation optical system 131 is an optical system for irradiating the workpiece W with the processing light AL (e.g., a condensing optical system). Therefore, the irradiation optical system 131 may be referred to as a beam irradiation unit. Specifically, the irradiation optical system 131 is configured to irradiate a target irradiation area AA, which is set on the workpiece W or near the workpiece W, as an area that is irradiated with the processing light AL (typically, in which the light is condensed), with the processing light AL. In a case where the irradiation optical system 131 does not include the Galvano mirror or the like, the processing area ASA in which the additive manufacturing is performed by the processing head 13 while a positional relationship between the processing head 13 and the workpiece W is fixed, may be the same as the target irradiation area AA. In this case, the processing head 13 is moved by the head driving system 15 described later and/or the stage 32 is moved by the stage driving system 33, by which the processing area ASA (the target irradiation area AA) is relatively movable on the surface of the workpiece W. In accordance with the height of the surface of the workpiece W, the processing head 13 may be moved in the Z axis direction by the head driving system 15 (the direction intersecting the surface of the workpiece W), or the stage 32 may be moved in the Z axis direction by the stage driving system 33.

A positional relationship between the processing area ASA in which the processing head 13 performs the additive manufacturing and the processing area RSA in which the processing head 12 performs the removal processing, may be information known to the processing system SYSa. Alternatively, the processing area ASA and the processing area RSA may be aligned in advance.

In a case where an intensity distribution of a light spot formed by the processing light AL on the surface of the workpiece W is an intensity distribution of the Gaussian distribution or the like (e.g., the tail of the intensity distribution is gradually changed), the target irradiation area AA may be a part in which light intensity is greater than or equal to a predetermined threshold. As the predetermined threshold, for example, at least one of 0, a value that is a 1/e² multiple of a maximum value of the light intensity of the light spot, a value that is half of the maximum value of the light intensity of the light spot, and 1/n of the maximum value of the light intensity of the light spot (where n is any real number) and the like, may be used.

The material nozzle 132 supplies (e.g., injects, jets, blows out, or sprays) the build material M. Therefore, the material nozzle 132 may be referred to as a material supply unit or a material supply member. The material nozzle 132 is physically connected to a not-illustrated material supply source that is a supply source of the build material M. The material nozzle 132 supplies the build material M supplied from a material supply source.

In the first example embodiment, the material nozzle 132 supplies the build material M to an irradiation position of the processing light AL (i.e., the target irradiation area AA or the processing area ASA irradiated with the processing light AL from the irradiation optical system 131). More specifically, in the first example embodiment, when the workpiece W is irradiated with the processing light AL, a melt pool is formed in the workpiece W. The melt pool is a pool of metal melted by the irradiating with the processing light AL (e.g., metal that constitutes a part of the workpiece W). The material nozzle 132 may supply the build material M to the melt pool. The material nozzle 132 may not supply the build material M to the melt pool. For example, the processing head 13 may melt the build material M by using the irradiation optical system 131 before the build material M from the material nozzle 132 reaches the workpiece W, and may make the melted build material M adhere to the workpiece W.

Referring back to FIG. 1, the measurement head 14 is configured to measure (in other words, gauge) a measurement target object, under the control of the control apparatus 4. For this reason, the measurement head 14 may be referred to as a measurement apparatus, a gauge head, or a gauge apparatus. Specifically, the measurement head 14 is configured to measure arbitrary properties of the measurement target object. An example of the properties of the measurement target object is a position of the measurement target object. Another example of the properties of the measurement target object is a shape of the measurement target object (e.g., a two-dimensional shape or a three-dimensional shape). Another example of the properties of the measurement target object includes at least one of reflectance of the measurement target object, transmittance of the measurement target object, and surface roughness of the measurement target obj ect.

The measurement target object may include the workpiece W. Specifically, the measurement target object may include at least one of a workpiece W on which the processing unit 1 has not start to process, a workpiece W on which the processing head 12 has performed the removal processing, a workpiece W on which the processing head 13 has performed the additive manufacturing, and a workpiece W on which the processing unit 1 finished processing. The measurement target object may include the stage 32 on which the workpiece W is allowed to be placed. The measurement target object may include a build object built on the workpiece W.

The measurement head 14 may be disposed above the stage 32 on which the workpiece W is placed. Specifically, the measurement head 14 may be attached to the beam member 62 in the same manner as the processing heads 12 and 13. In the example illustrated in FIG. 1, the measurement head 14 is attached to the beam member 62 through the head driving system 15 described later. In a case where the measurement head 14 is disposed above the stage 32, the measurement head 14 may measure the workpiece W from above the workpiece W. The measurement head 14 may measure the stage 32 from above the stage 32. The measurement head 14 may measure the build object from above the build object.

The measurement head 14 may measure the measurement target object by using any method. For example, the measurement head 14 may measure the measurement target object, optically, electrically, magnetically, physically, chemically, or thermally. The measurement head 14 may measure the measurement target obj ect without contact with the measurement target object. The measurement head 14 may measure the measurement target object in contact with the measurement target object. The first example embodiment describes an example in which the measurement head 14 optically measures the measurement target object without contact with the measurement target object.

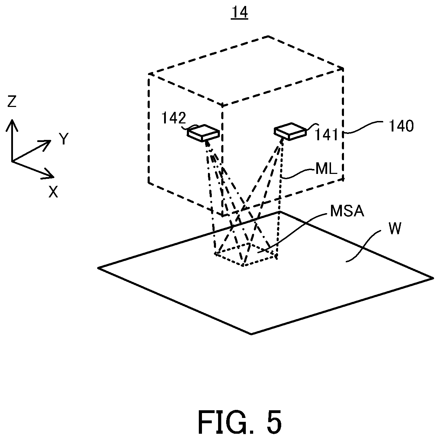

Referring now to FIG. 5, an example of a configuration of the measurement head 14 that optically measures the measurement target object without contact with the measurement target object will be described. FIG. 5 is a perspective view illustrating the configuration of the measurement head 14.

As illustrated in FIG. 5, the measurement head 14 measures the measurement target object by a unit of a measurement area MSA. That is, the measurement head 14 measures the measurement area MSA set in the measurement target object. In other words, the measurement head 14 measures a measurement target object part of the measurement target object in which the measurement area MSA is set. The measurement area MSA indicates an area (in other words, a range) in which measurement is performed by the measurement head 14 while a positional relationship between the measurement head 14 and the measurement target object is fixed (i.e., is not changed).

In order to measure the workpiece W by a unit of the measurement area MSA, the measurement head 14 may include an irradiation optical system 141 and a light receiving element 142. The irradiation optical system 141 and the light receiving element 142 may be contained in a head housing 140. The irradiation optical system 141 irradiates the measurement target object (especially, the measurement area MSA on the measurement target object) with a measurement light ML. The light receiving element 142 optically receives a return light from the measurement target object (especially, the measurement area MSA on the measurement target object) irradiated with the measurement light ML. The measurement head 14 may not include the light receiving element 142. That is, the return light may be optically received by the light receiving element 142 disposed at a position away from the measurement head 14. The light receiving element 142 may also optically receive the return light through at least a part of the irradiation optical system 141.

As an example, the measurement head 14 may measure the measurement target object, by using an optical cutting method of projecting a slit light on the surface of the measurement target object and measuring a shape of the slit light projected. In this case, the irradiation optical system 141 may irradiate the measurement target object with the slit light serving as the measurement light ML. For example, the measurement head 14 may measure the measurement target object, by using white light interferometry for measuring an interference pattern between a white light through the measurement target object and a white light without through the measurement target object. In this case, the irradiation optical system 141 may irradiate the measurement target object with the white light serving as the measurement light ML. For example, the measurement head 14 may measure the measurement target object by projecting a pattern light on the surface of the measurement target obj ect and measuring a shape of the projected pattern light. In this case, the irradiation optical system 141 may irradiate the measurement target object with the pattern light serving as the measurement light ML.

The measurement head 14 may include a plurality of measuring instruments each of which is configured to measure the measurement target object. At least one of the plurality of measuring instruments may include, for example, the irradiation optical system 141 and the light receiving element 142 described above. The plurality of measuring instruments may include at least two measuring instruments with different measurement resolutions (in other words, with different measurement accuracy). The plurality of measuring instruments may include at least two measuring instruments with different sizes of the measurement areas MSA.

Referring back to FIG. 1, the head driving system 15 moves at least one of the processing head 12, the processing head 13, and the measurement head 14, under the control of the control apparatus 4. For example, the head driving system 15 may move at least one of the processing head 12, the processing head 13, and the measurement head 14, along at least one of the X axis, the Y axis, the Z axis, the θX-direction, the θY-direction, and the θZ-direction, under the control of the control apparatus 4. The head driving system 15 may be referred to as a moving apparatus or a driving apparatus.

The first example embodiment describes an example in which the head driving system 15 moves each of the processing head 12, the processing head 13, and the measurement head 14, along each of the Y axis direction and the Z axis direction. That is, the first example embodiment describes an example in which the head driving system 15 moves each of the processing head 12, the processing head 13, and the measurement head 14, along each of the Z axis direction that is the traveling direction of the processing lights RL and AL, and the Y axis direction intersecting the traveling direction of the processing lights RL and AL. In this instance, as illustrated in FIG. 1, the head driving system 15 may include a Y guide member 151Y#1, a Y guide member 151Y#2, a Y block member 152Y#1, a Y block member 152Y#2, a Y block member 152Y#3, a Z guide member 151Z#1, a Z guide member 151Z#2, and a Z guide member 151Z#3. Each of the Y guide members 151Y#1 and 151Y#2 is a shaft member extending along the Y axis direction. Each of the Y guide members 151Y#1 and 151Y#2 is disposed on the beam member 62. Therefore, the beam member 62 may be a member extending along the Y axis direction. The Y block member 152Y#1 is attached to the Y guide member 151Y#1 such that the Y block member 152Y#1 is movable along the Y guide member 151Y#1. The Y block member 152Y#2 is attached to the Y guide member 151Y#2 such that the Y block member 152Y#2 is movable along the Y guide member 151Y#2. The Y block member 152Y#3 is attached to the Y guide member 151Y#1 such that the Y block member 152Y#3 is movable along the Y guide member 151Y#1. Each of the Z guide members 151Z#1 to 151Z#3 is a shaft member extending along the Z axis direction. The Z guide members 151Z#1 to 151Z#3 are respectively arranged on the Y block members 152Y#1 to 152Y#3. The processing head 12 is attached to the Z guide member 151Z#1 such that the processing head 12 is movable along the Z guide member 151Z#1. The processing head 13 is attached to the Z guide member 151Z#2 such that the processing head 13 is movable along the Z guide member 151Z#2. The measurement head 14 is attached to the Z guide member 151Z#3 such that the measurement head 14 is movable along the Z guide member 151Z#3.

The Y block member 152Y#1 moves along the Y guide member 151Y#1, by which the processing head 12 attached to the Y block member 152Y#1 through the Z guide member 151Z#1, moves along the Y axis direction. Furthermore, the processing head 12 moves along the Z guide member 151Z#1, by which the processing head 12 moves along the Z axis direction. Therefore, the Y guide member 151Y#1, the Y block member 152Y#1, and the Z guide member 151Z#1 may be considered to serve as moving apparatuses (driving apparatuses) that are configured to move the processing head 12.

The Y block member 152Y#2 moves along the Y guide member 151Y#2, by which the processing head 13 attached to the Y block member 152Y#2 through the Z guide member 151Z#2, moves along the Y axis direction. Furthermore, the processing head 13 moves along the Z guide member 151Z#2, by which the processing head 13 moves along the Z axis direction. Therefore, Y guide member 151Y#2, the Y block member 152Y#2, and the Z guide member 151Z#2 may be considered to serve as moving apparatuses (driving apparatuses) that are configured to move the processing head 13.

The Y block member 152Y#3 moves along the Y guide member 151Y#1, by which the measurement head 14 attached to the Y block member 152Y#3 through the Z guide member 151Z#3, moves along the Y axis direction. Furthermore, the measurement head 14 moves along the Z guide member 151Z#3, by which the measurement head 14 moves along the Z axis direction. Therefore, the Y guide member 151Y#1, the Y block member 152Y#3, and the Z guide member 151Z#3 may be considered to serve as moving apparatuses (driving apparatuses) that are configured to move the measurement head 14.

In the example illustrated in FIG. 1, the processing heads 12 and 13 move along the two different Y guide members 151Y#1 and 151Y#2, respectively. Each of the processing heads 12 and 13, however, may move along a single Y guide member (e.g., the Y guide member 151Y#1 or 151Y#2). Furthermore, in the example illustrated in FIG. 1, the processing head 12 and the measurement head 14 move along the single Y guide member 151Y#1. The processing head 12 and the measurement head 14, however, may move along two different Y guide members (e.g., the Y guide members 151Y#1 and 151Y#2), respectively. Furthermore, in the example illustrated in FIG. 1, the processing head 13 and the measurement head 14 move along the two different Y guide members 151Y#1 and 151Y#2, respectively. Each of the processing head 13 and the measurement head 14, however, may move along a single Y guide member (e.g., the Y guide member 151Y#1 or 151Y#2). In addition, the processing head 12, the processing head 13, and the measurement head 14 may move along three different Y guide members, respectively.

In the example illustrated in FIG. 1, the processing head 12 and the measurement head 14 move in a first space SP1 of the housing space SP of the housing 5, and the processing head 13 moves in a second space SP2 that is different from the first space SP1, of the housing space SP of the housing 5. In this case, as compared with a case where the processing head 13 is disposed in the first space SP1, the build material M to be supplied to the workpiece W in order that the processing head 13 processes the workpiece W, hardly enters the first space SP1. This reduces an influence of the build material M on the removal processing by the processing head 12 and the measurement by the measurement head 14. Arrangement positions of the processing head 12, the processing head 13, and the measurement head 14, however, are not limited to the example illustrated in FIG. 1. For example, at least one of the processing head 12 and the measurement head 14 may move in the second space SP2 in which the processing head 13 moves. For example, the processing head 13 may move in the first space SP1 in which at least one of the processing head 12 and the measurement head 14 moves.

In the example illustrated in FIG. 1, the first space SP1 is a space located on one side (e.g., +X side) of the support frame 6, and the second space SP2 is a space located on the other side (e.g., -X side) of the support frame 6. That is, the first space SP1 is located at a different position from that of the second space SP2 along the X axis direction. The first space SP1 is located at a different position from that of the second space SP2 along the X axis direction that is a moving direction of the stage 32 described later. The arrangement positions of the first space SP1 and the second space SP2, however, are not limited to the example illustrated in FIG. 1. For example, in the example illustrated in FIG. 1, the first space SP1 and the second space SP2 are adjacent to each other, but the first space SP1 and the second space SP2 may be apart from each other. Alternatively, a part of the first space SP1 may be superimposed on a part of the second space SP2.

When the head driving system 15 moves the processing head 12, a positional relationship between the processing head 12 and the stage 32 (and furthermore, the workpiece W placed on the stage 32) changes. Therefore, the head driving system 15 may be considered to serve as a position change apparatus that is configured to change the positional relationship between the processing head 12 and each of the stage 32 and the workpiece W. Furthermore, when the head driving system 15 moves the processing head 12, the processing area RSA in which the processing head 12 performs the removal processing, moves relative to each of the stage 32 and the workpiece W. From a different point of view, each of the stage 32 and the workpiece W relatively moves relative to the processing area RSA in which the processing head 12 performs the removal processing.

When the head driving system 15 moves the processing head 13, a positional relationship between the processing head 13 and each of the stage 32 and the workpiece W changes. Therefore, the head driving system 15 may be considered to serve as a position change apparatus that is configured to change the positional relationship between the processing head 13 and each of the stage 32 and the workpiece W. Furthermore, when the head driving system 15 moves the processing head 13, the processing area ASAin which the processing head 13 performs the additive manufacturing, moves relative to each of the stage 32 and the workpiece W. From a different point of view, each of the stage 32 and the workpiece W relatively moves relative to the processing area ASA in which the processing head 13 performs the additive manufacturing.

When the head driving system 15 moves the measurement head 14, a positional relationship between the measurement head 14 and each of the stage 32 and the workpiece W changes. Therefore, the head driving system 15 may be considered to serve as a position change apparatus that is configured to change the positional relationship between the measurement head 14 and each of the stage 32 and the workpiece W. Furthermore, when the head driving system 15 moves the measurement head 14, the measurement area MSA in which the measurement head 14 performs the measurement, moves relative to each of the stage 32 and the workpiece W. From a different point of view, each of the stage 32 and the workpiece W relatively moves relative to the measurement area MSA in which the measurement head 14 performs the measurement.

The position detection apparatus 16 is configured to measure respective positions of the processing head 12, the processing head 13, and the measurement head 14. That is, the position detection apparatus 16 is an apparatus that is configured to acquire information related to the positions of the processing head 12, the processing head 13, and the measurement head 14. The position detection apparatus 16 may include, for example, an interferometer (e.g., a laser interferometer). The position detection apparatus 16 may include, for example, an encoder (e.g. at least one of a linear encoder and a rotary encoder, as an example). In a case where the head drive train 15 uses a stepping motor as a drive source, the position detection apparatus 16 may include, for example, a position detection apparatus of an open-loop control type. The position detection apparatus of the open-loop control type is a position detection apparatus that measures a position of each of the processing head 12, the processing head 13, and the measurement head 14, by estimating a moving distance of each of the processing head 12, the processing head 13, and the measurement head 14 from an integrated value of the number of pulses for driving the stepping motor.

The stage unit 3 includes the surface plate 31, a plurality of stages 32, the stage driving system 33, and a plurality of position detection apparatuses 34.

The surface plate 31 is disposed on a bottom surface of the housing 5 (or on a support surface such as a floor surface on which the housing 5 is placed). The stage 32 is disposed on the surface plate 31. A not-illustrated vibration isolating apparatus for reducing the transmission of vibration of the surface plate 31 to the stage 32 may be disposed between the surface plate 31 and the bottom surface of the housing 5 or the support surface such as the floor surface on which the housing 5 is placed. Furthermore, the support frame 6 described above may be disposed on the surface plate 31. The leg members may be provided between the surface plate 31 and the bottom surface of the housing 5 (or the support surface such as the floor surface on which the housing 5 is placed). In this instance, a vibration isolating apparatus may be disposed between the leg members and the surface plate 31 and/or between the leg members and the bottom surface (or the support surface).

The stage 32 is a placing apparatus on which the workpiece W is placed. The stage 32 may be configured to hold the workpiece W placed on the stage 32. Alternatively, the stage 32 may not be configured to hold the workpiece W placed on the stage 32. In this case, the workpiece W may be placed on the stage 32 without a clamp. In a case where the stage 32 is capable of holding the workpiece W, the stage 32 may include at least one of a mechanical chuck, an electrostatic chuck, a vacuum suction chuck, and the like, to hold the workpiece W.

In the examples illustrated in FIG. 1 and FIG. 2, the stage unit 3 includes two stages 32 (specifically, a stage 32#1 and a stage 32#2). In the following description, the workpiece W placed on the stage 32#1 is referred to as a "workpiece W#1" and the workpiece W placed on the stage 32#2 is referred to as a "workpiece W#2" to distinguish the two.

The processing head 12 may perform the removal processing on the workpiece W#1 placed on the stage 32#1. The processing head 12 may perform the removal processing on the workpiece W#2 placed on the stage 32#2. The processing head 13 may perform the additive manufacturing on the workpiece W#1 placed on the stage 32#1. The processing head 13 may perform the additive manufacturing on the workpiece W#2 placed on the stage 32#2. The measurement head 14 may measure the workpiece W#1 placed on the stage 32#1 (and furthermore, the stage 32#1). The measurement head 14 may measure the workpiece W#2 placed on the stage 32#2 (and furthermore, the stage 32#2).

The processing unit 1 may build a first build object that is integrated with the workpiece W#1 or that is separable from the workpiece W#1, by performing at least one of the removal processing and the additive manufacturing on the workpiece W#1 placed on the stage 32#1. The processing unit 1 may build a second build object that is integrated with the workpiece W#2 or that is separable from the workpiece W#2, by performing at least one of the removal processing and the additive manufacturing on the workpiece W#2 placed on the stage 32#2. In this case, the first build object and the second build object may be similar to each other. For example, the first build object and the second build object may be build objects that are similar to each other in at least one of a size and a shape. Note that "two build objects similar to each other" in the first example embodiment may include not only "two build objects that are partially different, but are similar as a whole", but also "two build objects that are completely the same as each other having no difference" and "two build objects that may be regarded as the same".

In a case where the first build object and the second build object may be build objects that are similar to each other in at least one of the size and the shape, the processing system SYSa may build the second build object based on a result of building the first build object. For example, the processing system SYSa may build the first build object by using at least one of the processing heads 12 and 13, may measure the first build object by using the measurement head 14, and may build the second build object by using at least one of the processing heads 12 and 13 based on a measurement result of the first build object by the measurement head 14. As an example, the control apparatus 4 that controls the processing system SYSa may calculate a difference between an actual shape of the first build object and an ideal shape of the first build object based on the measurement result of the first build object by the measurement head 14, may modify a building condition (the processing condition) of the second build object so as to build the second build object with the ideal shape based on the calculated difference, and may control at least one of the processing heads 12 and 13 so as to build the second build object by using the modified building condition.

The stage driving system 33 moves at least one of the plurality of stages 32, under the control of the control apparatus 4. For example, the stage driving system 33 may move at least one of the plurality of stages 32, for example, along at least one of the X axis, the Y axis, the Z axis, the θX direction, the θY direction, and the θZ direction, under the control of the control apparatus 4. The stage driving system 33 may be referred to as a moving apparatus or a driving apparatus.

The first example embodiment describes an example in which the stage driving system 33 moves each of the plurality of stages 32 (i.e., the stages 32#1 and 32#2) along the X axis direction. That is, described is an example in which the stage driving system 33 moves each of the plurality of stages 32 (i.e., the stages 32#1 and 32#2) along the X axis direction intersecting both the Z axis direction that is the traveling direction of the processing lights RL and AL and the Y axis direction that is a moving direction of each of the processing head 12, the processing head 1,3 and the measurement head 14.

In this instance, as illustrated in FIG. 1, the stage driving system 33 may include an X guide member 331X#1 and an X guide member 331X#2. Each of the X guide members 331X#1 and 331X#2 is a shaft member extending along the X axis direction. Each of the X guide members 331X#1 and 331X#2 is disposed on the surface plate 31 such that the X guide members 331X#1 and 331X#2 are apart along the Y axis direction. The stage 32#1 is attached to the X guide member 331X#1 such that the stage 32#1 is movable along the X guide member 331X#1. The stage 32#2 is attached to the X guide member 331X#2 such that the stage 32#2 is movable along the X guide member 331X#2. Therefore, in the example illustrated in FIG. 1, the two stages 32#1 and 32#2 are arranged to be apart along the Y axis direction.

The stage 32#1 moves along the X guide member 331X#1, by which the stage 32#1 moves along the X axis direction. Therefore, the X guide member 331X#1 may be considered to serve as a moving apparatus (driving apparatus) that is configured to move the stage 32#1.

The stage 32#2 moves along the X guide member 331X#2, by which the stage 32#2 moves along the X axis direction. Therefore, the X guide member 331X#2 may be considered to serve as a moving apparatus (driving apparatus) that is configured to move the stage 32#2.

As described above, the processing head 12, the processing head 13, and the measurement head 14 are disposed above the stages 32#1 and 32#2. Therefore, a space in which the head driving system 15 moves the processing head 12, the processing head 13, and the measurement head 14, and a space in which the stage driving system 33 moves the stages 32#1 and 32#2 may be considered to be apart along the Z axis direction (i.e., the traveling direction of the processing lights RL and AL).

When the stage driving system 33 moves the stage 32, a positional relationship between each of the processing head 12, the processing head 13, and the measurement head 14 and each of the stage 32 and the workpiece W, changes. Therefore, the stage driving system 33 may be considered to serve as a position change apparatus that is configured to change the positional relationship between each of the processing head 12, the processing head 13, and the measurement head 14 and each of the stage 32 and the workpiece W. Furthermore, when the stage driving system 33 moves the stage 32, each of the stage 32 and the workpiece W moves relative to each of the processing area RSA in which the processing head 12 performs the removal processing, the processing area ASA in which the processing head 13 performs the additive manufacturing, and the measurement area MSA in which the measurement head 14 performs the measurement.

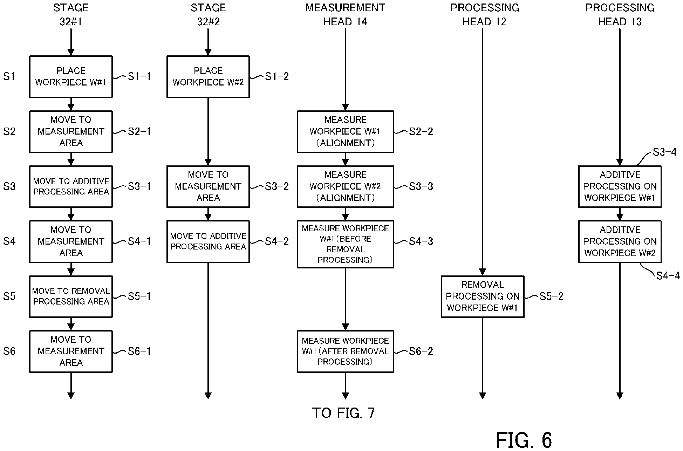

Especially in the first example embodiment, as will be described in detail with reference to FIG. 6 to FIG. 14, the head driving system 15 and the stage driving system 33 change the positional relationship between each of the processing head 12, the processing head 13, and the measurement head 14 and each of the stage 32 and the workpiece W such that each of the stages 32#1 and 32#2 relatively moves among the processing area RSA, the processing area ASA, and the measurement area MSA.

The plurality of position detection apparatuses 34 are configured to measure positions of the plurality of stages 32, respectively. That is, the plurality of position detection apparatuses 34 are apparatuses that are configured to acquire information related to the positions of the plurality of stages 32, respectively. In the example illustrated in FIG. 1, since the stage unit 3 includes the two stages 32#1 and 32#2 as described above, the stage unit 3 may include two position detection apparatuses 34 (specifically, position detection apparatuses 34#1 and 34#2). The position detection apparatuses 34#1 and 34#2 are configured to measure the positions of the stages 32#1 and 32#2, respectively. The position detection apparatus 34 may include, for example, an interferometer (e.g., a laser interferometer). The position detection apparatus 34 may include, for example, an encoder (e.g., at least one of a linear encoder and a rotary encoder, as an example). In a case where the stage driving system 33 uses a stepping motor as a drive source, the position detection apparatus 34 may include, for example, a position detection apparatus of an open-loop control type. The position detection apparatus of the open-loop control type is a position detection apparatus that measures a position of the stage 32 by estimating a moving distance of the stage 32 from an integrated value of the number of pulses for driving the stepping motor.

The control apparatus 4 controls an operation of the processing system SYSa. For example, the control apparatus 4 may generate processing control information for processing the workpiece W, and may control the processing unit 1 and the stage unit 3 based on the processing control information such that the workpiece W is processed in accordance with the generated processing control information. That is, the control apparatus 4 may control the processing on the workpiece W. For example, the control apparatus 4 may generate measurement control information for measuring the measurement target object, and may control the processing unit 1 and the stage unit 3 based on the measurement control information such that the measurement target object is measured in accordance with the generated measurement control information. That is, the control apparatus 4 may control the measurement of the measurement target object.

The control apparatus 4 may include, for example, an arithmetic apparatus and a storage apparatus. The arithmetic apparatus may include, for example, at least one of a CPU (Central Processing Unit) and a GPU (Graphics Processing Unit). The control apparatus 4 serves as an apparatus for controlling the operation of the processing system SYSa by means of the arithmetic apparatus executing a computer program. The computer program is a computer program that allows the control apparatus 4 (e.g., the arithmetic apparatus) to perform (i.e., to execute) a below described operation that should be performed by the control apparatus 4. That is, this computer program is a computer program that allows the control apparatus 4 to function so as to make the processing system SYSa to perform the below described operation. The computer program executed by the arithmetic apparatus may be recorded in the storage apparatus (i.e., a recording medium) provided in the control apparatus 4, or may be recorded in any storage medium (e.g., a hard disk or a semiconductor memory) that is built in the control apparatus 4 or that is externally attachable to the control apparatus 4. Alternatively, the arithmetic apparatus may download the computer program to be executed, from an external apparatus of the control apparatus 4 through a network interface.

The control apparatus 4 may not be provided in the processing system SYSa. For example, the control apparatus 4 may be provided at the outside of the processing system SYSa as a server or the like. For example, the control apparatus 4 may be provided as a computer (e.g., a notebook computer) or the like that is connectable to the processing system SYSa. For example, the control apparatus 4 may be provided as a computer (e.g., a notebook computer) or the like that is installed near the processing system SYSa. In this instance, the control apparatus 4 and the processing SYSa may be connected through a wired and/or wireless network (or a data bus and/or a communication line). A network using a serial-bus-type interface represented by, for example, at least one of IEEE1394, RS-232x, RS-422, RS-423, RS-485 and USB, may be used as the wired network. A network using a parallel-bus-type interface may be used as the wired network. A network using an interface that is compatible to Ethernet (registered trademark) represented by at least one of 10BASE-T, 100BASE-TX and 1000BASE-T, may be used as the wired network. A network using an electrical wave may be used as the wireless network. A network that is compatible to IEEE802.1x (e.g., at least one of a wireless LAN and Bluetooth (registered trademark)) is an example of the network using the electrical wave. A network using an infrared ray may be used as the wireless network. A network using an optical communication may be used as the wireless network. In this instance, the control apparatus 4 and the processing system SYSa may be configured to transmit and receive various types of information through the network. Furthermore, the control apparatus 4 may be configured to transmit information such as a command and a control parameter, to the processing system SYSa through network. The processing system SYSa may include a reception apparatus that is configured to receive information such as the command and the control parameter, from the control apparatus 4 through the network. Alternatively, a first control apparatus that performs a part of processing performed by the control apparatus 4 may be disposed in the processing system SYSa, and a second control apparatus that performs another part of the processing performed by the control apparatus 4 may be disposed at the outside of the processing system SYSa.

In the control apparatus 4, the arithmetic apparatus executes the computer program, by which a computational model/calculation model that can be established by machine learning may be implemented. An example of the computational model that can be established by machine learning is a computational model including a neural network (so-called Artificial Intelligence (AI)). In this case, learning of the computational model may include learning of a parameter (e.g., at least one of weight and bias) of the neural network. The control apparatus 4 may control the operation of the processing system SYS by using the computational model. That is, an operation of controlling the operation of the processing system SYSa may include an operation of controlling the operation of the processing system SYSa by using the computational model. The control apparatus 4 may be implemented with the computational model that is already established by offline machine learning using teacher data. Furthermore, the computational model implemented in the control apparatus 4 may be updated by online machine learning on the control apparatus 4. Alternatively, the control apparatus 4 may control the operation of the processing system SYSa, by using a computational model that is implemented in an external apparatus of the control apparatus 4 (i.e., an apparatus disposed at the outside of the processing system SYSa), in addition to or instead of the computational model implemented in the control apparatus 4.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic medium such as a magnetic tape, an optical-magnetic disc, a semiconductor memory such as a USB memory, and another arbitrary medium that is configured to store the program, may be used as the recording medium that records therein the computer program executed by the arithmetic apparatus. The recording medium may include a device that is configured to record the computer program (e.g., a device for a universal use or a device for an exclusive use in which the computer program is embedded to be executable in a form of at least one of software, firmware and the like). Furthermore, various processing or functions included in the computer program may be realized by a logical processing block that is realized in the control apparatus 4 by means of the control apparatus 4 (i.e., a computer) executing the computer program, or may be realized by hardware such as a predetermined gate array (a FPGA (Field Programmable Gate Array), a ASIC(Application Specific Integrated Cricuit)) of the control apparatus 4, or may be realized in a form in which the logical processing block and a partial hardware module that realizes an partial element of the hardware are mixed/combined.

### (1-2) Flow of Processing Operation by Processing System SYSa

Next, with reference to FIG. 6 to FIG. 8, a flow of a processing operation by the processing system SYSa will be described. Each of FIG. 6 to FIG. 8 is a flowchart illustrating the flow of the processing operation by the processing systematic SYSa. In the following description, the flow of the processing operation for building a first build object BO1 on the stage 32#1 (i.e., on the workpiece W#1) and a second build object BO2 on the stage 32#2 (i.e., on the workpiece W#2) will be described.

As illustrated in FIG. 6, first, the workpiece W#1 is placed on the stage 32#1 (step S1-1). Furthermore, the workpiece W#2 is placed on the stage 32#2 (step S1-2).

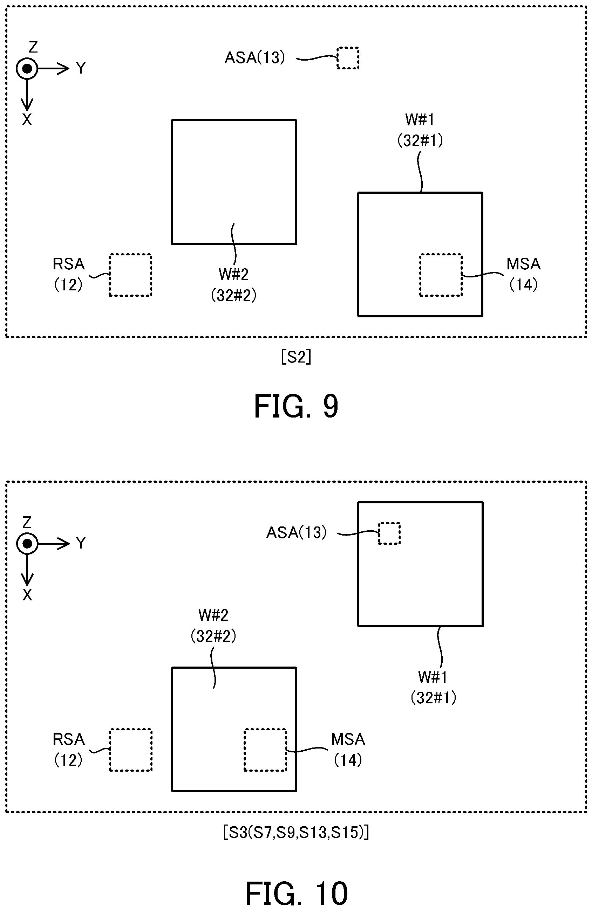

Thereafter, the stage 32#1 moves to a measurement area in which the measurement head 14 performs the measurement (step S2-1). Specifically, as described above, the measurement head 14 measures a part of the measurement target object that overlaps the measurement area MSA, by irradiating the measurement area MSA with the measurement optical ML. Therefore, in the step S2-1, at least one of the stage 32#1 and the measurement head 14 moves such that at least a part of the stage 32#1 overlaps the measurement area MSA. In other words, at least one of the stages 32#1 and the measurement head 14 moves such that at least a part of the workpiece W#1 overlaps the measurement area MSA. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is a positional relationship illustrated in FIG. 9.

Thereafter, the measurement head 14 measures the workpiece W#1 placed on the stage 32#1 (step S2-2). A measurement result of the workpiece W#1 by the measurement head 14 is outputted to the control apparatus 4. The control apparatus 4 may identify a position of the workpiece W#1 on the stage 32#1, based on the measurement result of the workpiece W#1 by the measurement head 14. The control apparatus 4 may identify a shape of the workpiece W#1 placed on the stage 32#1, based on the measurement result of the workpiece W#1 by the measurement head 14. Consequently, in a later step, the control apparatus 4 is capable of controlling each of the processing heads 12 and 13 to process the workpiece W#1 of the identified shape that is placed on the identified position.

Thereafter, the stage 32#1 moves to an additive manufacturing area in which the processing head 13 performs the additive manufacturing (step S3-1). Specifically, as described above, the processing head 13 performs the additive manufacturing on a part of the workpiece W#1 that overlaps the processing area ASA, by irradiating the processing area ASA with the processing light AL. Therefore, in the step S3-1, at least one of the stage 32#1 and the processing head 13 moves such that at least a part of the stage 32#1 overlaps the processing area ASA. In other words, at least one of the stage 32#1 and the processing head 13 moves such that at least a part of the workpiece W#1 overlaps the processing area ASA. Furthermore, before, after, or in parallel with the relative movement of the stage 32#1, the stage 32#2 relatively moves to a measurement area in which the measurement head 14 performs the measurement (step S3-2). Specifically, at least one of the stage 32#2 and the measurement head 14 moves such that at least a part of the stage 32#2 overlaps the measurement area MSA. In other words, at least one of the stage 32#2 and the measurement head 14 moves such that at least a part of the workpiece W#2 overlaps the measurement area MSA. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is a positional relationship illustrated in FIG. 10.

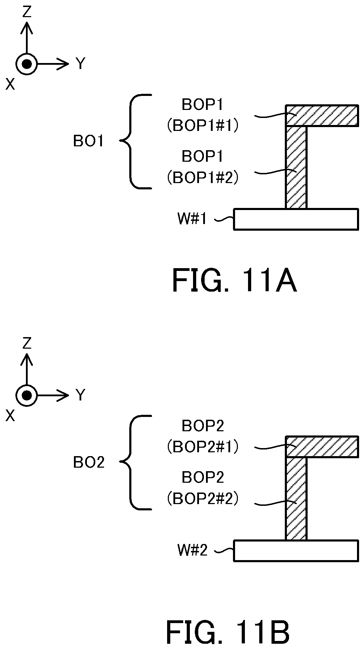

Thereafter, the processing head 13 performs the additive manufacturing on the workpiece W#1 placed on the stage 32#1 (step S3-4). Specifically, the processing head 13 performs the additive manufacturing on the workpiece W#1 so as to build (i.e., additively build) at least a part of the first build object BO1 to be built on the workpiece. In the first example embodiment, as illustrated in FIG. 11A, an example in which the first build object BO1 is divided into a plurality of build parts BOP1 and the processing head 13 builds the plurality of build parts BOP1 in order, will be described. In this instance, in the step S3-4, the processing head 13 builds a build part BOP1#1 that is a part of the first build object BO1.

Immediately after the stage 32#1 moves to the additive manufacturing area, the processing head 13 may start the additive manufacturing on the workpiece W#1. The processing head 13 may start the additive manufacturing on the workpiece W#1, after a lapse of a certain period of time after the stage 32#1 moves to the additive manufacturing area.

Furthermore, the measurement head 14 measures the workpiece W#2 placed on the stage 32#2 (step S3-3). In the first example embodiment, at least a part of the additive manufacturing on the workpiece W#1 using the processing head 13 described above may be performed in parallel with at least a part of the measurement of the workpiece W#2 using the measurement head 14. A measurement result of the workpiece W#2 by the measurement head 14 is outputted to the control apparatus 4. The control apparatus 4 may identify a position of the workpiece W#2 on the stage 32#2, based on the measurement result of the workpiece W#2 by the measurement head 14. The control apparatus 4 may identify a shape of the workpiece W#2 placed on the stage 32#2, based on the measurement result of the workpiece W#2 by the measurement head 14. Consequently, in a later step, the control apparatus 4 is capable of controlling each of the processing heads 12 and 13 to process the workpiece W#2 of the identified shape that is placed on the identified position.

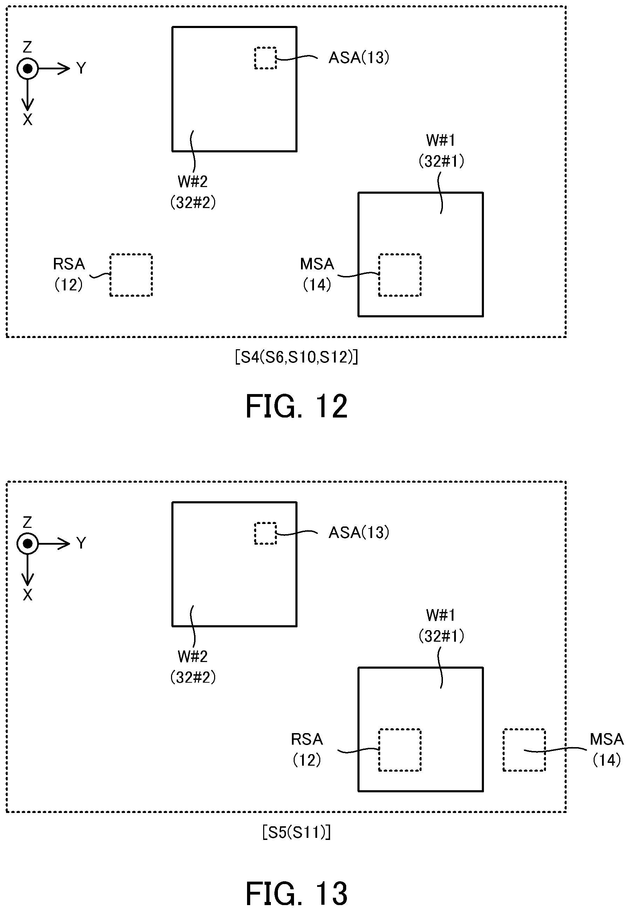

After the processing head 13 completes the building of the build part BOP1#1, the stage 32#1 relatively moves to a measurement area in which the measurement head 14 performs the measurement (step S4-1). The operation in the step S4-1 may be the same as the operation in the step S2-1. Before, after, or in parallel with the relative movement of the stage 32#1, the stage 32#2 relatively moves to an additive manufacturing area in which the processing head 13 performs the additive manufacturing (step S4-2). Specifically, at least one of the stage 32#2 and the processing head 13 moves such that at least a part of the stage 32#2 overlaps the processing area ASA. In other words, at least one of the stage 32#2 and the processing head 13 moves such that at least a part of the workpiece W#2 overlaps the processing area ASA. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is a positional relationship illustrated in FIG. 12.

Thereafter, the measurement head 14 measures the workpiece W#1 placed on the stage 32#1 (i.e., the workpiece W#1 on which the additive manufacturing is performed) (step S4-3). Measuring the workpiece W#1 on which the additive manufacturing is performed, may include measuring the build object built on the workpiece W#1 by the additive manufacturing (in this case, the build part BOP1#1). A measurement result of the workpiece W#1 by the measurement head 14 is outputted to the control apparatus 4. The control apparatus 4 may identify a position of the build object on the workpiece W#1, based on the measurement result of the workpiece W#1 by the measurement head 14. The control apparatus 4 may identify a shape of the build object on the workpiece W#1, based on the measurement result of the workpiece W#1 by the measurement head 14. Consequently, in a later step, the control apparatus 4 is capable of controlling the processing head 12 so as to perform the removal processing on the build object of the identified shape that is built at the identified position. For example, the control apparatus 4 may control the processing head 12 such that the shape of the build object becomes a design shape by the removal processing in a case where the shape of the build object built by the additive manufacturing is different from the design shape. For example, the control apparatus 4 may control the processing head 12 such that unevenness on the surface of the build object is reduced by the removal processing.

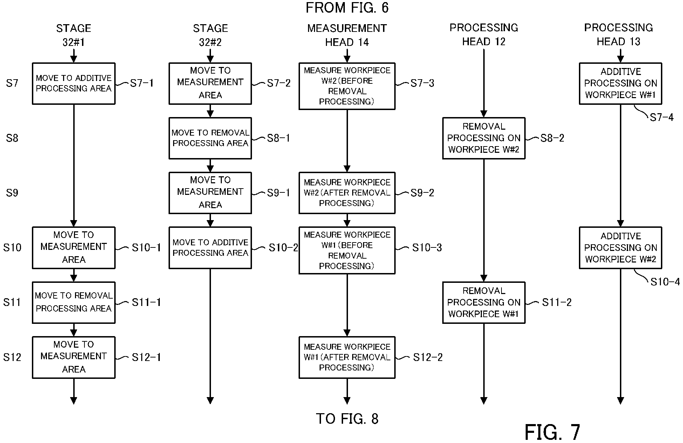

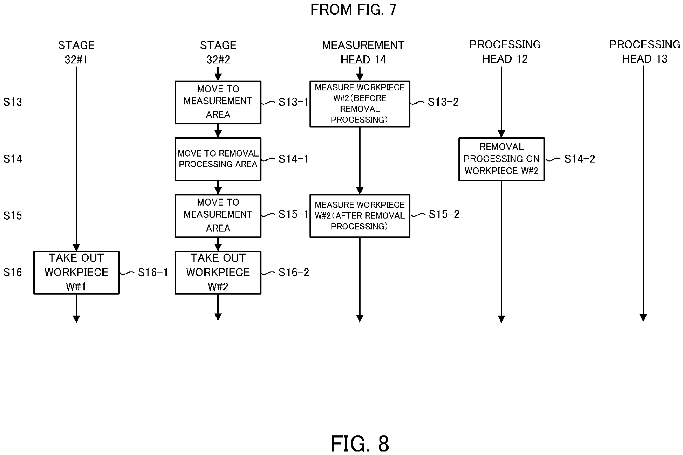

Since the build object is built on the workpiece W#1 under the control of the control apparatus 4, information related to the position and the shape of the build object built on the workpiece W#1 is information known to the control apparatus 4. Therefore, the processing system SYSa may not necessarily perform the operation in the step S4-3 (furthermore, the step S4-1). Below described operations of measuring the workpiece W on which the additive manufacturing is performed (specifically, an operation in a step S7-3 in FIG. 7, an operation in a step S 10-3 in FIG. 7 and an operation in a step S 13-2 in FIG. 8) also may not always be performed.

Furthermore, the processing head 13 performs the additive manufacturing on the workpiece W#2 placed on the stage 32#2 (step S4-4). Specifically, the processing head 13 performs the additive manufacturing on the workpiece W#2 so as to build (i.e., additively build) at least a part of the second build object BO2 to be built on the workpiece. In the first example embodiment, as illustrated in FIG. 11B, an example in which the second build object BO2 is divided into a plurality of build parts BOP2 and the processing head 13 builds the plurality of build parts BOP2 in order, will be described. In this instance, in the step S4-4, the processing head 13 builds a build part BOP2#1 that is a part of the second build object BO2. In the first example embodiment, at least a part of the additive manufacturing on the workpiece W#2 using the processing head 13 may be performed in parallel with at least a part of the measurement of the workpiece W#1 using the measurement head 14.

After the measurement head 14 completes the measurement of the workpiece W#1 in the step S4-3, the stage 32#1 relatively moves to a removal processing area in which the processing head 12 performs the removal processing (step S5-1). Specifically, as described above, the processing head 12 performs the removal processing on a part of the workpiece W#1 that overlaps the processing area RSA, by irradiating the processing area RSA with the processing light RL. Therefore, in the step S5-1, at least one of the stage 32#1 and the processing head 12 moves such that at least a part of the stage 32#1 overlaps the processing area RSA. In other words, at least one of the stage 32#1 and the processing head 12 moves such that at least a part of the workpiece W#1 overlaps the processing area RSA. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is a positional relationship illustrated in FIG. 13. Note that the removal processing area that is a destination of the stage 32#1 moving such that the processing head 12 performs the removal processing on the workpiece W#1, may be different from the measurement area that is a destination of the stage 32#1 moving such that the measurement head 14 measures the workpiece W#1, or at least a part of them may overlap each other.

Thereafter, the processing head 12 performs the removal processing on the build object built on the workpiece W#1 (in this case, the build part BOP1#1) (step S5-2). Specifically, the processing head 12 performs the removal processing on a removal processing target portion on which the removal processing is to be performed, of the build object built on the workpiece W#1. That is, the processing head 12 performs the removal processing on the removal processing target portion, by irradiating the removal processing target portion with the processing light RL. Note that at least a part of the removal processing on the workpiece W#1 using the processing head 12 may be performed in parallel with at least a part of the additive manufacturing on the workpiece W#2 using the processing head 13.

After the processing head 12 completes the removal processing, the stage 32#1 relatively moves to a measurement area in which the measurement head 14 performs the measurement (step S6-1). The operation in the step S6-1 may be the same as the operation in the step S2-1. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 12.

Thereafter, the measurement head 14 measures the workpiece W#1 placed on the stage 32#1 (i.e., the workpiece W#1 on which the removal processing is performed) (step S6-2). Measuring the workpiece W#1 after the removal processing is performed, may include measuring the build object on which the removal processing is performed (in this case, the build part BOP 1#1). A measurement result of the workpiece W#1 by the measurement head 14 is outputted to the control apparatus 4. The control apparatus 4 may determine whether or not the removal processing is properly performed, based on the measurement result of the workpiece W#1 by the measurement head 14. For example, the control apparatus 4 may determine that the removal processing is properly performed, when the shape of the build object on which the removal processing is performed, is different from the design shape. When it is determined that the removal processing is not properly performed, the processing head 12 may perform the removal processing again on the build object built on the workpiece W#1. Note that at least a part of the measurement of the workpiece W#1 using the measurement head 14 may be performed in parallel with at least a part of the additive manufacturing on the workpiece W#2 using the processing head 13.

The processing system SYSa, however, may not measure the workpiece W#1 after the removal processing is performed. That is, the processing system SYSa may not necessarily perform the operation in the step S6-2 (furthermore, the step S6-1). Below described operations of measuring the workpiece W on which the removal processing is performed (specifically, an operation in a step S9-2 in FIG. 7, an operation in a step S12-2 in FIG. 7, and an operation in a step S15-2 in FIG. 8) also may not always be performed.

After the measurement head 14 completes the measurement of the build part BOP 1#1 and the processing head 13 completes the building of the build part BOP2#1, as illustrated in FIG. 7, the stage 32#1 moves to an additive manufacturing area in which the processing head 13 performs the additive manufacturing (S7-1). The operation in the step S7-1 may be the same as the operation in the step S3-1. Furthermore, before, after, and in parallel with the relative movement of the stage 32#1, the stage 32#2 moves to a measurement area in which the measurement head 14 performs the measurement (step S7-2). The operation in the step S7-2 may be the same as the operation in the step S3-2. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 10.

Thereafter, the processing head 13 performs the additive manufacturing on the workpiece W#1 placed on the stage 32#1 (step S7-4). Specifically, the processing head 13 builds a build part BOP1#2 that is a part of the first build object BO1.

Furthermore, the measurement head 14 measures the workpiece W#2 placed on the stage 32#2 (i.e., the workpiece W#2 on which the additive manufacturing is performed) (step S7-3). The operation in the step S7-3 may be the same as the operation in the step S4-3 in which the measurement target object is the workpiece W#1, except that the measurement target object is the workpiece W#2.

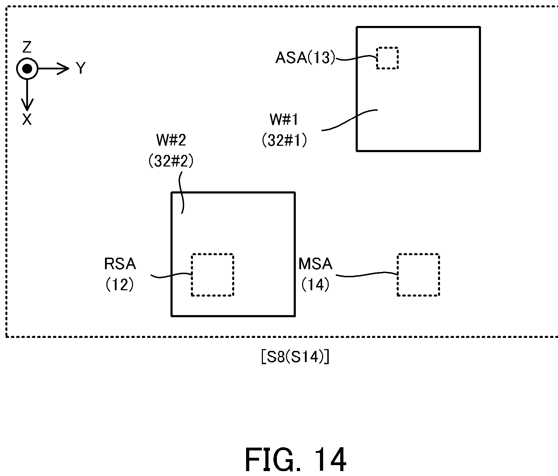

After the measurement head 14 completes the measurement of the workpiece W#2 in the step S7-3, the stage 32#2 moves to a removal processing area in which the processing head 12 performs the removal processing (step S8-1). Specifically, at least one of the stage 32#2 and the processing head 12 moves such that at least a part of the stage 32#2 overlaps the processing area RSA. In other words, at least one of the stages 32#2 and the processing head 12 moves such that at least a part of the workpiece W#2 overlaps the processing area RSA. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is a positional relationship illustrated in FIG. 14. Note that the removal processing area that is a destination of the stage 32#2 moving such that the processing head 12 performs the removal processing on the workpiece W#2, may be different from the measurement area that is a destination of the stage 32#2 moving such that the measurement head 14 measures the workpiece W#2, or at least a part of them may overlap each other.

Thereafter, the processing head 12 performs the removal processing on the build object built on the workpiece W#2 (in this case, the build part BOP2#1) (step S8-2). Specifically, the processing head 12 performs the removal processing on a removal processing target portion on which the removal processing is to be performed, of the build object formed on the workpiece W#2. That is, the processing head 12 performs the removal processing on the removal processing target portion, by irradiating the removal processing target portion with the processing light RL. Note that at least a part of the removal processing on the workpiece W#2 using the processing head 12, may be performed in parallel with at least a part of the additive manufacturing on the workpiece W#1 using the processing head 13.

After the processing head 12 completes the removal processing, the stage 32#2 moves to a measurement area in which the measurement head 14 performs the measurement (step S9-1). The operation in the step S9-1 may be the same as the operation in the step S3-2. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 10.

In a case where the processing head 13 has completed the additive manufacturing when the processing head 12 completes the removal processing and the stage 32#2 moves to the measurement area, the stage 32#1 on which the workpiece W#1 subjected to the additive manufacturing by the processing head 13 is placed, may move near to the measurement area. For example, the stage 32#1 may move to be adjacent to the stage 32#2 located in the measurement area. In this instance, it is possible to reduce a time from the completion of the measurement of the workpiece W#2 placed on the stage 32#2 to the start of the measurement of the workpiece W#1 placed on the stage 32#1.

Thereafter, the measurement head 14 measures the workpiece W#2 placed on the stage 32#2 (i.e., the workpiece W#2 on which the removal processing is performed) (step S9-2). The operation in the step S9-2 may be the same as operation in the step S6-2 in which the measurement target object is the workpiece W#1, except that the measurement target object is the workpiece W#2. Note that at least a part of the measurement of the workpiece W#2 using the measurement head 14 may be performed in parallel with at least a part of the additive manufacturing on the workpiece W#1 using the processing head 13.

After the measurement head 14 completes the measurement of the build part BOP2#1 and the processing head 13 completes the building of the build part BOP1#2, the stage 32#1 relatively moves to a measurement area in which the measurement head 14 performs the measurement (step S10-1). The operation in the step S10-1 may be the same as the operation in the step S4-1. Furthermore, before, after, or in parallel with the relative movement of the stage 32#1, the stage 32#2 relatively moves to an additive manufacturing area in which the processing head 13 performs the additive manufacturing (step S10-2). The operation in the step S10-2 may be the same as the operation in the step S4-2. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 12.

Thereafter, the measurement head 14 measures the workpiece W#1 placed on the stage 32#1 (i.e., the workpiece W#1 on which the additive manufacturing is performed) (step S10-3). The operation in the step S10-3 may be the same as the operation in the step S4-3.

Furthermore, the processing head 13 performs the additive manufacturing on the workpiece W#2 placed on the stage 32#2 (step S10-4). Specifically, the processing head 13 builds a build part BOP2#2 that is a part of the second build object BO2. Note that at least a part of the additive manufacturing on the workpiece W#2 using the processing head 13 may be performed in parallel with at least a part of the measurement of the workpiece W#1 using the measurement head 14.

After the measurement head 14 completes the measurement of the workpiece W#1 in the step S10-3, the stage 32#1 relatively moves to a removal processing area in which the processing head 12 performs the removal processing (step S11-1). The operation in the step S11-1 may be the same as the operation in the step S5-1. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 13.

Thereafter, the processing head 12 performs the removal processing on the build object built on the workpiece W#1 (in this case, the build part BOP1#2) (step S11-2). The operation in the step S11-2 may be the same as the operation in the step S5-2. Furthermore, at least a part of the additive manufacturing on the workpiece W#2 using the processing head 13 may be performed in parallel with at least a part of the removal processing on the workpiece W#1 using the processing head 12.

After the processing head 12 completes the removal processing, the stage 32#1 relatively moves to a measurement area in which the measurement head 14 performs the measurement (step S12-1). The operation in the step S12-1 may be the same as the operation in the step S6-1. Consequently, the positional relationship among the processing head 12 (the processing area RSA), the processing head 13 (the processing area ASA), the measurement head 14 (the measurement area MSA), the stage 32#1 (the workpiece W#1), and the stage 32#2 (the workpiece W#2) is the positional relationship illustrated in FIG. 12.

Thereafter, the measurement head 14 measures the workpiece W#1 placed on the stage 32#1 (i.e., the workpiece W#1 on which the removal processing is performed) (step S12-2). The operation in the step S12-2 may be the same as the operation in the step S6-2. Furthermore, at least a part of the additive manufacturing on the workpiece W#2 using the processing head 13 may be performed in parallel with at least a part of the measurement of the workpiece W#1 using the measurement head 14.

After the measurement head 14 completes the measurement of the build part BOP 1#2 and the processing head 13 completes the building of the build part BOP2#2, as illustrated in FIG. 8, the stage 32#2 relatively moves to a measurement area in which the measurement head 14 performs the measurement (step S13-1). The operation in the step S13-1 may be the same as the operation in the step S7-2. Consequently, the positional relationship among the processing head 12 (the processing area RSA), the processing head 13 (the processing area ASA), the measurement head 14 (the measurement area MSA), the stage 32#1 (the workpiece W#1) and the stage 32#2 (the workpiece W#2) is the positional relationship illustrated in FIG. 10. Thereafter, the measurement head 14 measures the workpiece W#2 placed on the stage 32#2 (i.e., the workpiece W#2 on which the additive manufacturing is performed) (step S13-2). The operation in the step S13-2 may be the same as the operation in the step S7-3.

After the measurement head 14 completes the measurement of the workpiece W#2 in the step S13-2, the stage 32#2 relatively moves to a removal processing area in which the processing head 12 performs the removal processing (step S14-1). The operation in the step S14-1 may be the same as the operation in the step S8-1. Consequently, the positional relationship among the processing head 12 (the processing area RSA), the processing head 13 (the processing area ASA), the measurement head 14 (the measurement area MSA), the stage 32#1 (the workpiece W#1) and the stage 32#2 (the workpiece W#2) is the positional relationship illustrated in FIG. 14.

Thereafter, the processing head 12 performs the removal processing on the build object built on the workpiece W#2 (in this case, the build part BOP2#2) (step S14-2). The operation in the step S14-2 may be the same as the operation in the step S8-2.

After the processing head 12 completes the removal processing, the stage 32#2 relatively moves to a measurement area in which the measurement head 14 performs the measurement (step S15-1). The operation in the step S15-1 may be the same as the operation in the step S9-1. Consequently, the positional relationship among the processing head 12 (the processing area RSA), the processing head 13 (the processing area ASA), the measurement head 14 (the measurement area MSA), the stage 32#1 (the workpiece W#1) and the stage 32#2 (the workpiece W#2) is the positional relationship illustrated in FIG. 10.

Thereafter, the measurement head 14 measures the workpiece W#2 placed on the stage 32#2 (i.e., the workpiece W#2 on which the removal processing is performed) (step S15-2). The operation in the step S15-2 may be the same as the operation in the step S9-2.

The operations described above are repeated until the building of the first build object BO1 and the second build object BO2 is completed. After the building of the first build object BO1 is completed, the workpiece W#1 (specifically, the workpiece W#1 on which the first build object BO1 is built) may be taken out from the stage 32#1 (step S16-1). After the building of the second build object BO2 is completed, the workpiece W#2 (specifically, the workpiece W#2 on which the second build object BO2 is built) may be taken out from the stage 32#2 (step S16-2).

In a case where it takes a short time to perform the step S7-4, the stage 32#1 may be located in the first space SP1, for example, on a side of the stage 32#2, while measuring the workpiece W#2 placed on the stage 32#2 (step S9-2).

### (1-3) Technical Effect of Processing System SYSa

As described above, in the first example embodiment, the processing system SYSa includes the stage 32 that is relatively movable between the removal processing area in which the processing head 12 performs the removal processing (e.g., the processing area RSA) and the additive manufacturing area in which the processing head 13 performs the additive manufacturing (e.g., the processing area ASA). For this reason, the processing system SYSa is capable of performing both the additive manufacturing and the removal processing on the workpiece W, without taking out the workpiece W from the stage 32. Therefore, throughput of the processing system SYSa is improved, as compared with a processing system in a comparative example that separately includes a stage on which the workpiece W to be subjected to the additive manufacturing is placed, and a stage on which the workpiece W to be subjected to the removal processing is placed.

Furthermore, the processing system SYSa includes the stage 32 that is relatively movable between the measurement area in which the measurement head 14 performs the measurement (e.g., the measurement area MSA) and at least one of the removal processing area in which the processing head 12 performs the removal processing and the additive manufacturing area in which the processing head 13 performs the additive manufacturing. For this reason, the processing system SYSa is capable of performing both the processing and the measurement on the workpiece W, without taking out the workpiece W from the stage 32. Therefore, the throughput of the processing system SYSa is improved, as compared with a processing system in a comparative example that separately includes a stage on which the workpiece W to be processed is placed, and a stage on which the workpiece W to be measured is placed.

Furthermore, the processing system SYSa includes a plurality of stages 32. For this reason, the processing system SYSa is capable of performing at least two of the removal processing, the additive manufacturing, and the measurement in parallel. Therefore, the throughput of the processing system SYSa is improved, as compared with a processing system in a comparative example that is not capable of performing at least two of the removal processing, the additive manufacturing, and the measurement in parallel.

### (1-4) Modified Examples of Processing System SYSa

Next, the processing system SYSa in a modified example will be described.

### (1-4-1) First Modified Example

In the above description, the processing system SYSa divides the first build object BO1 into a plurality of build parts BOP1 and builds the plurality of build parts BOP1 in order. That is, the processing SYSa performs the removal processing on the build part BOP1 at each time when the build part BOP1 is built by the additive manufacturing. The processing system SYSa, however, may build the first build object BO1 without dividing the first build object BO1 into the plurality of build parts BOP1. That is, the processing system SYSa may build the first build obj ect BO1 and then may perform the removal processing on the first build obj ect BO1. Similarly, even in the second build object BO2, the processing system SYSa may build the second build object BO2 and then may perform the removal processing on the second build object BO2.

Depending on a shape of the first build object BO1, however, there is a possibility that the processing head 12 is not allowed to irradiate a certain removal processing target portion of the first build object BO1 with the processing light RL, after building the first build object BO1. In this instance, the processing system SYSa may divide the first build object BO1 into a plurality of build parts BOP1 and may build the plurality of build parts BOP1 in order. Specifically, in a case where the build part BOP1#2 that constitutes the first build part BO1 blocks the irradiation with the processing light RL to the removal processing target portion of the build part BOP1#1 that constitutes the first build part BO1, the processing system SYSa may perform the removal processing on the removal processing target portion of the build part BOP1#1, before building the build part BOP1#2. In a case where a size of the build part BOP1#2 is a size that causes the blocking of the irradiation with the processing light RL to the removal processing target portion of the build part BOP1#1, the processing system SYSa may perform the removal processing on the removal processing target portion of the build part BOP 1#1, before building the build part BOP1#2. In a case where a shape of the build part BOP1#2 is a shape that causes the blocking of the irradiation with the processing light RL to the removal processing target portion of the build part BOP1#1, the processing system SYSa may perform the removal processing on the removal processing target portion of the build part BOP1#1, before building the build part BOP1#2.

Similarly, even in the second build object BO2, in a case where the build part BOP1#2 that constitutes the second build part BO2 blocks the irradiation with the processing light RL to the removal processing target portion of the build part BOP2#1 that constitutes the first build part BO2, the processing system SYSa may perform the removal processing on the removal processing target portion of the build part BOP2#1, before building the build part BOP2#2. In a case where a size of the build part BOP2#2 is a size that causes the blocking of the irradiation with the processing light RL to the removal processing target portion of the build part BOP2#1, the processing system SYSa may perform the removal processing on the removal processing target portion of the build part BOP2#1, before building the build part BOP2#2. In a case where a shape of the build part BOP2#2 is a shape that causes the blocking of the irradiation with the processing light RL to the removal processing target portion of the build part BOP2#1, the processing system SYSa may perform the removal processing on the removal processing target portion of the build part BOP2#1, before building the build part BOP2#2.

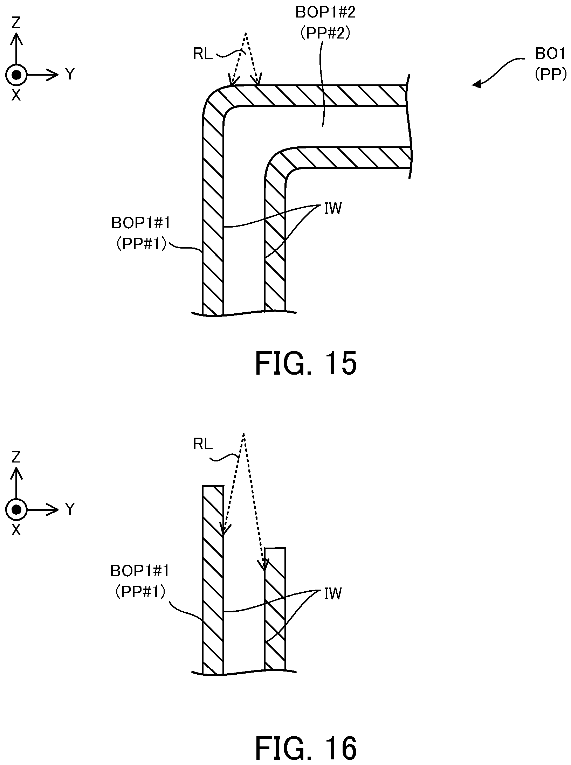

An example of the first build object BO1 including the build part BOP1#2 that blocks the irradiation with the processing light RL to the removal processing target portion of the build part BOP1#1 is a curved tube/pipe PP illustrated in FIG. 15. As illustrated in FIG. 15, the tube PP includes a tube part PP#1 extending along one direction (the Z axis direction in the example illustrated in FIG. 15), and a tube part PP#2 extending along another direction (the Y axis direction in the example illustrated in FIG. 15) that is connected to and intersects the one direction. In this instance, after the tube part PP#2 is built, the processing head 12 is not allowed to irradiate an inner wall IW of the tube part PP#1 with the processing light RL. This is because the irradiation with the processing light RL to the inner wall IW of the tube part PP#1 is blocked by the tube part PP#2. Therefore, in a case where the inner wall IW of the tube part PP#1 is the removal processing target portion, as illustrated in FIG. 16, the processing system SYSa may perform the removal processing on the inner wall IW of the tube part PP#1 that is an example of the build part BOP1#1, before building a tube part PP2 that is an example of the build part BOP1#2.

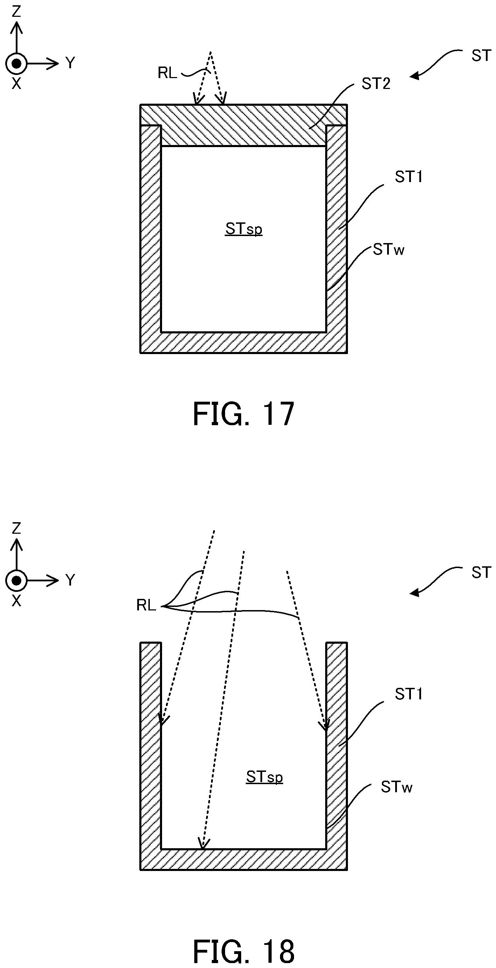

Another example of the first build object BO1 including the build part BOP1#2 that blocks the irradiation with the processing light RL to the removal processing target portion is a box member ST in which a space STsp is formed inside, as illustrated in FIG. 17. As illustrated in FIG. 17, the box member ST includes a first member ST1 partially surrounding the space STsp, and a second member ST2 partially closing the space STsp. In this instance, after the second member ST2 is built, the processing head 12 is not allowed to irradiate an inner wall STw of the first member ST1 with the processing light RL. This is because the irradiation with the processing light RL to the inner wall STw of the first member ST1 is blocked by the second member ST2. Therefore, in a case where the inner wall STw of the first member ST1 is the removal processing target portion, as illustrated in FIG. 18, the processing system SYSa may perform the removal processing on the inner wall STw of the first member ST1 that is an example of the build part BOP#1, before building the second member ST2 that is an example of the build part BOP1#2.

In this case, the control apparatus 4 may divide the first build object BO1 into a plurality of build parts BOP1 so as to satisfy such a condition that the irradiation with the processing light RL to the removal processing target portion of one build part BOP1 is not blocked by another build part, based on design information indicating the shape of the first build object BO1. In addition, the control apparatus 4 may generate processing control information for controlling the processing unit 1 and the stage unit 3 to build the plurality of build parts BOP1 in order. In this instance, the control apparatus 4 may control the processing unit 1 and the stage unit 3 to build the first build object BO1, based on the generated processing control information.

The processing control information may include, for example, information that specifies respective moving aspects of the processing head 12, the processing head 13, the measurement head 14, and the plurality of stages 32. In this instance, the control apparatus 4 may be considered to determine the moving aspects of the processing head 12, the processing head 13, the measurement head 14, and the plurality of stages 32, by generating the processing control information. The moving aspect may include at least one of a moving distance, a moving direction, a moving speed, and a moving timing (e.g., at least one of a moving start timing and a moving end timing). For example, since the removal processing is performed on the build part BOP1 at each time when the build part BOP1 is built by the additive manufacturing, the stage 32 moves from the additive manufacturing area to the removal processing area at each time when the build part BOP1 is built. For this reason, the processing control information may include information that specifies the moving timing when the stage 32 moves from the additive manufacturing area to the removal processing area. That is, the processing control information may include information that specifies the timing of changing the positional relationship among the processing head 12, the processing head 13, the measurement head 14, and the plurality of stages 32 such that the stage 32 moves from the additive manufacturing area to the removal processing area.

The processing control information may be generated in advance before the processing unit 1 starts the processing. The processing control information may be generated after the processing unit 1 starts the processing. As an example, the processing control information that specifies the timing of changing the positional relationship among the processing head 12, the processing head 13, the measurement head 14, and the plurality of stages 32 such that the stage 32 moves from the additive manufacturing area to the removal processing area, may be generated in a case where the build object built by the additive manufacturing (e.g., the build part BOP1) is measured by the measurement head 14, in a case where the difference between the actual shape of the first build object and the ideal shape of the first build object is calculated based on the measurement result of the first build object by the measurement head 14, and in a case where the calculated difference exceeds an allowable threshold.

Alternatively, the processing control information may be inputted to the control apparatus 4, in addition to or instead of the control apparatus 4 generating the processing control information. That is, the control apparatus 4 may serve as an input unit that inputs the processing control information to the processing system SYSa. In this instance, the control apparatus 4 may control the processing unit 1 and the stage unit 3 to build the first build object BO1 based on the inputted processing control information.

### (1-4-2) Second Modified Example

In the above description, the processing system SYSa includes one processing head 12 that performs the removal processing. The processing system SYSa, however, may include a plurality of processing heads 12. That is, the processing system SYSa may include a plurality of processing heads 12 that perform the removal processing in a plurality of different processing areas RSA by irradiating the plurality of different processing areas RSA with the processing light RL. Alternatively, the processing system SYSa may not include the processing head 12.

In the above description, the processing system SYSa includes one processing head 13 that performs the additive manufacturing. The processing system SYSa, however, may include a plurality of processing heads 13. That is, the processing system SYSa may include a plurality of processing heads 13 that perform the additive manufacturing in a plurality of different processing areas ASA by irradiating the plurality of different processing areas ASA with the processing light AL. Alternatively, the processing system SYSa may not include the processing head 13.

The processing system SYSa may include at least one processing head that performs a different processing from the removal processing and the additive manufacturing. An example of the different processing from the removal processing and the additive manufacturing, is at least one of the melt processing, the joint processing, and the cutting processing described above. Another example of the different processing from the removal processing and the additive manufacturing, is a machine processing for processing the workpiece W by using a tool.

In the above description, the processing system SYSa includes one measurement head 14 that performs the measurement. The processing system SYSa, however, may include a plurality of measurement heads 14. Alternatively, the processing system SYSa may not include the measurement head 14.

In the above description, the processing system SYSa includes two stages 32. The processing system SYSa, however, may include three or more stages 32. Alternatively, the processing system SYSa may include a single stage 32.

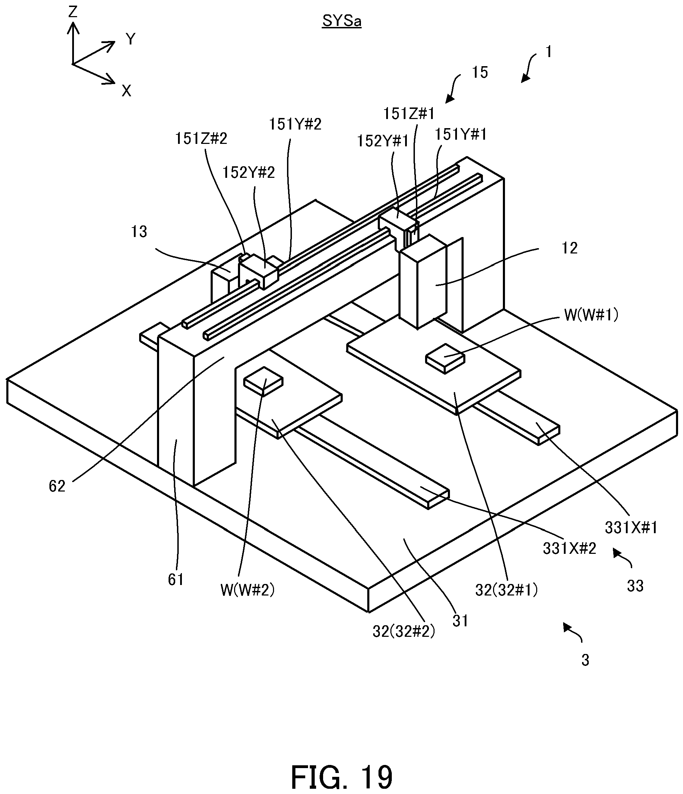

As an example, as illustrated in FIG. 19, the processing system SYSa may include one processing head 12 and one processing head 13, but may not include the measurement head 14. In this instance, the head driving system 15 may not include a driving apparatus for moving the measurement head 14. Specifically, the head driving system 15 may not include the Y block member 152Y#3 and the Z guide member 151Z#3 illustrated in FIG. 1.

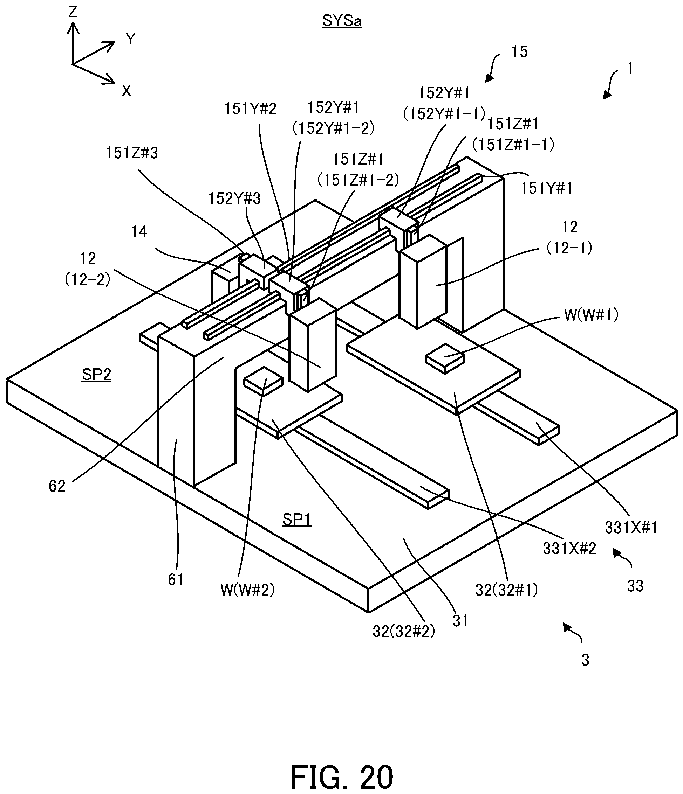

As another example, as illustrated in FIG. 20, the processing system SYSa may include two processing heads 12 (specifically, a processing head 12-1 and a processing head 12-2) and the measurement head 14, but may not include the processing head 13. In this instance, the head driving system 15 may include a Y block member 152Y#1-1 and a Z guide member 151Z#1-1, as driving apparatuses for moving the processing head 12-1. The head driving system 15 may include a Y block member 152Y#1-2 and a Z guide member 151Z#1-2, as driving apparatuses for moving the processing head 12-2. The head driving system 15 may not include a driving apparatus for moving the processing head 13 (specifically, the Y block member 152Y#2 and the Z guide member 151Z#2). In the example illustrated in FIG. 20, two processing heads 12 are disposed in the first space SP1 located on one side (e.g., +X side) of the support frame 6, and the measurement head 14 is disposed in the second space SP2 located on the other side (e.g., -X side) of the support frame 6.

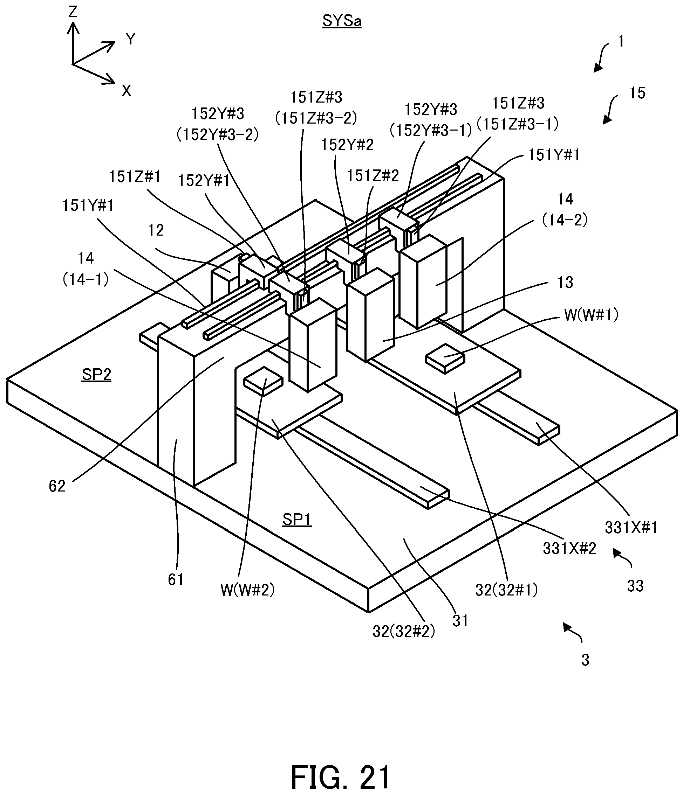

As another example, as illustrated in FIG. 21, the processing system SYSa may include one processing head 12, one processing head 13, and two measurement heads 14 (specifically, a measurement head 14-1 and a measurement head 14-2). In this instance, the head driving system 15 may include a Y-block member 152Y#3-1 and a Z guide member 151Z#3-1, as driving apparatuses for moving the measurement head 14-1. The head driving system 15 may include a Y block member 152Y#3-2 and a Z guide member 151Z#3-2, as driving apparatuses for moving the measurement head 14-2. In the example illustrated in FIG. 21, the processing head 13 and the two measurement heads 14 are disposed in the first space SP1 located on one side (e.g., +X side) of the support frame 6, and the processing head 12 is disposed in the second space SP2 located on the other side (e.g., -X side) of the support frame 6.

In the example illustrated in FIG. 21, the measurement heads 14-1 and 14-2 are disposed in the first space SP1 in which the processing head 13 is located. At least one of the measurement heads 14-1 and 14-2, however, may be disposed in the second space SP2 in which the processing head 12 is located. This arrangement has such an advantage that at least one of the measurement heads 14-1 and 14-2 is less likely to be contaminated by the build material M used in the additive manufacturing.

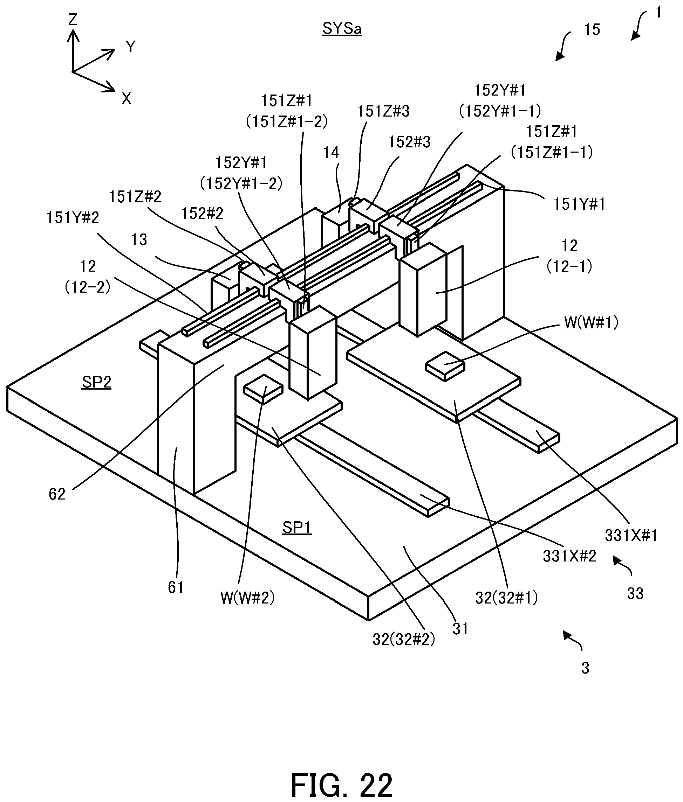

As another example, as illustrated in FIG. 22, the processing system SYSa may include two processing heads 12 (specifically, the processing head 12-1 and the processing head 12-2) and the measurement head 14. Furthermore, in the example illustrated in FIG. 22, the processing system SYSa also includes the processing head 13. In the example illustrated in FIG. 20, the two processing heads 12 are disposed in the first space SP1 located on one side (e.g., +X side) of the support frame 6, and the processing head 13 and the measurement head 14 are disposed in the second space SP2 located on the other side (e.g., -X side) of the support frame 6.

### (1-4-3) Third Modified Example

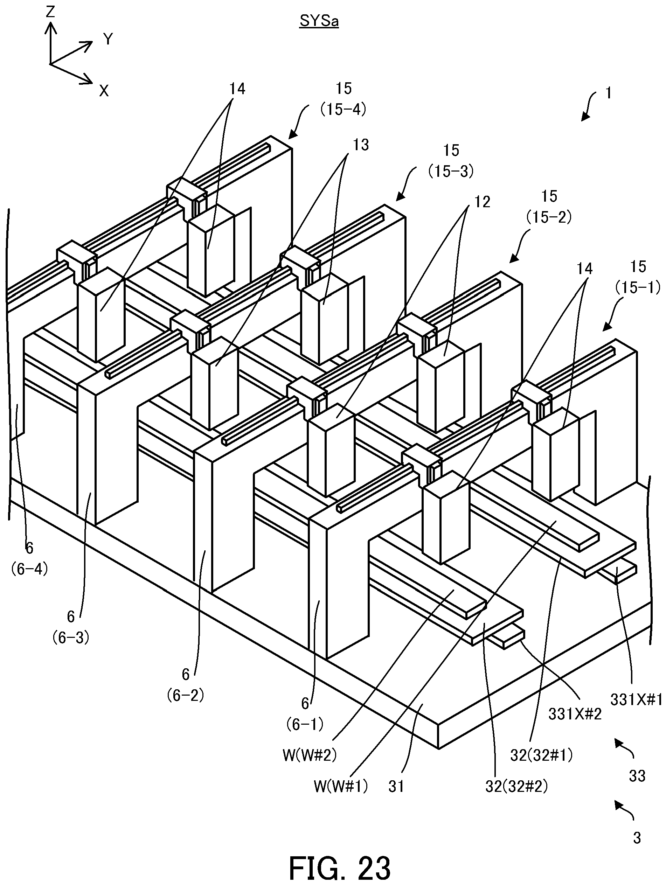

As illustrated in FIG. 23, the processing system SYSa may include a plurality of support frames 6. In the example illustrated in FIG. 23, the processing system SYSa includes four support frames 6 (specifically, support frames 6-1 to 6-4).

The plurality of support frames 6 may be aligned/arranged along the moving direction of the stage 32. In this instance, the processing system SYSa is allowed to efficiently process the workpiece W extending longitudinally (e.g., a long object). A direction of alignment/arrangement of the plurality of support frames 6, however, is not limited to the direction illustrated in FIG. 23.

At least one of the processing head 12, the processing head 13, and the measurement head 14 may be attached to each support frame 6. In the example illustrated in FIG. 23, two measurement heads 14 are attached to the support frame 6-1, two processing heads 12 are attached to the support frame 6-2, two processing heads 13 are attached to the support frame 6-3, and two measurement heads 14 are attached to the support frame 6-4. More specifically, two measurement heads 14 are attached to the support frame 6-1 through the head driving system 15 (15-1) for moving the two measurement heads 14, two processing heads 12 are attached to the support frame 6-2 through the head driving system 15 (15-2) for moving the two processing heads 12, two processing heads 13 are attached to the support frame 6-3 through the head driving system 15 (15-3) for moving the two processing heads 13, and two measurement heads 14 are attached to the support frame 6-4 through the head driving system 15 (15-4) for moving the two measurement heads 14.

Even in the third modified example, the processing head 12 and the measurement head 14 may be attached to at least one of the plurality of support frames 6. That is, the processing head 13 may not be attached to at least one of the plurality of support frames 6. The processing head 13 and the measurement head 14 may be attached to at least one of the plurality of support frames 6. That is, the processing head 12 may not be attached to at least one of the plurality of support frames 6. At least one of the plurality of support frames 6 may be attached only with the processing head 12. At least one of the plurality of support frames 6 may be attached only with the processing head 13. At least one of the plurality of support frames 6 may be attached only with the measurement head 14.

### (1-4-4) Fourth Modified Example

The processing head 13 that performs the additive manufacturing, may perform the removal processing on the workpiece W by irradiating the workpiece W with the processing light AL without supplying the build material M. That is, the processing head 13 may also serve as the processing head 12 that performs the removal processing. In this case, the processing system SYSa may include a plurality of processing heads 13 that are configured to perform the removal processing in addition to the additive manufacturing, instead of the processing head 12 that performs the removal processing and the processing head 13 that performs the additive manufacturing.

The processing head 13 that performs the additive manufacturing, may perform the melt processing on the workpiece W by irradiating the workpiece W with the processing light AL without supplying the build material M. The processing head 13 that performs the additive manufacturing, may perform the joint processing on the workpiece W by irradiating the workpiece W with the processing light AL without supplying the build material M. The processing head 13 3 that performs the additive manufacturing, may perform the cutting processing on the workpiece W by irradiating the workpiece W with the processing light AL without supplying the build material M.

As described above, the processing head 13 irradiates the workpiece W with the processing light AL emitted by a processing light source 11#A. Therefore, the processing head 13 may perform the additive manufacturing by irradiating the workpiece W with the processing light AL, and may perform the removal processing by irradiating the workpiece W with the processing light AL. Alternatively, the processing head 13 may perform the additive manufacturing by irradiating the workpiece W with the processing light AL emitted by the processing light source 11#A, and may perform the removal processing by irradiating the workpiece W with the processing light RL emitted by a processing light source 11#R.

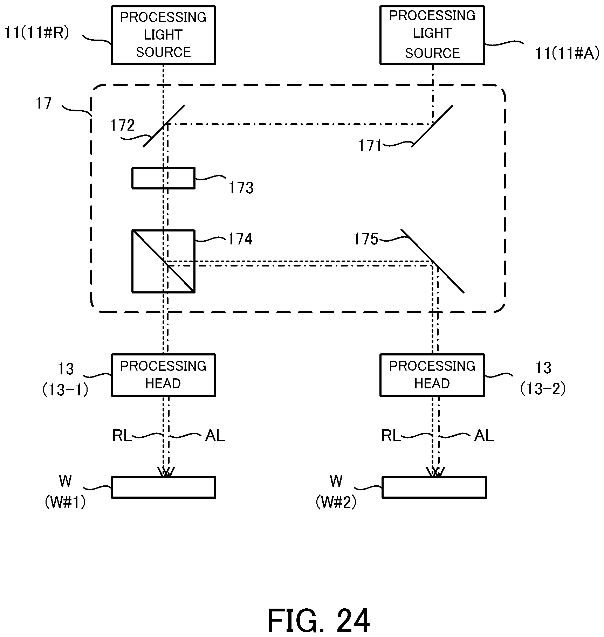

In a case where the processing head 13 irradiates the workpiece W with both the processing lights AL and RL, the processing unit 1 switches a state of the processing head 13 between an additive manufacturing state where the processing head 13 irradiates the workpiece W with the processing light AL and a removal processing state where the processing head 13 irradiates the workpiece W with the processing light RL. For example, as illustrated in FIG. 24, the processing unit 1 may include a switching optical system 17 for switching the state of the processing head 13 between the additive manufacturing state and the removal processing state. The switching optical system 17 includes a mirror 171, a mirror 172, a half-wave plate 173, a polarizing beam splitter 174, and a mirror 175.

The mirror 171 reflects the processing light AL emitted by the processing light source 11#A, toward the mirror 172. The mirror 172 is disposed at an intersection of an optical path of the processing light AL reflected by the mirror 171 and an optical path of the processing light RL emitted by the processing light source 11#R. The mirror 172 is movable. Specifically, the mirror 172 moves such that the mirror 172 is disposed in the optical path of the processing light AL, when the state of the processing head 13 is set to the additive manufacturing state. In this instance, the mirror 172 reflects the processing light AL reflected by the mirror 171, toward the half-wave plate 173. On the other hand, the mirror 172 moves such that the mirror 172 is not disposed in the optical path of the processing light RL, when the state of the processing head 13 is set to the removal processing state. In this instance, the processing light RL emitted by the processing light source 11#R enters the half-wave plate 173, without being reflected by the mirror 172. The half-wave plate 173 adjusts a ratio between the processing light AL or RL passing through the polarizing beam splitter 174 and the processing light AL or RL reflected by the polarizing beam splitter 174. Consequently, a part of the processing light AL or RL entering the polarizing beam splitter 174, is reflected by the polarizing beam splitter 174. On the other hand, another part of the processing light AL or RL entering the polarizing beam splitter 174, passes through the polarizing beam splitter 174. The processing light AL or RL reflected by the polarizing beam splitter 174, enters one processing head 13 (a processing head 13-2 in the example illustrated in FIG. 24) of the plurality of processing heads 13 through the mirror 175. The processing light AL or RL passing through the polarizing beam splitter 174, enters another processing head 13 (a processing head 13-1 in the example illustrated in FIG. 24) of the plurality of processing heads 13. Thus, in accordance with the movement of the mirror 172, the processing light AL or RL enters the processing head 13. Therefore, in a case where the processing light AL enters each processing head 13, each processing head 13 becomes into the additive manufacturing state. On the other hand, in a case where the processing light RL enters the processing head 13, the processing head 13 becomes into the removal processing state.

At least one of the processing heads 12 and 13 may perform the melt processing on the workpiece W, by irradiating the workpiece W with the processing light RL. At least one of the processing heads 12 and 13 may perform the joint processing on the workpiece W, by irradiating the workpiece W with the processing light RL. At least one of the processing heads 12 and 13 may perform the cutting processing on the workpiece W, by irradiating the workpiece W with the processing light RL. That is, at least one of the processing heads 12 and 13 may perform a different processing from the removal processing, on the workpiece W, by irradiating the workpiece W with the processing light RL.

### (2) Processing System SYS in Second Example Embodiment

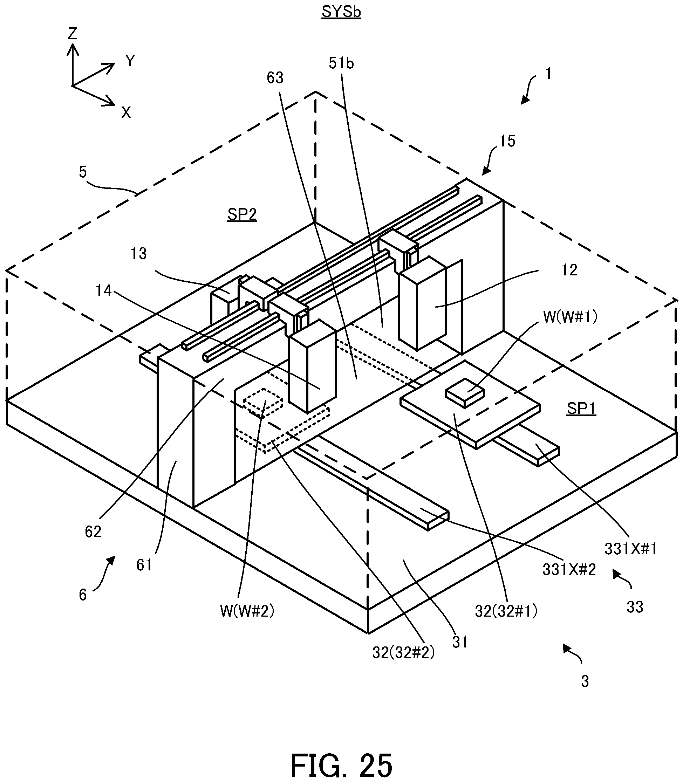

Next, with reference to FIG. 25, the processing system SYS in a second example embodiment will be described. In the following description, the processing system SYS in the second example embodiment is referred to as a "processing system SYSb". FIG. 25 is a perspective view illustrating a configuration of the processing system SYSb. In the following description, the components already described will carry the same reference numerals, and a detailed description thereof will be omitted.

As illustrated in FIG. 25, the processing system SYSb is different from the processing system SYSa in that it further includes a wall member 51b. Other features of the processing system SYSb may be the same as those of the processing system SYSa.

The wall member 51b separates the first space SP1 in which the processing head 12 and the measurement head 14 are disposed, and the second space SP2 in which the processing head 13 is disposed, in the housing space SP of the housing 5. In the example illustrated in FIG. 25, the first space SP1 and the second space SP2 are connected through an aperture 63 of the gate-shaped support frame 6 (specifically, an aperture 63 surrounded by the pair of leg members 61 and the beam member 62). In this instance, the wall member 51b may be disposed in the aperture 63. The wall member 51b may be disposed to cover the aperture 63 at least partially.

In a case where the wall member 51b is disposed in this manner, as compared with a case where the wall member 5 1b is not disposed, the build material M supplied to the workpiece W by the processing head 13 in order to process the workpiece W, hardly enters the first space SP1. This reduces the influence of the build material M on the removal processing by the processing head 12 and the measurement by the measurement head 14.

The wall member 51b may move up and down between in a state where the first space SP1 and the second space SP2 are substantially isolated (in a state where a lower end of the wall member 51b is in contact with the X guide members 331X#1 and 331X#2) and in a state where a position in the Z axis direction of the lower end of the wall member 51b is higher than a position in the Z axis direction of an upper end of each of the workpieces W#1 and W#2 placed on respective one of the stages 32#1 and 32#2 (in a case where the workpiece W#1 and the workpiece W#2 have different heights, a higher position).

Furthermore, the wall member 51b may be divided into a first member located mainly above the X guide member 331X#1, and a second member located mainly above the X guide member 331X#2. In addition, the processing system SYSb may include a wall member that separates the first space SP1 to a space located above the X guide member 331X#1 and a space located mainly above the X guide member 331X#2. Furthermore, the processing system SYSb may include a wall member that separates the second space SP2 to a space located above the X guide member 331X#1 and a space located mainly above the X guide member 331X#2. That is, the housing space SP of the housing 5 may be divided into four spaces. In this case, even in a case where there is a pressure difference between one of the four spaces where one of workpieces W#1 and W#2 is located and another space of the four spaces, the other of the workpieces W#1 and W#2 is movable to another space of the four spaces. Consequently, while the processing head 12 performs the removal processing on one of the workpieces W#1 and W#2 in one of the first spaces SP1 and SP1, the other of the workpieces W#1 and W#2 is movable to the one of the first spaces SP1 and SP1. Similarly, while the processing head 13 performs the additive manufacturing on one of the workpieces W#1 and W#2 in one of the first spaces SP1 and SP1, the other of the workpieces W#1 and W#2 is movable to the one of the first spaces SP1 and SP1. That is, while the processing head 13 supplies the build material M to one of the workpieces W#1 and W#2, the other of the workpieces W#1 and W#2 is movable.

### (3) Processing System SYS in Third Example Embodiment

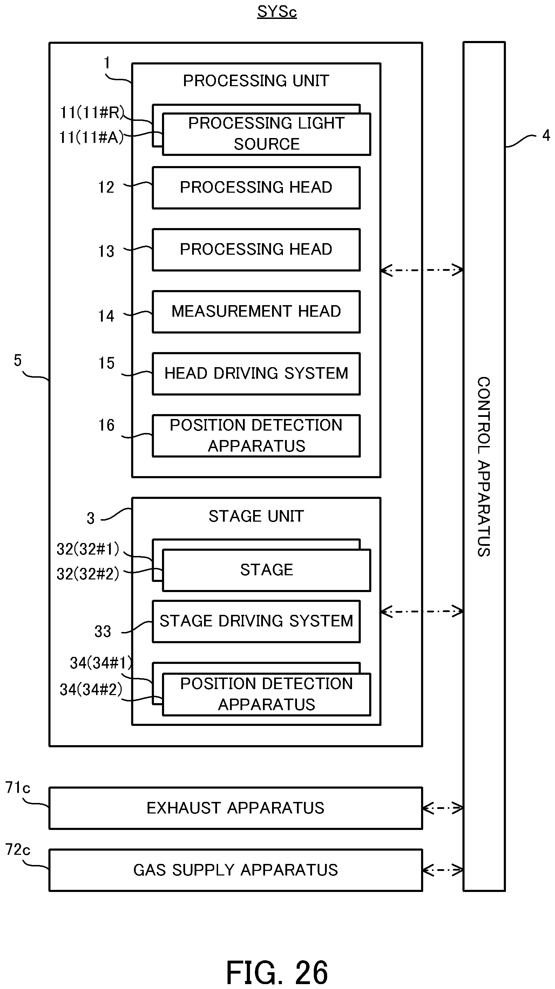

Next, with reference to FIG. 26, the processing systematic SYS in a third example embodiment will be described. In the following description, the processing system SYS in the third example embodiment is referred to as a "processing system SYSc". FIG. 26 is a block diagram illustrating a configuration of the processing system SYSc.

As illustrated in FIG. 26, the processing system SYSc is different from the processing system SYSa in that it further includes at least one of an exhaust apparatus 71c and a gas supply apparatus 72c. Other features of the processing system SYSc may be the same as those of the processing system SYSa.

The exhaust apparatus 71c is configured to evacuate at least a part of the housing space SP of the housing 5. For example, the exhaust apparatus 71c may collect an unwanted substance in the housing space SP from the housing space SP by exhausting at least a part of the housing space SP. An example of the unwanted substance is the build material M supplied by the processing head 13 to the workpiece W (especially, the build material M that is not used in the additive manufacturing). Another example of the unwanted substance is a substance (e.g., fumes) that is generated due to the irradiation with the processing light AL or RL to the workpiece W. In this case, an influence of the unwanted substance on the removal processing by the processing head 12, the additive manufacturing by the processing head 13, and the measurement by the measurement head 14, is reduced.

The exhaust apparatus 71c may evacuate at least a part of the housing space SP such that an exhaust flow rate of the first space SP1 in which the processing head 12 and the measurement head 14 are disposed, is different from an exhaust flow rate of the second space SP2 in which the processing head 13 is disposed. For example, the exhaust apparatus 71c may evacuate at least a part of the housing space SP such that the exhaust flow rate of the second space SP2 is greater than the exhaust flow rate of the first space SP1. Consequently, the build material M in the second space SP2 is efficiently collected, and thus, the build material M in the second space SP2 hardly enters the first space SP1. Furthermore, since the pressure (atmospheric pressure) of the second space SP2 is lower than the pressure (atmospheric pressure) of the first space SP1, the build material M in the second space SP2 hardly enters the first space SP1. Therefore, the influence of the build material M on the removal processing by the processing head 12 and the measurement by the measurement head 14 is reduced.

The gas supply apparatus 72c is configured to supply a gas to at least a part of the housing space SP of the housing 5. For example, the exhaust apparatus 71c may blow off the unwanted substance in the housing space SP by supplying a gas to at least a part of the housing space SP. For example, the gas supply apparatus 72c may blow off an unwanted substance adhered to the workpiece W. For example, the gas supply apparatus 72c may blow off an unwanted substance adhered to the stage 32. For example, the gas supply apparatus 72c may blow off an unwanted substance adhered to the build object. In this case, the influence of the unwanted substance on the removal processing by the processing head 12, the additive manufacturing by the processing head 13, and the measurement by the measurement head 14, is reduced.

The processing system SYSb in the second example embodiment may include a component specific to the third example embodiment. The component specific to the third example embodiment may include a component related to at least one of the exhaust apparatus 71c and the gas supply apparatus 72c. In this case, for example, a plurality of air inlets and/or a plurality of air outlets are formed, for example, on a lower surface facing -Z direction of the wall member (e.g., the wall 51b), so that inflow of a gas in one of the first space SP1 and the second space SP2 into one of the first space SP1 and the second space SP2, may be suppressed. Furthermore, the unwanted substance (the build material M, fumes, etc.) generated in at least one of the first space SP and the second space SP2 may be removed through the plurality of air inlets formed on the lower surface of the wall member (e.g., the wall member 51b).

### (4) Processing System SYS in Fourth Example Embodiment

Next, the processing system SYS in a fourth example embodiment will be described. In the following description, the processing system SYS in the fourth example embodiment is referred to as a "processing system SYSd".

### (4-1) Configuration of Processing System SYSd

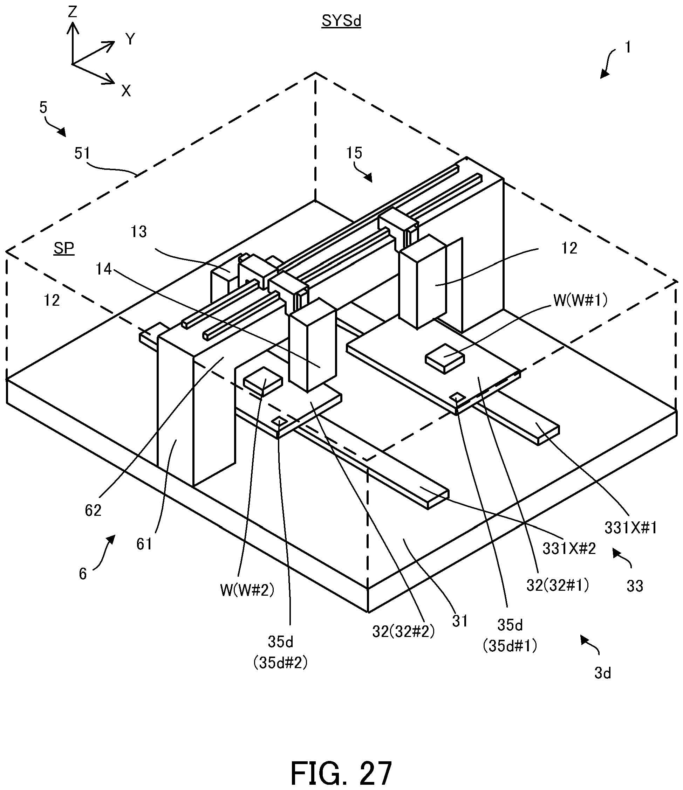

First, with reference to FIG. 27, a configuration of the processing system SYSd will be described. FIG. 27 is a perspective view illustrating the configuration of the processing system SYSd.

As illustrated in FIG. 27, the processing system SYSd is different from the processing system SYSa in that it includes a stage unit 3d instead of the stage unit 3. Other features of the processing system SYSd may be the same as those of the processing system SYSa. The stage unit 3d is different from the stage unit 3 in that it includes a plurality of light receiving apparatuses 35d. Other features of the stage unit 3d may be the same as those of the stage unit 3.

The plurality of light receiving apparatuses 35d are respectively disposed on the plurality of stages 32. In the example illustrated in FIG. 27, since the stage unit 3d includes two stages 32#1 and 32#2, the stage unit 3d includes two light receiving apparatuses 35d (specifically, light receiving apparatuses 35d#1 and 35d#2) disposed on the two stages 32#1 and 32#2, respectively.

The light receiving apparatus 35d includes a light receiving unit that is configured to optically receive at least one of the processing light RL emitted by the processing head 12 and the processing light AL emitted by the processing head 13. Furthermore, at least a part of the light receiving apparatus 35 is configured to be measured by the measurement head 14. An optical received result of the light receiving RL by the processing light apparatus 35d, an optical received result of the processing light AL by the light receiving apparatus 35d, and a measurement result of the light receiving apparatus 35d by the measurement head 14, are used to control the operation of the processing system SYSc.

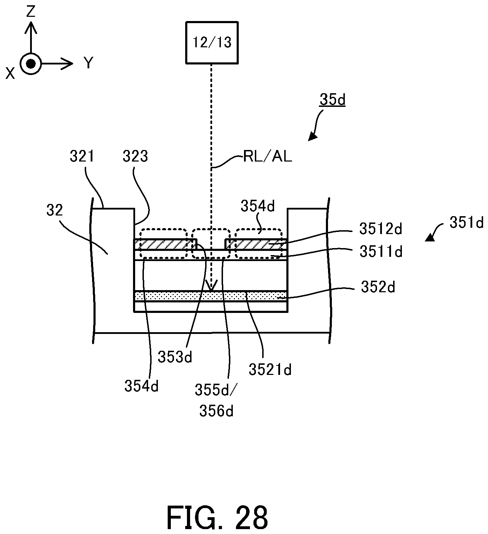

Referring now to FIG. 28, a configuration of the light receiving apparatus 35d will be described. FIG. 28 is a cross-sectional view illustrating the configuration of the light receiving apparatus 35d.

As illustrated in FIG. 28, the light receiving apparatus 35d includes a beam passing member 351d and a light receiving element 352d. The beam passing member 351d is a platelike member along the XY plane. A shape of the beam passing member 351d in the XY plane is a rectangular shape, but may be any other shape (e.g., a circular shape or an oval shape). A size of one side of the beam passing member 351d is a several millimeters to a dozen millimeters, but may be another size. The light receiving element 352d includes a light receiving surface 3521d extending along the XY plane. A shape of the light receiving surface 3521d in the XY plane is a rectangular shape, but may be any other shape (e.g., a circular shape or an oval shape). A size of one side of the light receiving surface 3521d may be equal to the size of one side of the beam passing member 351d, may be smaller than the size of one side of the beam passing member 351d, or may be larger than the size of one side of the beam passing member 351d.

The beam passing member 351d and the light receiving element 352d are disposed in a hole/hollow 323 (i.e., a concave part) formed on the stage 32. That is, the beam passing member 351d and the light receiving element 352d are disposed in the hole 323 that is depressed from an upper surface 321 of the stage 32 toward a -Z side. At least one of the beam passing member 351d and the light receiving element 352d, however, may be disposed at a different position from that of the hole 323.

The beam passing member 351d is disposed above the light receiving element 352d in the hole 323. That is, the beam passing member 351d is disposed at a position closer to the processing head 12, the processing head 13, and the measurement head 14 than the light receiving elements 352d is. In this instance, as illustrated in FIG. 28, a surface of the beam passing member 351d (specifically, a surface facing toward the processing head 12, the processing head 13, and the measurement head 14, and a surface on a +Z side) may be located below the upper surface 321 (i.e., the surface of the stage 32). In this case, since the light receiving apparatus 35d does not protrude from the surface of the stage 32, there is a lower possibility that the workpiece W placed on the stage 32 accidentally contacts with the light receiving apparatus 35 (especially, the beam passing member 351d). Consequently, the beam passing member 351d is less likely to be damaged or contaminated due to the contact between the workpiece W and the beam passing member 351d. The surface of the beam passing member 351d, however, may be located at the same height as that of the upper surface 321, or may be located above the upper surface 321.

The beam passing member 351d includes a glass substrate 3511d, and an attenuation film 3512d that is formed on at least a part of a surface of the glass substrate 3511d. The attenuation film 3512d is a member that is configured to attenuate each of the processing lights RL and AL entering the attenuation film 3512d. Note that the "attenuation of the light by the attenuation film 3512d" in the fourth example embodiment, may include not only not only allowing intensity of the light passing through the attenuation film 3512d to be lower than intensity of the light entering the attenuation film 3512d, but also shielding (i.e., blocking) the light entering the attenuation film 3512. Therefore, when each of the processing lights RL and AL enters the attenuation film 3512d, each of the processing lights RL and AL attenuated by the attenuation film 3512d by each of the processing lights RL and AL attenuated by the attenuation film AL enters the light receiving element 352d through the attenuation film 3512d, or, each of the processing lights RL and AL does not enter the light receiving element 352d because it is shielded by the attenuation film 3512d. Note that the attenuation film 3512d may be formed of a chromium film or a chromium oxide film.

At least one aperture 353d is formed in the attenuation film 3512d. The aperture 353d is a through-hole penetrating the attenuation film 3512d in the Z axis direction. Thus, in a case where each of the processing lights RL and AL enters the aperture 353d formed in the attenuating film 3512d, each of the processing lights RL and AL passes through the beam passing member 351d through the aperture 353d. That is, each of the processing lights RL and AL enters the light receiving element 352d through the aperture 353d, without being attenuated or shielded by the attenuation film 3512d.

In this manner, a part of the glass-substrate 3511d on which the attenuation film 3512d is formed (i.e., a part at which the aperture 353d is not formed) serves as an attenuation area 354d in which each of the processing lights RL and AL is attenuated. On the other hand, a part of the glass substrate 3511d on which the attenuation film 3512d is not formed (i.e., a part at which the aperture 353d is formed) serves as a passing area 355d through which each of the processing lights RL and AL is allowed to pass. At this time, the passing area 355d does not attenuate each of the processing lights RL and AL passing through the passing area 355d. The passing area 355d, however, may attenuate each of the processing lights RL and AL passing through the passing area 355d. That is, the passing area 355d may not be an area through which all (i.e., 100%) of the processing lights RL and AL entering the passing area 355d passes, and may be an area through which a part of the processing lights RL and AL entering the passing area 355d passes. An attenuation rate of each of the processing lights RL and AL by the passing area 355d is smaller than an attenuation rate of each of the processing lights RL and AL by the attenuation area 354d.

The passing area 355d formed by the aperture 353d, may form a mark (i.e., a pattern) 356d of a predetermined shape in a plane (typically the XY plane) along the surface of the attenuation film 3512d. The mark 356d is measured by the measurement head 14. Therefore, measuring at least a part of the light receiving apparatus 35d may include measuring the mark 356d.

The light receiving element 352d is a light receiving unit that is configured to optically optically receive (e.g. is configured to detect) each of the processing lights RL and AL entering the light receiving element 352d through the passing area 355d (i.e., the aperture 353d), on the light receiving surface 3521d. The light receiving element 352d is a light receiving unit that is configured to optically optically receive each of the processing lights RL and AL passing through the passing area 355d (i.e., the aperture 353d), on the light receiving surface 3521d. An example of the light receiving unit includes a photoelectric converter that is configured to photoelectrically convert each of the optically received processing lights RL and AL.

Considering that the workpiece W is processed by the irradiation with each of the processing lights RL and AL, there is a possibility that at least a part of the light receiving apparatus 35d is also processed (substantially, damaged/destroyed) by the irradiation with each of the processing lights RL and AL. Thus, the intensity of each of the processing lights RL and AL (e.g., an energy amount per unit area in a plane that intersects the traveling direction of each of the processing lights RL and AL) may be controlled such that the intensity of each of the processing lights RL and AL applied to the light receiving apparatus 35d (e.g., an energy amount per unit area in the light receiving surface 3521d of the light receiving element 352d) is less than the intensity of each of the processing lights RL and AL applied to the workpiece W in order to process the workpiece W (e.g., an energy amount per unit area on the surface of the workpiece W). At this time, the intensity of each of the processing lights RL and AL may be reduced by controlling the processing light source 11 itself. Alternatively, the intensity of each of the processing lights RL and AL may be reduced by controlling a light-reduction/light-attenuation member (not illustrated) disposed on an exit side of the processing light source 11.

An optical received result of the light receiving element 352d includes information related to a state of each of the processing lights RL and AL entering the light receiving element 352d. For example, the optical received result of the light receiving element 352d includes information related to the intensity of each of the processing lights RL and AL entering the light receiving element 352d (specifically, the intensity in a plane intersecting the XY plane). More specifically, the optical received result of the light receiving element 352d includes information related to an intensity distribution of each of the processing lights RL and AL in a plane along the XY plane. The optical received result of the light receiving element 352d is outputted to the control apparatus 4.

In addition, as described above, in a case where the mark 356d is measured by the measurement head 14, a measurement result of the mark 356d by the measurement head 14 is outputted to the control apparatus 4.

The control apparatus 4 controls the processing system SYSd (e.g., at least one of the processing unit 1 and the stage unit 3d) such that the processing system SYSd is capable of properly processing the workpiece W, based on at least one of the optical received result of each of the processing lights RL and AL by the light receiving element 352d and the measurement results of the mark 356d by the measurement head 14.

In the first example embodiment, in order to control the processing system SYSd, the control apparatus 4 may perform an origin point information generation operation for generating origin point information related to a processing origin point RO of the processing head 12, a processing origin point AO of the processing head 13, and a measurement origin point MO of the measurement head 14, by using the light receiving apparatus 35d. In this instance, the control apparatus 4 may control the processing system SYSd so as to process the workpiece W based on the origine point information.

In order to reduce or prevent the influence on the light receiving apparatus 35d optically received from the unwanted substance (e.g., contamination of the light receiving apparatus 35d by the unwanted substance), a cover member that separates an inside and an outside of the hole 323 may be disposed in the hole 323 in which the light receiving apparatus 35d is disposed. In a case where the light receiving apparatus 35d is used, a state of the cover member may be set to an open state so as not to separate the inside and outside of the hole 323. In a case where the light receiving apparatus 35d is not used, the state of the cover member may be set to a closed state so as to separate the inside and the outside of the hole 323.

Furthermore, the measurement head 14 may measure the light receiving apparatus 35d, and the control apparatus 4 may calculate a contamination degree of the light receiving apparatus 35d based on the measurement result of the light receiving apparatus 35d. When the contamination degree exceeds a certain threshold (i.e. the light receiving apparatus 35d is contaminated), the control apparatus 4 may issue an alert. For example, the control apparatus 4 may issue an alert encouraging a user to clean or replace the light receiving apparatus 35d.

Furthermore, as the light receiving apparatus 35d, the light receiving apparatus disclosed in International Application Number PCT/JP2020/016604 may be used.

### (4-2) Origin Point Information Generation Operation

Next, the origin point information generation operation for generating the origin point information, which is performed by using the light receiving apparatus 35d, will be described.

The origin point information may include information related to a distance between an apparatus origin point SO of the processing system SYS (e.g., the origin of a stage coordinate system used to control the position of the stage 32) and at least one of the processing origin point RO, the processing origin point AO, and the measurement origin point MO. In the fourth example embodiment, the processing system SYSd includes the plurality of stages 32, and thus, the origin point information may include information related to a distance between each of a plurality of apparatus origin points SO corresponding to the plurality of stages 32 (i.e., the plurality of origins of a plurality of stage coordinate systems) and at least one of the processing origin point RO, the processing origin point AO, and the measurement origin point MO. The following describes an example in which the origin point information includes information related to a distance between each of an apparatus origin point SO#1 corresponding to the stage 32#1 and an apparatus origin point SO#2 corresponding to the stage 32#2, and each of the processing origin point RO, the processing origin point AO, and the measurement origin point MO; however, a single apparatus origine point SO common to the plurality of stages 32 may be also used.

The processing origin point RO corresponds to the position of the stage 32 when a center of the processing area RSA in which the processing head 12 performs the removal processing matches a reference position (e.g., a center) of the stage 32 and when a condensed position of the processing light RL is located on the surface of the stage 32. In the fourth example embodiment, since the processing system SYSd includes the plurality of stages 32, a plurality of processing origin points RO corresponding respectively to the plurality of stages 32 may be set for the processing head 12. The following describes an example in which a processing origin point RO#1 corresponding to the stage 32#1 and a processing origin point RO#2 corresponding to the stage 32#2 are set for the processing head 12. The processing origin point RO#1 may mean an origin point of the processing head 12 when the processing head 12 performs the removal processing on the workpiece W#1 placed on the stage 32#1. The processing origin point RO#2 may mean an origin point of the processing head 12 when the processing head 12 performs the removal processing on the workpiece W#2 placed on the stage 32#2. In this instance, the origin point information may include information related to a distance between the apparatus origin point SO#1 and the processing origine point RO#1, and information related to a distance between the apparatus origine point SO#2 and the processing origine point RO#2; however, a single processing origin point RO common to the plurality of stages 32 may be also used.

The processing origin point AO corresponds to the position of the stage 32 when a center of the processing area ASA in which the processing head 13 performs the additive manufacturing matches the reference position (e.g., the center) of the stage 32 and when a condensed position of the processing light AL is located on the surface of the stage 32. In the fourth example embodiment, since the processing system SYSd includes the plurality of stages 32, a plurality of processing origin points AO corresponding respectively to the plurality of stages 32 may be set for the processing head 13. The following describes an example in which a processing origin point AO#1 corresponding to the stage 32#1 and a processing origin point AO#2 corresponding to the stage 32#2 are set for the processing head 13. The processing origin point AO#1 may mean an origin point of the processing head 13 when the processing head 13 performs the additive manufacturing on the workpiece W#1 placed on the stage 32#1. The processing origin point AO#2 may mean an origin point of the processing head 13 when the processing head 13 performs the additive manufacturing on the workpiece W#2 placed on the stage 32#2. In this instance, the origin point information may include information related to a distance between the apparatus origin point SO#1 and the processing origine point AO#1, and information related to a distance between the apparatus origine point SO#2 and the processing origine point AO#2; however, a single processing origin point AO common to the plurality of stages 32 may be also used.

The measurement origin point MO corresponds to the position of the stage 32 when a center of the measurement area MSA in which the measurement head 14 performs the measurement matches the reference position (e.g., the center) of the stage 32 and when a condensed position of the measurement light ML is located on the surface of the stage 32. In the fourth example embodiment, since the processing system SYSd includes the plurality of stages 32, a plurality of measurement origin points MO corresponding respectively to the plurality of stages 32 may be set for the measurement head 14. The following describes an example in which a measurement origin point MO#1 corresponding to the stage 32#1 and a measurement origin point MO#2 corresponding to the stage 32#2 are set for the measurement head 14. The measurement origin point MO#1 may mean an origin point of the measurement head 14 when the measurement head 14 measures the workpiece W#1 placed on the stage 32#1. The measurement origin point MO#2 may mean an origin point of the measurement head 14 when the measurement head 14 measures the workpiece W#2 placed on the stage 32#2. In this instance, the origin point information may include information related to a distance between the apparatus origin point SO#1 and the measurement origin point MO#1, and information related to a distance between the apparatus origin point SO#2 and the measurement origin point MO#2; however, a single measurement origin point MO common to the plurality of stages 32 may be also used.

In the following explanation, the distance between the apparatus origin point SO and the processing origin point RO is referred to as a "processing baseline BLR". Especially, the distance between the apparatus origine point SO#1 and the processing origine point RO#1 is referred to as a "processing base line BLR#1", and the distance between the apparatus origine point SO#2 and the processing origine point RO#2 is referred to as a "processing base line BLR#2". In addition, the distance between the apparatus origin point SO and the processing origin AO is referred to as a "processing baseline BLA". Especially, the distance between the apparatus origine point SO#1 and the processing origine point AO#1 is referred to as a "processing base line BLA#1", and the distance between the apparatus origine point SO#2 and the processing origine point AO#2 is referred to as a "processing base line BLA#2". Furthermore, the distance between the apparatus origine point SO and the measurement origine point MO is referred to as a "measurement baseline BLM". Especially, the distance between the apparatus origine point SO#1 and the measurement origine point MO#1 is referred to as a "measurement base line BLM#1", and the distance between the apparatus origine point SO#2 and the measurement origine point MO#2 is referred to as a "measurement base line BLM#2".

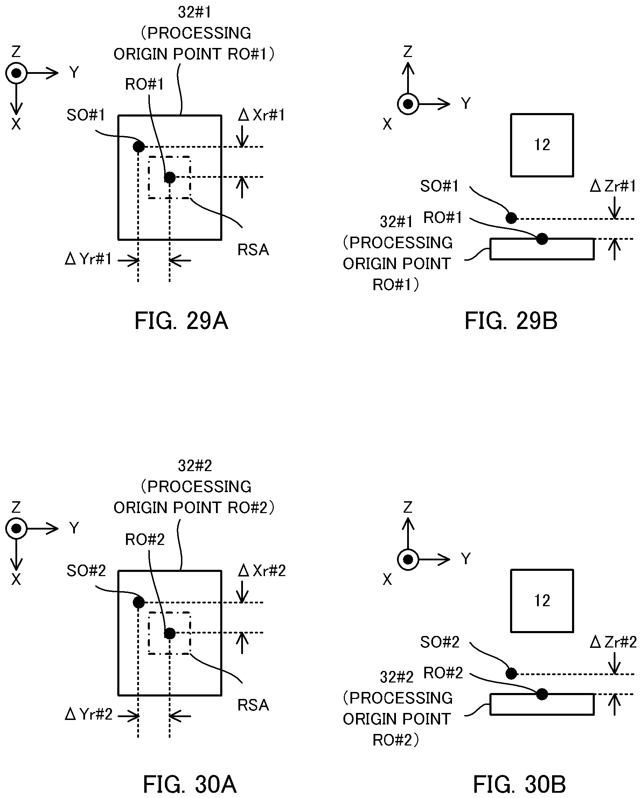

An example of the processing baseline BLR#1 is illustrated in FIG. 29A and FIG. 29B. As illustrated in FIG. 29A and FIG. 29B, the processing baseline BLR#1 may include at least one of a component ΔXr#1 corresponding to the distance between the apparatus origin point SO#1 and the processing origin point RO#1 in the X axis direction, a component ΔYr#1 corresponding to the distance between the apparatus origin point SO#1 and the processing origin point RO#1 in the Y axis direction, and a component ΔZr#1 corresponding to the distance between the apparatus origin point SO#1 and the processing origin point RO#1 in the Z axis direction.

An example of the processing baseline BLR#2 is illustrated in FIG. 30A and FIG. 30B. As illustrated in FIG. 29A and FIG. 29B, the processing baseline BLR#2 may include at least one of a component ΔXr#2 corresponding to the distance between the apparatus origin point SO#2 and the processing origin point RO#2 in the X axis direction, a component ΔYr#2 corresponding to the distance between the apparatus origin point SO#2 and the processing origin point RO#2 in the Y axis direction, and a component ΔZr#2 corresponding to the distance between the apparatus origin point SO#2 and the processing origin point RO#2 in the Z axis direction.

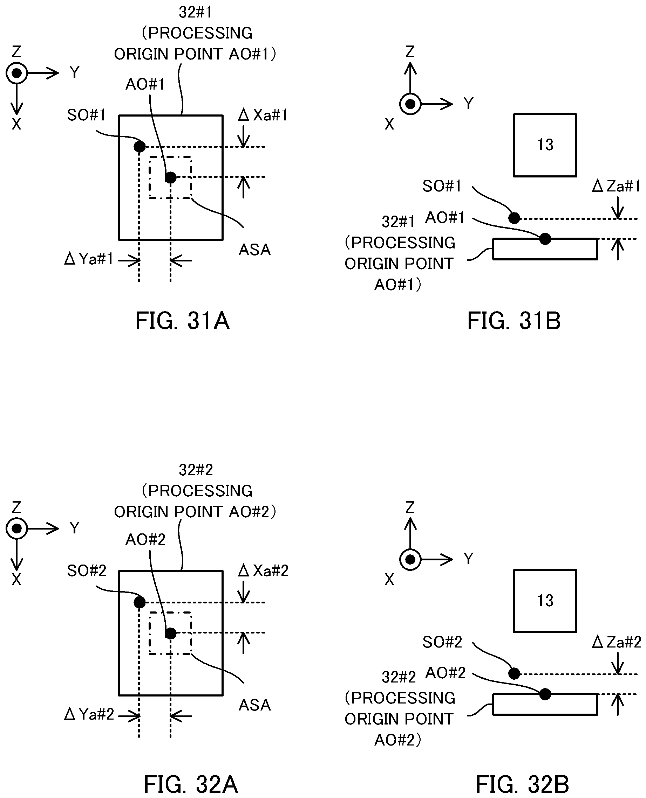

An example of the processing baseline BLA#1 is illustrated in FIG. 31A and FIG. 31B. As illustrated in FIG. 31A and FIG. 31B, the processing baseline BLA#1 may include at least one of a component ΔXa#1 corresponding to the distance between the apparatus origin point SO#1 and the processing origin point AO#1 in the X axis direction, a component ΔYa#1 corresponding to the distance between the apparatus origin point SO#1 and the processing origin point AO#1 in the Y axis direction, and a component ΔZa#1 corresponding to the distance between the apparatus origin point SO#1 and the processing origin point AO# 1 in the Z axis direction.

An example of the processing baseline BLA#2 is illustrated in FIG. 32A and FIG. 32B. As illustrated in FIG. 32A and FIG. 32B, the processing baseline BLA#2 may include at least one of a component ΔXa#2 corresponding to the distance between the apparatus origin point SO#2 and the processing origin point AO#2 in the X axis direction, a component ΔYa#2 corresponding to the distance between the apparatus origin point SO#2 and the processing origin point AO#2 in the Y axis direction, and a component ΔZa#2 corresponding to the distance between the apparatus origin point SO#2 and the processing origin point AO#2 in the Z axis direction.

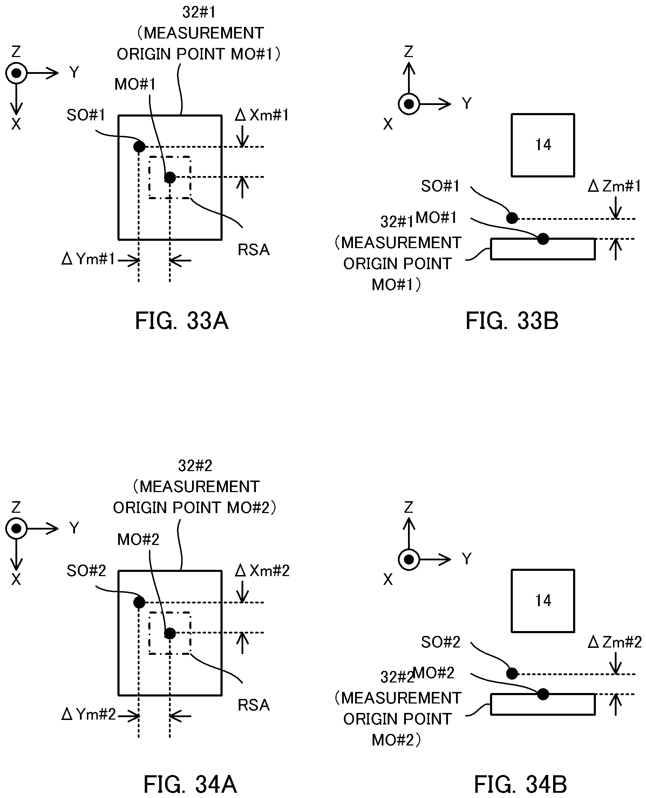

An example of the measurement baseline BLM#1 is illustrated in FIG. 33A and FIG. 33B. As illustrated in FIG. 33A and FIG. 33B, the measurement baseline BLM#1 may include at least one of a component ΔXm#1 corresponding to the distance between the apparatus origin point SO#1 and the measurement origin point MO#1 in the X axis direction, a component ΔYm#1 corresponding to the distance between the apparatus origin point SO#1 and the measurement origin point MO#1 in the Y axis direction, and a component ΔZm#1 corresponding to the distance between the apparatus origin point SO#1 and the measurement origin point MO#1 in the Z axis direction.

An example of the measurement baseline BLM#2 is illustrated in FIG. 34A and FIG. 34B. As illustrated in FIG. 34A and FIG. 34B, the measurement baseline BLM#2 may include at least one of a component ΔXm#2 corresponding to the distance between the apparatus origin point SO#2 and the measurement origin point MO#2 in the X axis direction, a component ΔYm#2 corresponding to the distance between the apparatus origin point SO#2 and the measurement origin point MO#2 in the Y axis direction, and a component ΔZm#2 corresponding to the distance between the apparatus origin point SO#2 and the measurement origin point MO#2 in the Z axis direction.

In order to generate the origin point information, the control apparatus 4 may set the apparatus origin points SO#1 and SO#2. In order to set the apparatus origin points SO#1 and SO#2, the control apparatus 4 may control the measurement head 14 so as to measure the light receiving apparatus 35d (especially, the beam passing member 351d) provided on each of the stages 32#1 and 32#2 to define the apparatus origin points SO#1 and SO#2. In the fourth example embodiment, the apparatus origin point SO#1 is set at a position having a predetermined positional relationship with the light receiving apparatus 35d (especially, the beam passing member 351d) on the stage 32#1. In this instance, the control apparatus 4 acquires information related to a position of the stage 32#1 when the measurement head 14 measures the light receiving apparatus 35d (especially, the beam passing member 351d), from the position detection apparatus 34#1. Thereafter, the control apparatus 4 may set the position having a predetermined positional relationship with the acquired position of the stage 32#1, to the apparatus origin point SO#1. Similarly, the apparatus origin point SO#2 is set at a position having a predetermined positional relationship with the light receiving apparatus 35d (especially, the beam passing member 351d) on the stage 32#2. In this instance, the control apparatus 4 acquires information related to a position of the stage 32#2 when the measurement head 14 measures the light receiving apparatus 35d (especially, the beam passing member 351d), from the position detection apparatus 34#2. Thereafter, the control apparatus 4 may set the position having a predetermined positional relationship with the acquired position of the stage 32#2, to apparatus origin point SO#2.

Thereafter, the control apparatus 4 calculates a position of each of the processing origin points RO#1 and RO#2, the processing origin points AO#1 and AO#2, and the measurement origin points MO#1 and MO#2.

In order to calculate the position of the processing origin point RO#1, the control apparatus 4 acquires an optical received result of the processing light RL by the light receiving apparatus 35d#1 disposed on the stage 32#1. Specifically, the control apparatus 4 moves the stage 32#1 (i.e., moves the light receiving apparatus 35d#1) along each of the X axis direction and the Y axis direction such that the mark 356d formed on the stage 32#1 is located at the center of the processing area RSA, by controlling the stage driving system 33. Furthermore, the control apparatus 4 moves the stage 32#1 along the Z axis direction such that the condensed position of the processing light RL is located on the surface of the light receiving apparatus 35d#1. At this time, the control apparatus 4 may move the processing head 12 by controlling the head driving system 15, or may not move the processing head 12. Thereafter, the processing head 12 irradiates the mark 356d of the light receiving apparatus 35d#1 with the processing light RL. Consequently, the light receiving elements 352d of the light receiving apparatus 35d#1 optically receives the processing light RL through the passing area 355d that constitutes the mark 356d. The control apparatus 4 acquires the position of the stage 32#1 (i.e., a position of the light receiving apparatus 35d#1) when the light receiving element 352d optically receives the processing light RL, from the position detection apparatus 34#1. That is, the control apparatus 4 acquires information related to the position of the stage 32#1, from the optical received result of the processing light RL by the light receiving apparatus 35d#1. The position of the stage 32#1 acquired here is available as the position of the processing origin point RO#1. Therefore, the control apparatus 4 may calculate a distance between the apparatus origin point SO#1 and the position of the stage 32#1 when the light receiving apparatus 35d#1 optically receives the processing light RL through the mark 356d, and may calculate the processing base line BLR#1 based on the calculated distance.

In order to calculate the position of the processing origin point RO#2, the control apparatus 4 acquires an optical received result of the processing light RL by the light receiving apparatus 35d#2 disposed on the stage 32#2. Specifically, the control apparatus 4 moves the stage 32#2 (i.e., moves the light receiving apparatus 35d#2) along each of the X axis direction and the Y axis direction such that the mark 356d formed on the stage 32#2 is located at the center of the processing area RSA, by controlling the stage driving system 33. Furthermore, the control apparatus 4 moves the stage 32#2 along the Z axis direction such that the condensed position of the processing light RL is located on the surface of the light receiving apparatus 35d#2. At this time, the control apparatus 4 may move the processing head 12 by controlling the head driving system 15, or may not move the processing head 12. Thereafter, the processing head 12 irradiates the mark 356d of the light receiving apparatus 35d#2 with the processing light RL. Consequently, the light receiving elements 352d of the light receiving apparatus 35d#2 optically receives the processing light RL through the passing area 355d that constitutes the mark 356d. The control apparatus 4 acquires the position of the stage 32#2 (i.e., a position of the light receiving apparatus 35d#2) when the light receiving element 352d optically receives the processing light RL, from the position detection apparatus 34#2. That is, the control apparatus 4 acquires information related to the position of the stage 32#2, from the optical received result of the processing light RL by the light receiving apparatus 35d#2. The position of the stage 32#2 acquired here is available as the position of the processing origin point RO#2. Therefore, the control apparatus 4 may calculate a distance between the apparatus origin point and the position of the stage 32#2 when the light receiving apparatus 35d#2 optically receives the processing light RL through the mark 356d, and may calculate the processing base line BLR#2 based on the calculated distance.

In order to calculate the position of the processing origin point AO#1, the control apparatus 4 acquires an optical received result of the processing light AL by the light receiving apparatus 35d#1 disposed on the stage 32#1. Specifically, the control apparatus 4 moves the stage 32#1 (i.e., moves the light receiving apparatus 35d#1) along each of the X axis direction and the Y axis direction such that the mark 356d formed on the stage 32#1 is located at the center of the processing area ASA, by controlling the stage driving system 33. Furthermore, the control apparatus 4 moves the stage 32#1 along the Z axis direction such that the condensed position of the processing light AL is located on the surface of the light receiving apparatus 35d#1. At this time, the control apparatus 4 may move the processing head 13 by controlling the head driving system 15, or may not move the processing head 13. Thereafter, the processing head 13 irradiates the mark 356d of the light receiving apparatus 35d#1 with the processing light AL. Consequently, the light receiving elements 352d of the light receiving apparatus 35d#1 optically receives the processing light AL through the passing area 355d that constitutes the mark 356d. The control apparatus 4 acquires the position of the stage 32#1 (i.e., the position of the light receiving apparatus 35d#1) when the light receiving element 352d optically receives the processing light AL, from the position detection apparatus 34#1. That is, the control apparatus 4 acquires information related to the position of the stage 32#1, from the optical received result of the processing light AL by the light receiving apparatus 35d#1. The position of the stage 32#1 acquired here is available as the position of the processing origin point AO#1. Therefore, the control apparatus 4 may calculate the distance between the apparatus origin point SO#1 and the position of the stage 32#1 when the light receiving apparatus 35d#1 optically receives the processing light AL through the mark 356d, and may calculate the processing base line BLA#1 based on the calculated distance.

In order to calculate the position of the processing origin point AO#2, the control apparatus 4 acquires an optical received result of the processing light AL by the light receiving apparatus 35d#2 disposed on the stage 32#2. Specifically, the control apparatus 4 moves the stage 32#2 (i.e., moves the light receiving apparatus 35d#2) along each of the X axis direction and the Y axis direction such that the mark 356d formed on the stage 32#2 is located at the center of the processing area ASA, by controlling the stage driving system 33. Furthermore, the control apparatus 4 moves the stage 32#2 along the Z axis direction such that the condensed position of the processing light AL is located on the surface of the light receiving apparatus 35d#2. At this time, the control apparatus 4 may move the processing head 13 by controlling the head driving system 15, or may not move the processing head 13. Thereafter, the processing head 13 irradiates the mark 356d of the light receiving apparatus 35d#2 with the processing light AL. Consequently, the light receiving elements 352d of the light receiving apparatus 35d#2 optically receives the processing light AL through the passing area 355d that constitutes the mark 356d. The control apparatus 4 acquires the position of the stage 32#2 (i.e., the position of the light receiving apparatus 35d#2) when the light receiving element 352d optically receives the processing light AL, from the position detection apparatus 34#2. That is, the control apparatus 4 acquires information related to the position of the stage 32#2, from the optical received result of the processing light AL by the light receiving apparatus 35d#2. The position of the stage 32#2 acquired here is available as the position of the processing origin point AO#2. Therefore, the control apparatus 4 may calculate the distance between the apparatus origin point SO#2 and the position of the stage 32#2 when the light receiving apparatus 35d#2 optically receives the processing light AL through the mark 356d, and may calculate the processing base line BLA#2 based on the calculated distance.

In order to calculate the position of the measurement origin point MO#1, the control apparatus 4 acquires the measurement result by the measurement head 14 of the light receiving apparatus 35d#1 disposed on the stage 32#1. Specifically, the control apparatus 4 moves the stage 32#1 (i.e., moves the light receiving apparatus 35d#1) along each of the X axis direction and the Y axis direction such that the mark 356d formed on the stage 32#1 is located at the center of the measurement area MSA, by controlling the stage driving system 33. Furthermore, the control apparatus 4 moves the stage 32#1 along the Z axis direction such that the condensed position of the measurement light ML is located on the surface of the light receiving apparatus 35d#1. At this time, the control apparatus 4 may move the measurement head 14 by controlling the head driving system 15, or may not move the measurement head 14. Thereafter, the measurement head 14 measures the mark 356d of the light receiving apparatus 35d#1. Furthermore, the control apparatus 4 acquires the position of the stage 32#1 (i.e., the position of the light receiving apparatus 35d#1) when the measurement head 14 measures the mark 356d. That is, the control apparatus 4 acquires information related to the position of the stage 32#1, from the measurement result of the light receiving apparatus 35d#1 by the measurement head 14. The position of the stage 32#1 acquired here is available as the position of the measurement origin point MO#1. Therefore, the control apparatus 4 may calculate the distance between the apparatus origin point SO#1 and the position of the stage 32#1 when the measurement head 14 measures the mark 356d of the light receiving apparatus 35d#1, and may calculate the processing base line BLM#1 based on the calculated distance.

In order to calculate the position of the measurement origin point MO#2, the control apparatus 4 acquires the measurement result by the measurement head 14 of the light receiving apparatus 35d#2 disposed on the stage 32#2. Specifically, the control apparatus 4 moves the stage 32#2 (i.e., moves the light receiving apparatus 35d#2) along each of the X axis direction and the Y axis direction such that the mark 356d formed on the stage 32#2 is located at the center of the measurement area MSA, by controlling the stage driving system 33. Furthermore, the control apparatus 4 moves the stage 32#2 along the Z axis direction such that the condensed position of the measurement light ML is located on the surface of the light receiving apparatus 35d#2. At this time, the control apparatus 4 may move the measurement head 14 by controlling the head driving system 15, or may not move the measurement head 14. Thereafter, the measurement head 14 measures the mark 356d of the light receiving apparatus 35d#2. Furthermore, the control apparatus 4 acquires the position of the stage 32#2 (i.e., the position of the light receiving apparatus 35d#2) when the measurement head 14 measures the mark 356d. That is, the control apparatus 4 acquires information related to the position of the stage 32#2, from the measurement result of the light receiving apparatus 35d#2 by the measurement head 14. The position of the stage 32#2 acquired here is available as the position of the measurement origin point MO#2. Therefore, the control apparatus 4 may calculate the distance between the apparatus origin point SO#2 and the position of the stage 32#2 when the measurement head 14 measures the mark 356d of the light receiving apparatus 35d#2, and may calculate the processing base line BLM#2 based on the calculated distance.

After the calculation of the origin point information including at least one of the processing baselines BLR#1 and BLR#2, the processing baselines BLA#1 and BLA#2, the measurement baselines BLM#1 and BLM#2, the control apparatus 4 may control at least one of the processing unit 1 and the stage unit 3d based on the origin point information.

For example, the control apparatus 4 may control at least one of the processing unit 1 and the stage unit 3d such that the processing head 12 performs the removal processing on the workpiece W#1, based on the processing baseline BLR#1. That is, the control apparatus 4 may control the removal processing on the workpiece W#1 by the processing head 12, based on the processing baseline BLR#1. As an example, the control apparatus 4 may move at least one of the processing head 12 and the stage 32#1, based on the processing baseline BLR#1. That is, the control apparatus 4 may control at least one of the head driving system 15 and the stage driving system 33 so as to change a positional relationship between the processing head 12 and the stage 32#1, based on the processing baseline BLR#1. Typically, the control apparatus 4 may move at least one of the processing head 12 and the stage 32#1 based on the processing baseline BLR#1, while the processing head 12 performs the removal processing on the workpiece W#1. The control apparatus 4 may move at least one of the processing head 12 and the stage 32#1 based on the processing baseline BLR#1, while at least one of the processing head 12 and the workpiece W#1 moves relative to at least the other of the processing head 12 and the workpiece W#1. As a consequence, the processing area RSA can be set to an appropriate position in the stage coordinate system based on the apparatus origin point SO#1. Therefore, the processing head 12 is allowed to properly perform the remove processing on the workpiece W#1.

For example, the control apparatus 4 may control at least one of the processing unit 1 and the stage unit 3d such that the processing head 12 performs the removal processing on the workpiece W#2, based on the processing baseline BLR#2. That is, the control apparatus 4 may control the removal processing on the workpiece W#2 by the processing head 12, based on the processing baseline BLR#2. As an example, the control apparatus 4 may move at least one of the processing head 12 and the stage 32#2, based on the processing baseline BLR#2. That is, the control apparatus 4 may control at least one of the head driving system 15 and the stage driving system 33 so as to change a positional relationship between the processing head 12 and the stage 32#2, based on the processing baseline BLR#2. Typically, the control apparatus 4 may move at least one of the processing head 12 and the stage 32#2 based on the processing baseline BLR#2, while the processing head 12 performs the removal processing on the workpiece W#2. The control apparatus 4 may move at least one of the processing head 12 and the stage 32#2 based on the processing baseline BLR#2, while at least one of the processing head 12 and the workpiece W#2 moves relative to at least the other of the processing head 12 and the workpiece W#2. As a consequence, the processing area RSA can be set to an appropriate position in the stage coordinate system based on the apparatus origin point SO#2. Therefore, the processing head 12 is allowed to properly perform the remove processing on the workpiece W#2.

For example, the control apparatus 4 may control at least one of the processing unit 1 and the stage unit 3d such that the processing head 13 performs the additive manufacturing on the workpiece W#1, based on the processing baseline BLA#1. That is, the control apparatus 4 may control the additive manufacturing on the workpiece W#1 by the processing head 13, based on the processing baseline BLA#1. As an example, the control apparatus 4 may move at least one of the processing head 13 and the stage 32#1, based on the processing baseline BLA#1. That is, the control apparatus 4 may control at least one of the head driving system 15 and the stage driving system 33 so as to change a positional relationship between the processing head 13 and the stage 32#1, based on the processing baseline BLA#1. Typically, the control apparatus 4 may move at least one of the processing head 13 and the stage 32#1 based on the processing baseline BLA#1, while the processing head 13 performs the additive manufacturing on the workpiece W#1. The control apparatus 4 may move at least one of the processing head 13 and the stage 32#1 based on the processing baseline BLA#1, while at least one of the processing head 13 and the workpiece W#1 moves relative to at least the other of the processing head 13 and the workpiece W#1. As a consequence, the processing area ASA can be set to an appropriate position in the stage coordinate system based on the apparatus origin point SO#1. Therefore, the processing head 13 is allowed to properly perform the additive manufacturing on the workpiece W#1.

For example, the control apparatus 4 may control at least one of the processing unit 1 and the stage unit 3d such that the processing head 13 performs the additive manufacturing on the workpiece W#2, based on the processing baseline BLA#2. That is, the control apparatus 4 may control the additive manufacturing on the workpiece W#2 by the processing head 13, based on the processing baseline BLA#2. As an example, the control apparatus 4 may move at least one of the processing head 13 and the stage 32#2, based on the processing baseline BLA#2. That is, the control apparatus 4 may control at least one of the head driving system 15 and the stage driving system 33 so as to change a positional relationship between the processing head 13 and the stage 32#2, based on the processing baseline BLA#2. Typically, the control apparatus 4 may move at least one of the processing head 13 and the stage 32#2 based on the processing baseline BLA#2, while the processing head 13 performs the additive manufacturing on the workpiece W#2. The control apparatus 4 may move at least one of the processing head 13 and the stage 32#2 based on the processing baseline BLA#2, while at least one of the processing head 13 and the workpiece W#2 moves relative to at least the other of the processing head 13 and the workpiece W#2. As a consequence, the processing area ASA can be set to an appropriate position in the stage coordinate system based on the apparatus origin point SO#2. Therefore, the processing head 13 is allowed to properly perform the additive manufacturing on the workpiece W#2.

For example, the control apparatus 4 may control at least one of the processing unit 1 and the stage unit 3d such that the measurement head 14 measures the workpiece W#1, based on the measurement baseline BLM#1. That is, the control apparatus 4 may control the measurement of the workpiece W#1 by the measurement head 14, based on the measurement baseline BLM#1. As an example, the control apparatus 4 may move at least one of the measurement head 14 and the stage 32#1, based on the measurement baseline BLM#1. That is, the control apparatus 4 may control at least one of the head driving system 15 and the stage driving system 33 so as to change a positional relationship between the measurement head 14 and the stage 32#1, based on the measurement baseline BLM#1. Typically, the control apparatus 4 may move at least one of the measurement head 14 and the stage 32#1 based on the measurement baseline BLM#1, while the measurement head 14 measures the workpiece W#1. The control apparatus 4 may move at least one of the measurement head 14 and the stage 32#1 based on the measurement baseline BLM#1, while at least one of the measurement head 14 and the workpiece W#1 moves relative to at least the other of the measurement head 14 and the workpiece W#1. As a consequence, the measurement area MSA can be set to an appropriate position in the stage coordinate system based on the apparatus origin point SO#1. Therefore, the measurement head 14 is allowed to properly measure the workpiece W#1.

For example, the control apparatus 4 may control at least one of the processing unit 1 and the stage unit 3d such that the measurement head 14 measures the workpiece W#2, based on the measurement baseline BLM#2. That is, the control apparatus 4 may control the measurement of the workpiece W#2 by the measurement head 14, based on the measurement baseline BLM#2. As an example, the control apparatus 4 may move at least one of the measurement head 14 and the stage 32#2, based on the measurement baseline BLM#2. That is, the control apparatus 4 may control at least one of the head driving system 15 and the stage driving system 33 so as to change a positional relationship between the measurement head 14 and the stage 32#2, based on the measurement baseline BLM#2. Typically, the control apparatus 4 may move at least one of the measurement head 14 and the stage 32#2 based on the measurement baseline BLM#2, while the measurement head 14 measures the workpiece W#2. The control apparatus 4 may move at least one of the measurement head 14 and the stage 32#2 based on the measurement baseline BLM#2, while at least one of the measurement head 14 and the workpiece W#2 moves relative to at least the other of the measurement head 14 and the workpiece W#2. As a consequence, the measurement area MSA can be set to an appropriate position in the stage coordinate system based on the apparatus origin point SO#2. Therefore, the measurement head 14 is allowed to properly measure the workpiece W#2.

The control apparatus 4 may correct the staged coordinate system based on the origin point information including at least one of the processing baselines BLR#1 and BLR#2, the processing baselines BLA#1 and BLA#2, and the measurement baselines BLM#1 and BLM#2. For example, the control apparatus 4 may correct the stage coordinate system regarding the stage 32#1, based on at least one of the processing baseline BLR#1, the processing baseline BLA#1, and the measurement baseline BLM#1. For example, the control apparatus 4 may correct the stage coordinate system regarding the stage 32#2, based on at least one of the processing baseline BLR#2, the processing baseline BLA#2, and the measurement baseline BLM#2. Even in this case, it is possible to enjoy the above-described effects.

The processing system SYSd may generate the origin point information before the processing system SYSd starts to process the workpieces W#1 and W#2. For example, the processing system SYSd may calculate the processing baseline BLR#1 before the processing head 12 starts the removal processing on the workpiece W#1. For example, the processing system SYSd may calculate the processing baseline BLR#2 before the processing head 12 starts the removal processing on the workpiece W#2. For example, the processing system SYSd may calculate the processing baseline BLA#1 before the processing head 13 starts the additive manufacturing on the workpiece W#1. For example, the processing system SYSd may calculate the processing baseline BLA#2 before the processing head 13 starts the additive manufacturing on the workpiece W#2. For example, the processing system SYSd may calculate the measurement baseline BLM#1 before the measurement head 14 starts to measure the workpiece W#1. For example, the processing system SYSd may calculate the measurement baseline BLM#2 before the measurement head 14 starts to measure the workpiece W#2.

The processing system SYSd may generate the origin point information after the processing system SYSd starts to process the workpieces W#1 and W#2. In this instance, the processing system SYSd may generate the origin point information in parallel with the removal processing on the workpiece W by the processing head 12, the additive manufacturing on the workpiece W by the processing head 13, or the measurement of the workpiece W by the measurement head 14. For example, the processing system SYSd may generate the origin point information by using the light receiving apparatus 35#2 disposed on the stage 32#2, during execution of the removal processing on the workpiece W#1 by the processing head 12, the additive manufacturing on the workpiece W#1 by the processing head 13, or the measurement of the workpiece W#1 by the measurement head 14. Similarly, for example, the processing system SYSd may generate the origin point information by using the light receiving apparatus 35#1 disposed on the stage 32#1, during execution of the removal processing on the workpiece W#2 by the processing head 12, the additive manufacturing on the workpiece W#2 by the processing head 13, or the measurement of the workpiece W#2 by the measurement head 14. As an example, while the processing head 12 performs the removal processing on the workpiece W#1 placed on the stage 32#1 located in the processing area RSA, the stage 32#2 (especially, the light receiving apparatus 35d#2 disposed on the stage 32#2) may be located in the processing area ASA, and the light receiving apparatus 35d#2 may optically receive the processing light AL from the processing head 13. Consequently, the processing baseline BLA#2 is calculated as described above. As another example, while the processing head 13 performs the additive manufacturing on the workpiece W#1 placed on the stage 32#1 located in the processing area ASA, the stage 32#2 (especially, the light receiving apparatus 35d#2 disposed on the stage 32#2) may be located in the processing area RSA, and the light receiving apparatus 35d#2 may optically receive the processing light RL from the processing head 12. Consequently, the processing baseline BLR#2 is calculated as described above. As another example, in the processing system SYSd, while the processing head 12 performs the removal processing on the workpiece W#1 placed on the stage 32#1 located in the processing area RSA is performing the removal processing, the stage 32#2 (especially, the light receiving apparatus 35d#2 disposed on the stage 32#2) may be located in the measurement area MSA, and the measurement head 14 may measure the light receiving apparatus 35d#2 (especially, the mark 356d thereof). Consequently, the measurement baseline BLM#2 is calculated as described above.

As described above, while the processing system SYSd processes the workpiece W, each of the stages 32#1 and 32#2 relatively moves between the removal processing area (e.g., the processing area RSA) and the additive manufacturing area (e.g., the processing area ASA). In this instance, the processing system SYSd may generate the origin point information after each of the stages 32#1 and 32#2 moves between the removal processing area and the additive manufacturing area. For example, the processing system SYSd may generate the origin point information including at least one of the processing baselines BLR#1 and BLA#1, after the stage 32#1 moves between the removal processing area and the additive manufacturing area. For example, the processing system SYSd may generate the origin point information including at least one of the processing baselines BLR#2 and BLA#2, after the stage 32#2 moves between the removal processing area and the additive manufacturing area. Alternatively, the processing system SYSd may generate the origin point information at each time when each of the stages 32#1 and 32#2 moves between the removal processing area and the additive manufacturing area. For example, the processing system SYSd may generate the origin point information including at least one of the processing baselines BLR#1 and BLA#1 at each time when the stage 32#1 moves between the removal processing area and the additive manufacturing area. For example, the processing system SYSd may generate the origin point information including at least one of the processing baselines BLR#2 and BLA#2 at each time when the stage 32#2 moves between the removal processing area and the additive manufacturing area.

The control apparatus 4 may calculate at least one of the processing baselines BLR#1 and BLR2, the processing baselines BLA#1 and BLA#2, and the measurement baselines BLM#1 and BLM#2, based on at least another one of the processing baselines BLR#1 and BLR2, the processing baselines BLA#1 and BLA#2, and the measurement baselines BLM#1 and BLM#2. For example, the control apparatus 4 may calculate the processing baseline BLR#1 by using the optical received result of the processing light RL by the light receiving apparatus 35d#1, may calculate the processing baseline BLA#1 by using the optical received result of the processing light AL by the light receiving apparatus 35d#1, and may calculate the measurement baseline BLM#1 by using the measurement result of the light receiving apparatus 35d#1 by the measurement head 14. On the other hand, in this instance, the control apparatus 4 may perform one of a first operation of calculating the processing baseline BLR#2 by using the optical received result of the processing light RL by the light receiving apparatus 35d#2, a second operation of calculating the processing baseline BLA#2 by using the optical received result of the processing light AL by the light receiving apparatus 35d#2, and a third operation of calculating the measurement baseline BLM#2 by using the measurement result of the light receiving apparatus 35d#2 by the measurement head 14, but the control apparatus 4 may not performs the remaining two of the first to third operations. For example, when performing the first operation, the control apparatus 4 may not perform the second and third operations. In this instance, the processing baseline BLR#2 is calculated by the first operation. Thereafter, the control apparatus 4 may calculate the processing baseline BLA#2 and the measurement baseline BLM#2 based on the processing baseline BLR#1, the processing baseline BLA#1, the measurement baseline BLM#1, and the processing baseline BLR#2. Specifically, the control apparatus 4 may identify a positional relationship between the light receiving apparatus 35d#1 and the light receiving apparatus 35d#2 based on the processing baseline BLR#1, the processing baseline BLA#1, the measurement baseline BLM#1, and the processing baseline BLR#2. After that, the control apparatus 4 may calculate the processing baseline BLA#2 and measurement baseline BLM#2 based on the processing baseline BLR#1, processing baseline BLA#1, the measurement baseline BLM#1, the processing baseline BLR#2, and the positional relationship between the light receiving apparatus 35d#1 and the light receiving apparatus 35d#2.

In the above example, the measurement head 14 measures the light receiving apparatus 35d (especially, the beam passing member 351d) provided on each of the stages 32#1 and 32#2 in order to calculate the processing baseline BLR, the processing baseline BLA, and the measurement baseline BLM. The measurement head 14, however, may measure a reference mark formed on each of the stages 32#1 and 32#2. In this instance, the control apparatus 4 may measure a positional relationship between the light receiving apparatus 35d (the beam passing member 351d) and the reference mark in advance by using the measurement head 14, and may calculate the baseline by using the measured value as well. Furthermore, the processing head 12 may process the workpiece W (or a test piece), the measurement head 14 may measure the processed point, the processing head 13 may process the workpiece W (or a test piece), and the measurement head 14 may measure the processed point. In this instance, the control apparatus 4 may manage the coordinates by using a distance between the processing head 12 and the measurement head 14 and a distance between the processing head 13 and the measurement head 14.

At least one of the processing system SYSb in the second example embodiment and the processing system SYSc in the third example embodiment may include a component specific to the fourth example embodiment. The component specific to the fourth example embodiment may include a component related to the light receiving apparatus 35d.

### (5) Processing System SYS in Fifth Example Embodiment

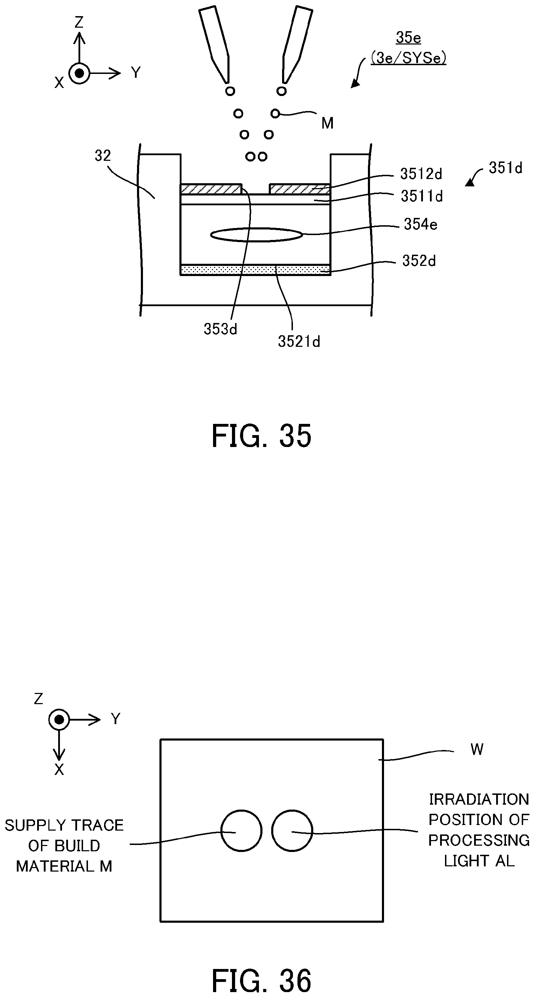

Next, the processing system SYS in a fifth example embodiment will be described. In the following description, the processing system SYS in the fifth example embodiment is referred to as a "processing system SYSe". The processing system SYSe is different from the processing system SYSd in that it includes a stage unit 3e instead of a stage unit 3d. Other features of the processing system SYSe may be the same as those of the processing system SYSd. The stage unit 3e is different from the stage unit 3d in that it includes a light receiving apparatus 35e instead of the light receiving apparatus 35d. Other features of the stage unit 3e may be the same as those of the stage unit 3d. Therefore, hereinafter, with reference to FIG. 35, the light receiving apparatus 35e in the fifth example embodiment will be described. FIG. 35 is a cross-sectional view illustrating a configuration of the light receiving apparatus 35e in the fifth example embodiment.

As illustrated in FIG. 35, the light receiving apparatus 35e is different from the light receiving apparatus 35d in that it further includes an imaging optical system 354e. Other features of the light receiving apparatus 35e may be the same as the other features of the light receiving apparatus 35d.

The imaging optical system 354e is an optical system for forming an image of an object on the light receiving element 352d (especially, the light receiving surface 3521d). In this instance, the light receiving apparatus 35e may substantially serve as an imaging apparatus that is configured to image the object. Furthermore, the light receiving element 352d may serve as an imaging element or an image pickup element.

The imaging optical system 354e may be movable. For example, in a case where the light receiving element 352d optically receives each of the processing light RL from the processing head 12 and the processing light AL from the processing head 13, the imaging optical system 354e may move away from the optical path of each of the processing lights RL and AL. On the other hand, in a case where the light receiving apparatus 35e serves as the imaging apparatus, the imaging optical system 354e may move such that the imaging optical system 354e is located on the optical path of a light from the object.

The light receiving apparatus 35e serving as the imaging apparatus may image the material nozzle 132 of the processing head 13. That is, the light receiving apparatus 35e may image the material nozzle 132, by receiving a light from the material nozzle 132. In this instance, the control apparatus 4 may be configured to detect a contamination state of the material nozzle 132 or the like, based on an image acquired by imaging the material nozzle 132. In a case where the light receiving apparatus 35e images the material nozzle 132, the material nozzle 132 may stop supplying the build material M. The light receiving apparatus 35e may image the build material M supplied by the material nozzle 132. That is, the light receiving apparatus 35e may image the build material M, by receiving a light from the build material M. In this case, the control apparatus 4 may estimate a supply position of the build material M based on an optical received result of the light receiving apparatus 35e (in this case, the image that is an imaging result). Thereafter, the irradiation optical system 131 that emits the processing light AL and the material nozzle 132 may be aligned such that the build material M is supplied to the irradiation position of the processing light AL emitted by the processing head 13 (e.g., the processing area ASA). As a result, the processing head 13 is allowed to properly build the build object.

In a case where the light receiving apparatus 35e images the build material M supplied by the material nozzle 132, the processing head 13 may not apply the processing light AL toward the light receiving apparatus 35e. Alternatively, the processing head 13 may apply the processing light AL toward the light receiving apparatus 35e with intensity low enough not to melt the build material M. Here, the control apparatus 4 may calculate the supply position of the build material M, based on the image generated by the light condition apparatus 35e imaging the build material M in a state where the processing head 13 does not apply the processing light AL toward the light receiving apparatus 35e. That is, the light receiving apparatus 35e may measure the supply position of the build material M. Furthermore, the control apparatus 4 may calculate the irradiation position of the processing light AL, based on the image generated by the light condition apparatus 35e imaging the irradiation position of the processing light AL om a state where the processing head 13 stops supplying the build material M. That is, the light receiving apparatus 35e may calculate the irradiated position of the processing light AL.

Alternatively, the processing system SYSe may image at least one of the material nozzle 132 and the build material M, by using another imaging apparatus, in addition to or instead of the light receiving apparatus 35e. In this instance, the control apparatus 4 may estimate the supply position of the build material M based on the image that is an imaging result of the other imaging apparatus. Alternatively, as illustrated in FIG. 36, in a case where the build material M is supplied to the workpiece W, a supply trace of the build material M may be formed on the surface of the workpiece W. In this instance, another imaging apparatus may image the supply trace of the build material M formed on the workpiece W. In this case, the control apparatus 4 may estimate the supply position of the formed material M, based on the image that is an imaging result of the other imaging apparatus (i.e., the image that captures the supply trace). Consequently, the control apparatus 4 is allowed to estimate the supply position of the build material M with relatively high accuracy.

In a case where the processing head 13 includes a plurality of material nozzles 132, a positional relationship in the Z axis direction between the workpiece W and a material concentration position on which the build material M supplied from the plurality of material nozzles 132 are concentrated, varies depending on a distance between the processing head 13 and the workpiece W in the Z axis direction. In this case, the control apparatus 4 may calculate the material concentration position on which the build material M are concentrated, based on the image generated by imaging the light receiving apparatus 35e imaging the build material M, and may control the distance between the processing head 13 and the workpiece W in the Z axis direction (i.e., the distance between the plurality of material nozzles 132 and the workpiece W in the Z axis direction) such that the positional relationship in the Z axis direction between the workpiece W and the material concentration position is a desired positional relationship, based on the calculated material concentration position.

The processing system SYSe may image the build material M (especially, the supply trace formed on the workpiece W by the build material M), by using the light receiving apparatus 35e, while changing the distance between the processing head 13 and the workpiece W in the Z axis direction. The control apparatus 4 may calculate a relationship between the distance between the processing head 13 and the workpiece W in the Z axis direction, and at least one of a shape and a size of the supply trace, based on the image generated by the light receiving apparatus 35e imaging the supply trace. The control apparatus 4 may control the distance between the processing head 13 and the workpiece W in the Z axis direction such that the shape of the supply trace is a desired shape and/or the size of the supply trace is a desired size.

At least one of the processing system SYSb in the second example embodiment to the processing system SYSd in the fourth example embodiment may include a component specific to the fifth example embodiment. The component specific to the fifth example embodiment may include a component related to the light receiving apparatus 35e.

Furthermore, in at least one of the first to fifth example embodiments, the gate-shaped support frame 6 may be movable on the surface plate 31. For example, the support frame 6 may be movable along at least one of the X axis direction, the Y axis direction and the Z axis direction. In this case, the positions of the processing head 12, the processing head 13, and the measurement head 14 may be changed by the movement of the support frame 6.

Furthermore, in at least one of the first to fifth example embodiments, one stage 32 is disposed on each of the X guide members 331X#1 and 331X#2; however, a plurality of stages 32 that are configured to place thereon the workpiece W, may be disposed on each of the X guide member 331X#1 and 331X#2. In a case where a plurality of stages 32 are disposed on a single X guide member, the measurement or the processing may be performed on a workpiece on one of the plurality of stages 32, in parallel with at least a part of the measurement or the processing on the workpiece W on another one of the plurality of stages 32.

### (6) Processing System SYS in Sixth Example Embodiment

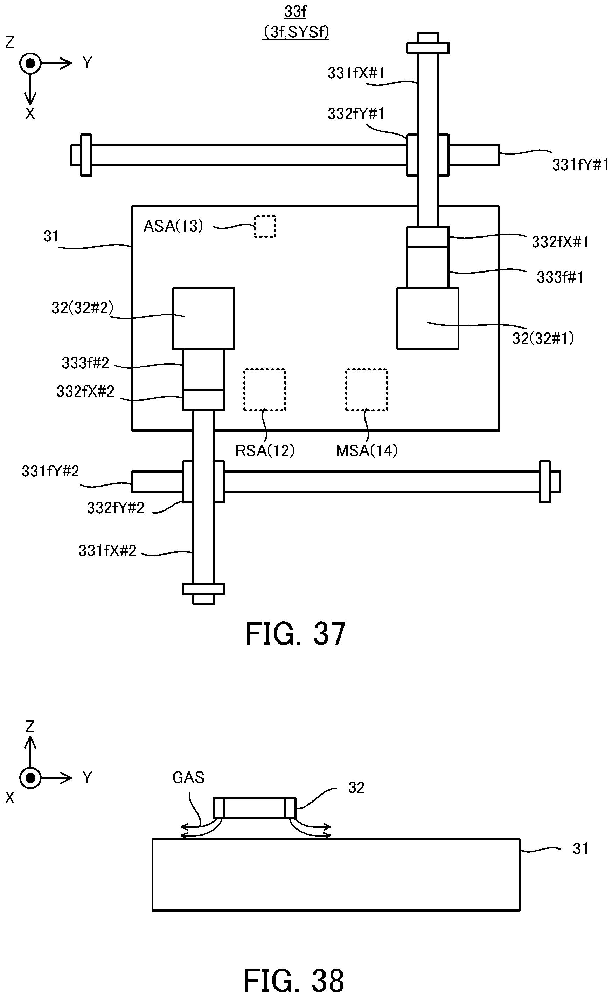

Next, the processing system SYS in a sixth example embodiment will be described. In the following description, the processing system SYS in the sixth example embodiment is referred to as a "processing system SYSf'. The processing system SYSf is different from the processing system SYSa in that it includes a stage unit 3f instead of the stage unit 3. Other features of the processing system SYSf may be the same as those of the processing system SYSa. The stage unit 3f is different from the stage unit 3 in that it include a stage driving system 33f instead of the stage driving system 33. Other features of the stage unit 3f may be the same as those of the stage unit 3. Therefore, hereinafter, with reference to FIG. 37, the stage driving system 33f in the sixth example embodiment will be described. FIG. 37 is a plan view illustrating a configuration of the stage driving system 33f in the sixth example embodiment.

As illustrated in FIG. 37, the stage driving system 33f is different from the stage driving system 33 that moves the stage 32 along a single axial direction in that it moves the stage 32 along each of a plurality of different axial directions. Other features of the stage driving system 33f may be the same as those of the stage driving system 33.

The sixth example embodiment describes an example in which the stage driving system 33 moves each of the plurality of stages 32 (i.e., the stages 32#1 and 32#2) along each of the X axis direction and the Y axis direction. In this instance, in order to move the stage 32#1 along each of the X axis direction and the Y axis direction, as illustrated in FIG. 37, the stage driving system 33f may include a Y guide member 331fY#1, a Y block member 332fY#1, an X guide member 331fX#1, an X block member 332fX#1, and a connecting member 333f#1. Furthermore, in order to move the stage 32#2 along each of the X axis direction and the Y axis direction, as illustrated in FIG. 37, the stage driving system 33f includes a Y guide member 331fY#2, a Y block member 332fY#2, an X guide member 331fX#2, an X block member 332fX#2, and a connecting member 333f#2.

Each of the Y guide members 331fY#1 and 331fY#2 is a shaft member extending along the Y axis direction. The Y guide members 331fY#1 and 331fY#2 may be respectively disposed on both sides of the surface plate 31 so as to sandwich the surface plate 31 along the X axis direction. The Y block member 332fY#1 is attached to the Y guide member 331fY#1 such that the Y block member 332fY#1 is movable along the Y guide member 331fY#1. The Y block member 332fY#2 is attached to the Y guide member 331fY#2 such that the Y block member 332fY#2 is movable along the Y guide member 331fY#2. The X guide member 331fX#1 is attached to the Y block member 332fY#1. The X guide member 331fX#2 is attached to the Y block member 332fY#2. Each of the X guide members 331fX#1 and 331fX#2 is a shaft member extending along the X axis direction. The X block member 332fX#1 is attached to the X guide member 331fX#1 such that the X block member 332fX#1 is movable along the X guide member 331fX#1. The X block member 332fX#2 is attached to the X guide member 331fX#2 such that the X block member 332fX#2 is movable along the X guide member 331fX#2. The stage 32#1 is attached to the X block member 332fX#1 through the connecting member 333f#1. The stage 32#2 is attached to the X block member 332fX#2 through the connecting member 333f#2.

The Y block member 332fY#1 moves along the Y guide member 331fY#1, by which the stage 32#1 attached to the Y block member 332fY#1 through the X block member 332fX#1, moves along the Y axis direction. Furthermore, the X block member 332fX#1 moves along the X guide member 331fX#1, by which the stage 32#1 attached to the X block member 332fX#1 through the connecting member 333f#1, moves along the X axis direction.

The Y block member 332fY#2 moves along the Y guide member 331fY#2, by which the stage 32#2 attached to the Yblock member 332fY#2 through the X block member 332fX#2, moves along the Y axis direction. Furthermore, the X block member 332fX#2 moves along the X guide member 331fX#2, by which the stage 32#2 attached to the X block member 332fX#2 through the connecting member 333f#2, moves along the X axis direction.

At least one of the connecting members 333f#1 and 333f#2 may include an elastic body. An example of the elastic body is a spring. An example of the spring is at least one of a wire spring (in other words, a coil spring), a leaf/flat spring, a bar spring (in other words, a torsion bar), and a spiral spring. Another example of the elastic body is rubber.

The stage 32 may be movable on the surface plate 31 by the stage driving system 33f in a state of floating above the surface plate 31. For example, as illustrated in FIG. 38, the stage 32 may include an air bearing. In this case, at least one of the stages 32 may float by using a gas supplied from the air bearing. Alternatively, the stage 32 may float by using a magnetic force. Even in at least one of the first example embodiment to the fifth example embodiment, the stage 32 may be movable on the surface plate 31 by the stage driving system 33 in a state of floating above the surface plate 31.

In a case where the stage 32 includes the air bearing, the gas supplied from the air bearing may prevent the build material M supplied by the processing head 13 to the workpiece W to process the workpiece W, from entering a space between the stage 32 and the surface plate 31. This may result in smooth movement of the stage 32. Even in a case where the stage 32 floats by using a magnetic force, the stage 32 may eject a gas for preventing the build material M supplied by processing head 13 to the workpiece W to process the workpiece W, from entering the space between the stage 32 and the surface plate 31.

In a case where the stage 32 includes the air bearing, the stage 32 may supply a gas from the air bearing so as to blow off the build material M remaining on the surface plate 31, to the outside of the surface plate 31. Especially, the stage 32 may supply the gas from the air bearing while moving on the surface plate 31. As a result, the build material M remaining on the surface plate 31 is blown off to the outside of the surface plate 31, and thus, the movement of the stage 32 is not influenced by the build material M remaining on the surface plate 31.

In a case where the stage driving system 33f moves the stage 32 along each of the plurality of differing axial directions, at least one of the processing head 12, the processing head 13, and the measurement head 14 may not be movable. Even in this case, the stage 32 is movable between the removal processing area (e.g., the processing area RSA) in which the processing head 12 performs the removal processing, the additive manufacturing area (e.g., the processing area ASA) in which the processing head 13 performs the additive manufacturing, and the measurement area (e.g., the measurement area MSA) in which the measurement head 14 performs the measurement.

At least one of the processing system SYSb in the second example embodiment to the processing system SYSe in the fifth example embodiment may include a component specific to the sixth example embodiment. The component specific to the sixth example embodiment may include a component related to the stage driving system 33f.

### (7) Processing System SYS in Seventh Example Embodiment

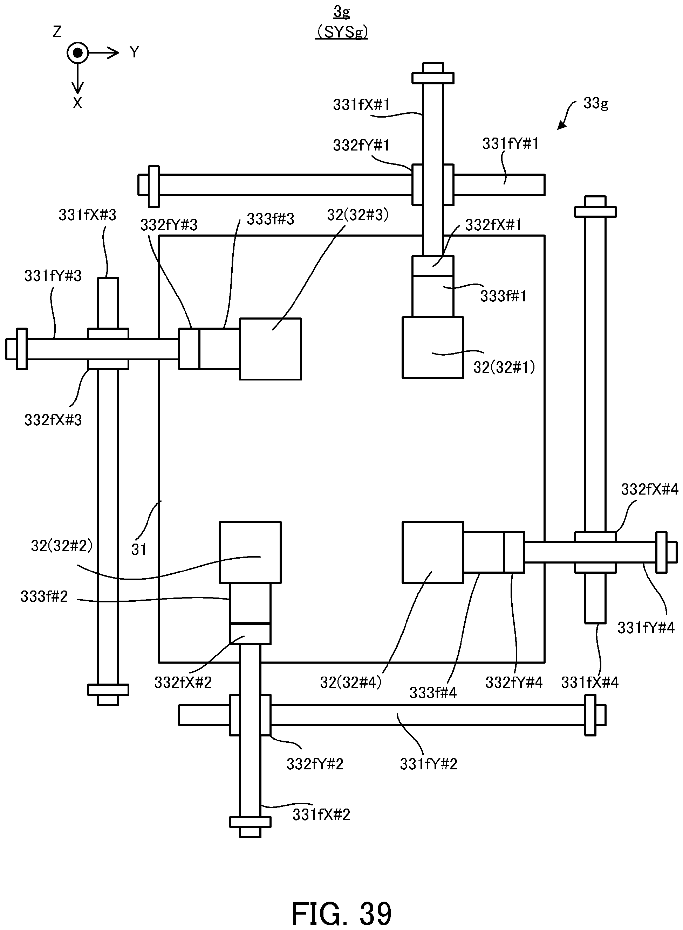

Next, the processing system SYS in a seventh example embodiment will be described. In the following description, the processing system SYS in the seventh example embodiment is referred to as a "processing system SYSg". The processing system SYSg is different from the processing system SYSf in the sixth example embodiment in that it includes a stage unit 3g instead of the stage unit 3f. Other features of the processing system SYSg may be the same as those of the processing system SYSf. Therefore, hereinafter, with reference to FIG. 39, the stage unit 3g in the seventh example embodiment will be described. FIG. 39 is a plan view illustrating a configuration of the stage unit 3g in the seventh example embodiment.

As illustrated in FIG. 39, the stage unit 3g is different from the stage unit 3f in that it includes four stages 32 (specifically, stages 32#1 to 32#4). Furthermore, the stage unit 3g is different from the stage unit 3f in that it includes a stage driving system 33g instead of the stage driving system 33f. Other features of the stage unit 3g may be the same as those of the stage unit 3f.

The stage driving system 33g includes the moving apparatuses for moving the stage 32#1 and the stage 32#2 (see FIG. 37), as in the stage driving system 33f. The stage driving system 33g is different from the stage driving system 33f in that it includes moving apparatuses for moving the stage 32#3 and the stage 32#4. Other features of the stage driving system 33g may be the same as those of the stage driving system 33f.

Specifically, the stage driving system 33g may include a Y guide member 331fY#3, a Y block member 332fY#3, an X guide member 331fX#3, an X block member 332fX#3, and a connecting member 333f#3, in order to move the stage 32#3 along each of the X axis direction and the Y axis direction. Furthermore, the stage driving system 33g may include a Y guide member 331fY#4, a Y block member 332fY#4, an X guide member 331fX#4, an X block member 332fX#4, and a connecting member 333f#4, in order to move the stage 32#4 along each of the X axis direction and the Y axis direction.

Each of the X guide members 331fX#3 and 331fX#4 is a shaft member extending along the X axis direction. The X guide members 331fX#3 and 331fX#4 may be respectively disposed on both sides of the surface plate 31 so as to sandwich the surface plate 31 along the Y axis direction. The X block member 332fX#3 is attached to the X guide member 331fX#3 such that the X block member 332fX#3 is movable along the X guide member 331fX#3. The X block member 332fX#4 is attached to the X guide member 331fX#4 such that the X block member 332fX#4 is movable along the X guide member 331fX#4. The Y guide member 331fY#3 is attached to the X block member 332fX#3. The Y guide member 331fY#4 is attached to the X block member 332fX#4. Each of the Y guide members 331fY#3 and 331fY#4 is a shaft member extending along the Y axis direction. The Y block member 332fY#3 is attached to the Y guide member 331fY#3 such that the Y block member 332fY#3 is movable along the Y guide member 331fY#3. The Y block member 332fY#4 is attached to the Y guide member 331fY#4 such that the Y block member 332fY#4 is movable along the Y guide member 331fY#4. The stage 32 #3 is attached to the Y block member 332fY#3 through the connecting member 333f#3. The stage 32#4 is attached to the Y block member 332fY#4 through the connecting member 333f#4.

The X block member 332fX#3 moves along the X guide member 331fX#3, by which the stage 32 #3 attached to the X block member 332fX#3 through the Y block member 332fY#3, moves along the X axis direction. Furthermore, the Y block member 332fY#3 moves along the Y guide member 331fY#3, by which the stage 32 #3 attached to the Y block member 332fY#3 through the connecting member 333f#3, moves along the Y axis direction.

The X block member 332fX#4 moves along the X guide member 331fX#4, by which the stage 32#4 attached to the X block member 332fX#4 through the Y block member 332fY#4, moves along the X axis direction. Furthermore, the Y block member 332fY#4 moves along the Y guide member 331fY#4, by which the stage 32#4 attached to the Y block member 332fY#4 through the connecting member 333f#4, moves along the Y axis direction.

### (8) Processing System SYS in Eighth Example Embodiment

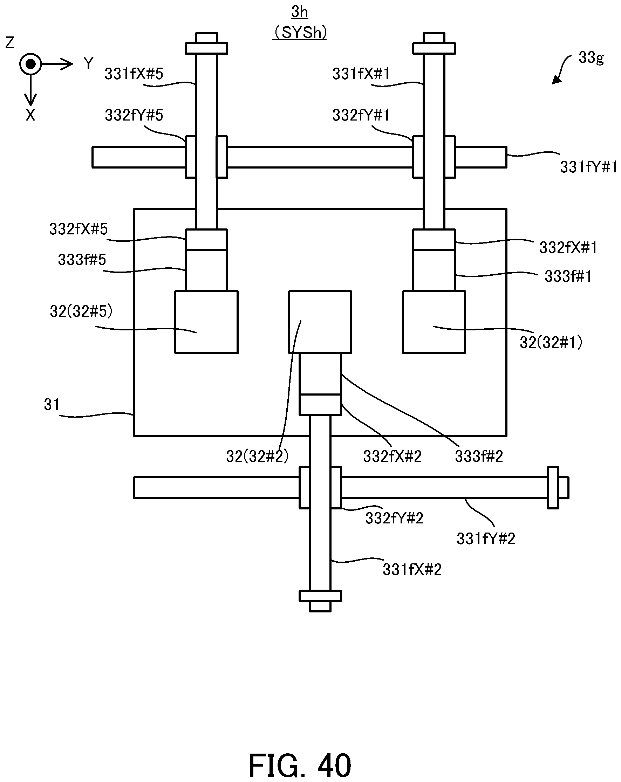

Next, the processing system SYS in an eighth example embodiment will be described. In the following description, the processing system SYS in the eighth example embodiment is referred to as a "processing system SYSh". The processing system SYSh is different from the processing system SYSf in the sixth example embodiment in that it includes a stage unit 3h instead of the stage unit 3f. Other features of the processing system SYSh may be the same as those of the processing system SYSf. Therefore, hereinafter, with reference to FIG. 40, the stage unit 3h in the eighth example embodiment will be described. FIG. 40 is a plan view illustrating a configuration of the stage unit 3h in the eighth example embodiment.

As illustrated in FIG. 40, the stage unit 3h is different from the stage unit 3f in that it includes three stages 32 (specifically, stages 32#1, 32#2, and 32#5). Furthermore, the stage unit 3h is different from the stage unit 3f in that it includes a stage driving system 33h instead of the stage driving system 33f. Other features of the stage unit 3h may be the same as those of the stage unit 3f.

The stage driving system 33h includes the moving apparatuses for moving the stage 32#1 and the stage 32#2 (see FIG. 37), as in the stage driving system 33f. The stage driving system 33h is different from the stage driving system 33f in that it includes moving apparatuses for moving the stage 32#5. Other features of the stage driving system 33h may be the same as those of the stage driving system 33f.

Specifically, the stage driving system 33h may include a Y block member 332fY#5, an X guide member 331fX#5, an X block member 332fX#5, and a connecting member 333f#5, in order to move the stage 32#5 along each of the X axis direction and the Y axis direction.

The Y block member 332fY#5 is attached to the Y guide member 331fY#1 such that the Y block member 332fY#5 is movable along the Y guide member 331fY#1. That is, the eighth example embodiment may be regarded as different from the sixth and seventh example embodiments in which a single block member is attached to a single guide member, in that a plurality of block members may be attached to a single guide member. In a case where a plurality of block members are attached to a single guide member, the plurality of block members may be driven by a linear motor. The X guide member 331fX#5 is attached to the Y block member 332fY#5. The X guide member 331fX#5 is a shaft member extending along the X axis direction. The X block member 332fX#5 is attached to the X guide member 331fX#5 such that the X block member 332fX#5 is movable along the X guide member 331fX#5. The stage 32#5 is attached to the X block member 332fX#5 through the connecting member 333f#5.

The Y block member 332fY#5 moves along the Y guide member 331fY#1, by which the stage 32#5 attached to the Y block member 332fY#5 through the X block member 332fX#5, moves along the Y axis direction. Furthermore, the X block member 332fX#5 moves along the X guide member 331fX#5, by which the stage 32#5 attached to the X block member 332fX#5 through the connecting member 333f#5, moves along the X axis direction.

### (9) Processing System SYS in Ninth Example Embodiment

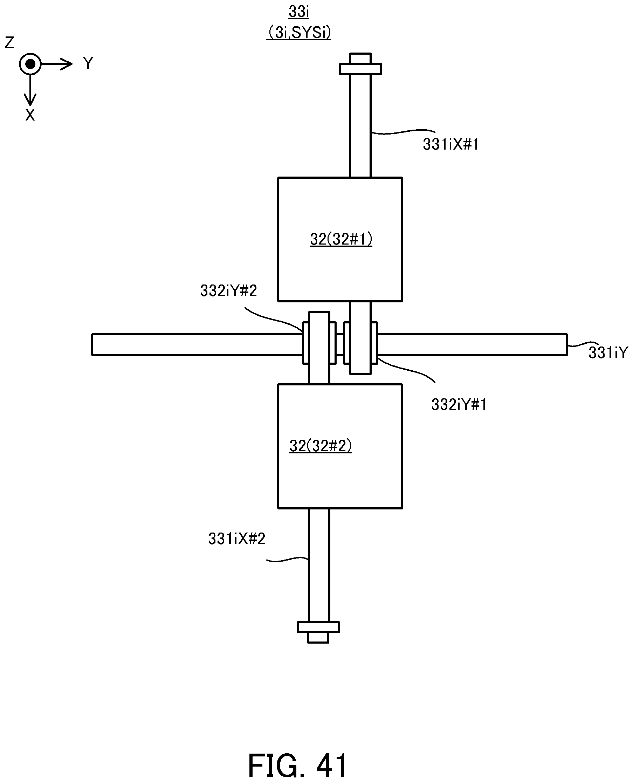

Next, the processing system SYS in a ninth example embodiment will be described. In the following description, the processing system SYS in the ninth example embodiment is referred to as a "processing system SYSi". The processing system SYSi is different from the processing system SYSf in that it includes a stage unit 3i instead of the stage unit 3f. Other features of the processing system SYSi may be the same as those of the processing system SYSf. The stage unit 3i is different from the stage unit 3f in that it includes a stage driving system 33i instead of the stage driving system 33f. Other features of the stage unit 3i may be the same as those of the stage unit 3f. Therefore, hereinafter, with reference to FIG. 41, the stage driving system 33i in the ninth example embodiment will be described. FIG. 41 is a plan view illustrating a configuration of the stage driving system 33i in the ninth example embodiment.

As illustrated in FIG. 41, the stage driving system 33i is configured to move each of the stages 32#1 and 32#2 along a plurality of different axial directions (the X axis direction and the Y axis direction in the example illustrated in FIG. 41), as in the stage driving system 33f. Specifically, the stage driving system 33i includes a Y guide member 331iY, a Y block member 332iY#1, a Y block member 332iY#2, an X guide member 331iX#1, and an X guide member 331iX#2. The Y guide member 331iY is a shaft member extending along the Y axis direction. Each of the Y block members 332iY#1 and 332iY#2 is attached to the Y guide member 331iY such that each of the Y block members 332iY#1 and 332iY#2 is movable along the Y guide member 331iY. The X guide member 331iX#1 is attached to the Y block member 332iY#1. The X guide member 331iX#2 is attached to the Y block member 332iY#2. Each of the X guide members 331iX#1 and 331iX#2 is a shaft member extending along the X axis direction. The stage 32#1 is attached to the X guide member 331iX#1 such that the stage 32#1 is movable along the X guide member 331iX#1. The stage 32#2 is attached to the X guide member 331iX#2 such that the stage 32#2 is movable along the X guide member 331iX#2.

The Y block member 332iY#1 moves along the Y guide member 331iY, by which the stage 32#1 attached to the Y block member 332iY#1 through the X guide member 331iX#1, moves along the Y axis direction. Furthermore, the stage 32#1 moves along the X guide member 331iX#1, by which the stage 32#1 moves along the X axis direction.

The Y block member 332iY#2 moves along the Y guide member 331iY, by which the stage 32#2 attached to the Y block member 332iY#2 through the X guide member 331iX#2, moves along the Y axis direction. Furthermore, the stage 32#2 moves along the X guide member 331iX#2, by which the stage 32#2 moves along the X axis direction.

In such a stage unit 3i in the ninth example embodiment, the order of arrangement of the stages 32#1 and 32#2 along the X axis direction may be changed. For example, the stage unit 3i may switch a state of the stages 32#1 and 32#2 from a first state where the stage 32#1 is located on the -X side of the stage 32#2, to a second state where the stage 32#1 is located on the +X side of the stage 32#2, or from the second state to the first state. Consequently, even in the ninth example embodiment, each of the stages 32#1 and 32#2 is movable between the removal processing area (e.g., the processing area RSA) in which the processing head 12 performs the removal processing, the additive manufacturing area (e.g., the processing area ASA) in which the processing head 13 performs the additive manufacturing, and the measurement area (e.g., the measurement area MSA) in which the measurement head 14 performs the measurement.

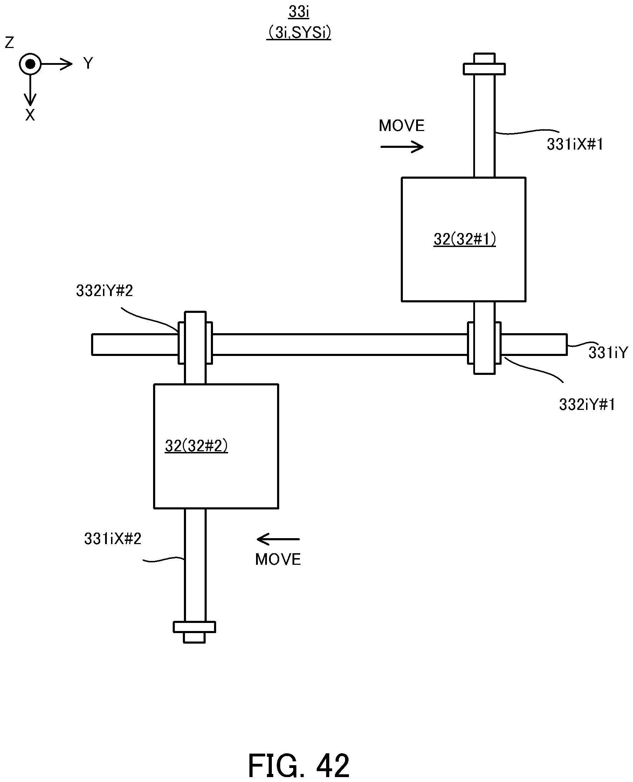

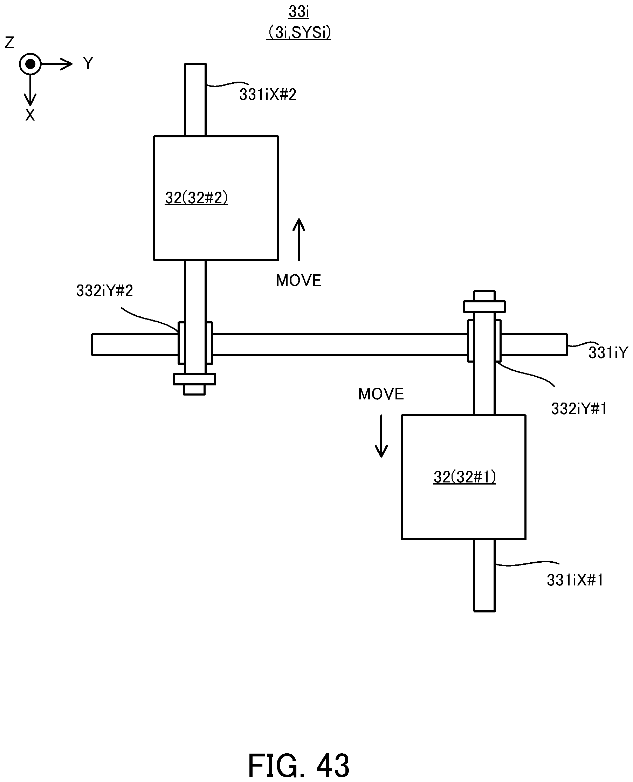

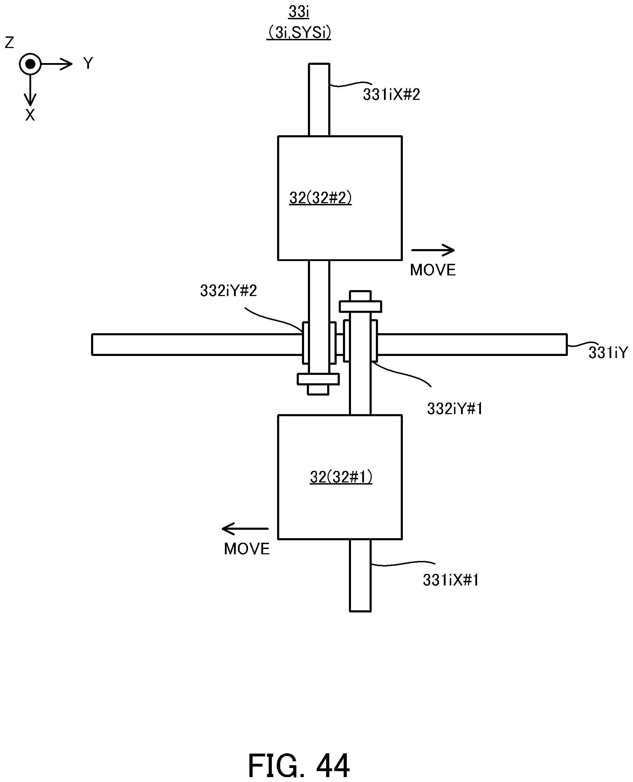

As an example, an operation of switching the state of the stages 32#1 and 32#2 from the first state illustrated in FIG. 41 to the second state will be described. In this instance, as illustrated in FIG. 42, the stage driving system 33i moves the stages 32#1 and 32#2 such that the stages 32#1 and 32#2 separate from each other along the Y axis direction. For example, the stage driving system 33i may move the stage 32#1 along the Y axis direction toward a + Y side, and may move the stage 32#2 along the Y axis direction toward a -Y side. Thereafter, as illustrated in FIG. 43, the stage driving system 33i moves the stages 32#1 and 32#2 so as to change the order of arrangement of the stages 32#1 and 32#2 along the X axis direction. For example, the stage driving system 33i may move the stage 32#1 along the X axis direction toward the + X side, and may move the stage 32#2 along the X axis direction toward the -X side. Thereafter, as illustrated in FIG. 44, the stage driving system 33i moves the stages 32#1 and 32#2 such that the stages 32#1 and 32#2 approach each other along the Y axis direction. For example, the stage driving system 33i may move the stage 32#1 along the Y axis direction toward the -Y side, and may move the stage 32#2 along the Y axis direction toward the + Y side. As a result, the state of the stages 32#1 and 32#2 is switched from the first state illustrated in FIG. 41 to the second state illustrated in FIG. 44.

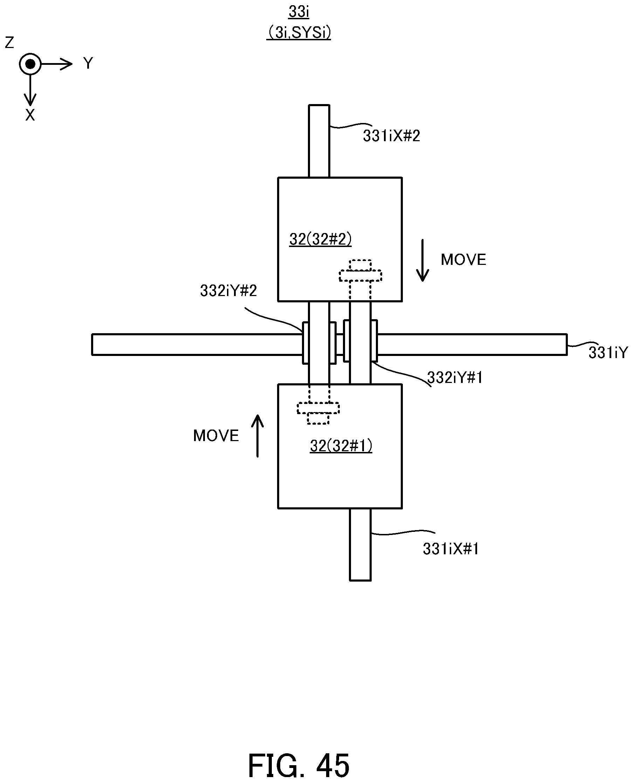

The stage driving system 33i may move the stages 32#1 and 32#2 such that the stage 32#1 and 32#2 approach each other along the Y axis direction, as illustrated in FIG. 44, and then such that the stage 32#1 and 32#2 approach each other along the X axis direction as illustrated in FIG. 45. For example, the stage driving system 33i may move the stage 32#1 along the X axis direction toward the -X side, and may move the stage 32#2 along the X axis direction toward the + X side.

### (10) Other Modified Examples

In the above description, the processing system SYS moves the stage 32 by using the stage driving system 33. The processing system SYS, however, may move the stage 32 by using a robotic arm that is configured to carry/transport the stage 32, instead of the stage driving system 33. In this instance, the configuration of the processing system SYS is simplified.

In at least one of the first to ninth example embodiments, a plurality of workpieces W may be placed on a single stage 32 (e.g., the stage 32#1 or 32#2). In this case, the above-described operation that is performed on the single workpiece W placed on the single stage 32 may be performed on each of the plurality of workpieces W. Alternatively, in parallel with at least a part of the measurement or processing on one of the plurality of workpieces W placed on the single stage 32, the measurement or processing may be performed on another one of the plurality of workpieces W. For example, in the processing system SYSa in FIG. 1, two workpieces W are placed on the stage 32#1, and in parallel with at least a part of the additive manufacturing using the processing head 13 on one workpiece W on the stage 32#1, the removal processing using the processing head 12 may be performed on another workpiece W on the stage 32#1.

The processing system SYS may not include the stage 32. In this instance, the processing system SYS may change the processed position on the workpiece W by using the head driving system 15. At this time, the head driving system 15 may include a robotic arm.

In the above description, the operation in a state where the workpiece W is placed on each of the plurality of stages 32, is described; however, the workpiece W may be placed only on a part of the stages 32 (typically, one stage 32), and this workpiece W may be processed.

In the above description, the processing system SYS includes the measurement head 14, as a different head from the processing heads 12 and 13; however, at least one of the processing heads 12 and 13 may serve as the measurement head 14. That is, at least one of the processing head 12 and 13 may include the member provided in the measurement head 14 (e.g., the irradiation optical system 141 and the light receiving element 35 illustrated in FIG. 5). In this case, the measurement light ML may be applied to the measurement target object through the optical system provided in the processing head 12 (e.g., the Galvano mirror 122 and the fθ lens 123). The measurement light ML may be applied to the measurement target object through the irradiation optical system provided in the processing head 13.

In the above description, the processing unit 1 processes the workpiece W by irradiating the workpiece W with the processing light L. The processing unit 1, however, may process the workpiece W by irradiating the workpiece W with an arbitrary energy beam. An example of the any energy beam includes at least one of a charged particle beam, an electromagnetic wave, and the like. An example of the charged particle beam includes at least one of an electron beam, an ion beam, and the like.

### (11) Supplementary Notes

Regarding the above-described example embodiments, the following supplementary notes are further disclosed.

### [Supplementary Note 1]

A processing system including:
a first processing apparatus that performs an additive manufacturing in a first processing area by emitting a first energy beam;
a second processing apparatus that performs a removal processing in a second processing area by emitting a second energy beam;
a first placing apparatus on which at least one of the additive manufacturing and the removal processing is performed;
a second placing apparatus on which at least one of the additive manufacturing and the removal processing is performed;
a positional change apparatus that is configured to change a positional relationship between each of the first processing apparatus and the second processing apparatus and each of the first placing apparatus and the second placing apparatus, such that each of the first placing apparatus and the second placing apparatus relatively moves between the first processing area and the second processing area;
a first light receiving apparatus disposed on the first placing apparatus; and
a second light receiving apparatus disposed on the second placing apparatus, wherein
the first light receiving apparatus includes a first light receiving unit that is configured to optically receive at least one of the first energy beam and the second energy beam,
the second light receiving apparatus includes a second light receiving unit that is configured to optically receive at least one of the first energy beam and the second energy beam, and
information related to a position of the first placing apparatus is acquired by an optical received result by the first light receiving unit, and information related to a position of the second placing apparatus is acquired by an optical received result by the second light receiving unit.

### [Supplementary Note 2]

The processing system according to Supplementary Note 1, wherein
the first light receiving apparatus includes:
a first beam passing member including a first attenuation area in which each of the first energy beam and the second energy beam is attenuated, and a first passing area through which each of the first energy beam and the second energy beam is allowed to pass; and
the first light receiving unit that optically receives each of the first energy beam and the second energy beam passing through the first passing area, and
the second light receiving apparatus includes:
   a second beam passing member including a second attenuation area in which each of the first energy beam and the second energy beam is attenuated, and a second passing area through which each of the first energy beam and the second energy beam is allowed to pass; and
   the second light receiving unit that optically receives each of the first energy beam and the second energy beam passing through the second passing area.

### [Supplementary Note 3]

The processing system according to Supplementary Note 1 or 2, wherein
the additive manufacturing by the first processing apparatus or the removal processing by the second processing apparatus is controlled based on the information related to the position of the first placing apparatus, and
the additive manufacturing by the first processing apparatus or the removal processing by the second processing apparatus is controlled based on the information related to the position of the second placing apparatus.

### [Supplementary Note 4]

The processing system according to any one of Supplementary Notes 1 to 3, wherein
a coordinate system regarding the first placing apparatus is corrected based on the information related to the position of the first placing apparatus, and
a coordinate system regarding the second placing apparatus is corrected based on the information related to the position of the second placing apparatus.

### [Supplementary Note 5]

The processing system according to any one of Supplementary Notes 1 to 4, wherein
a positional relationship between the first processing apparatus and the first placing apparatus is corrected based on the information related to the position of the first placing apparatus in a case where the first placing apparatus is located in the first processing area, and
a positional relationship between the second processing apparatus and the second placing apparatus is corrected based on the information related to the position of the second placing apparatus in a case where the second placing apparatus is located in the second processing area.

### [Supplementary Note 6]

The processing system according to any one of Supplementary Notes 1 to 5, wherein
a positional relationship between the second processing apparatus and the first placing apparatus is corrected based on the information related to the position of the first placing apparatus in a case where the first placing apparatus is located in the second processing area, and
a positional relationship between the first processing apparatus and the second placing apparatus is corrected based on the information related to the position of the first placing apparatus in a case where the second placing apparatus is located in the first processing area.

### [Supplementary Note 7]

The processing system according to any one of Supplementary Notes 1 to 6, wherein after each of the first placing apparatus and the second placing apparatus relatively moves between the first processing area and the second processing area, the information related to the position of the first placing apparatus is acquired by the optical received result by the first light receiving unit, and the information related to the position of the second placing apparatus is acquired by the optical received result by the second light receiving unit.

### [Supplementary Note 8]

The processing system according to any one of Supplementary Notes 1 to 7, wherein at each time when each of the first placing apparatus and the second placing apparatus relatively moves between the first processing area and the second processing area, the information related to the position of the first placing apparatus is acquired by the optical received result by the first light receiving unit, and the information related to the position of the second placing apparatus is acquired by the optical received result by the second light receiving unit.

### [Supplementary Note 9]

The processing system according to any one of Supplementary Notes 1 to 8, further comprising a control apparatus that controls the position change apparatus so as to change a positional relationship between each of the first and second processing apparatuses and the first placing apparatus, based on optical received results of the first energy beam and the second energy beam by the first light receiving apparatus, and that controls the position change apparatus so as to change a positional relationship between each of the first and second processing apparatuses and the second placing apparatus, based on optical received results of the first energy beam and the second energy beam by the second light receiving apparatus.

### [Supplementary Note 10]

The processing system according to any one of Supplementary Notes 1 to 9, further comprising a measurement apparatus that is configured to measure a measurement area, wherein
the position change apparatus is configured to change a positional relationship between each of the first processing apparatus, the second processing apparatus, and the measurement apparatus, and each of the first and second placing apparatuses, such that each of the first and second placing apparatuses moves between the first processing area, the second processing area, and the measurement area, and
the measurement apparatus is configured to measure each of the first and second light receiving apparatuses.

### [Supplementary Note 11]

The processing system according to Supplementary Note 10, further including a control apparatus that controls the position change apparatus so as to change a positional relationship between the first placing apparatus and each of the first processing apparatus, the second processing apparatus, and the measurement apparatus, based on the optical received results of the first energy beam and the second energy beam by the first light receiving apparatus, and a measurement result of the first light receiving apparatus by the measurement apparatus, and that controls the position change apparatus so as to change a positional relationship between the second placing apparatus and each of the first processing apparatus, the second processing apparatus, and the measurement apparatus, based on the optical received results of the first energy beam and the second energy beam by the second light receiving apparatus, and a measurement result of the second light receiving apparatus by the measurement apparatus.

### [Supplementary Note 12]

The processing system according to Supplementary Note 10 or 11, wherein
the first light receiving apparatus includes:
a first beam passing member including a first attenuation area in which each of the first energy beam and the second energy beam is attenuated, and a first passing area through which each of the first energy beam and the second energy beam is allowed to pass; and
the first light receiving unit that optically receives each of the first energy beam and the second energy beam passing through the first passing area,
the second light receiving apparatus includes:
   a second beam passing member including a second attenuation area in which each of the first energy beam and the second energy beam is attenuated, and a second passing area through which each of the first energy beam and the second energy beam is allowed to pass; and
   the second light receiving unit that optically receives each of the first energy beam and the second energy beam passing through the second passing area,
   measuring the first light receiving apparatus includes measuring a first mark formed by the first beam passing member, and
   measuring the second light receiving apparatus includes measuring a second mark formed by the second beam passing member.

### [Supplementary Note 13]

The processing system according to any one of Supplementary Notes 10 to 12, wherein in a period when the first processing apparatus performs the additive manufacturing on a first object placed on the first placing apparatus located in the first processing area, the second placing apparatus is located in the measurement area, and the measurement apparatus measures the second light receiving apparatus.

### [Supplementary Note 14]

The processing system according to any one of Supplementary Notes 1 to 13, wherein in a period when the first processing apparatus performs the additive manufacturing on a first object placed on the first placing apparatus located in the first processing area, the second placing apparatus is located in the second processing area, and the second light receiving apparatus optically receives the second energy beam from the second processing apparatus.

### [Supplementary Note 15]

The processing system according to any one of Supplementary Notes 1 to 14, wherein
the first processing apparatus includes: a beam irradiation unit that irradiates the first processing area with the first energy beam; and a material supply unit that supplies a build material to an irradiation position of the first energy beam, and
each of the first and second light receiving units is configured to optically receive a light from at least one of the material supply unit and the build material.

### [Supplementary Note 16]

The processing system according to Supplementary Note 15, wherein each of the first and second light receiving units includes an imaging element that is configured to image at least one of the material supply unit and the build material, by receiving the light from at least one of the material supply unit and the build material.

### [Supplementary Note 17]

The processing system according to any one of Supplementary Notes 1 to 16, further including:
a first position detection apparatus that is configured to acquire the information related to the position of the first placing apparatus; and
a second position detection apparatus that is configured to acquire the information related to the position of the second placing apparatus, wherein
the first position detection apparatus is configured to acquire the information related to the position of the first placing apparatus moved by the position change apparatus, and
the second position detection apparatus is configured to acquire the information related to the position of the second placing apparatus moved by the position change apparatus.

### [Supplementary Note 18]

The processing system according to Supplementary Note 17, wherein at least one of the first position detection apparatus and the second position detection apparatus includes an interferometer.

### [Supplementary Note 19]

The processing system according to Supplementary Note 17 or 18, wherein at least one of the first position detection apparatus and the second position detection apparatus includes a linear encoder or a rotary encoder.

### [Supplementary Note 20]

The processing system according to any one of Supplementary Notes 17 to 19, wherein at least one of the first position detection apparatus and the second position detection apparatus includes a position detection apparatus of an open-loop control type.

### [Supplementary Note 21]

A processing system that builds a first build object, the processing system including:
a first processing apparatus that performs an additive manufacturing in a first processing area by emitting a first energy beam;
a second processing apparatus that performs a removal processing in a second processing area by emitting a second energy beam;
a first placing apparatus on which each of the additive manufacturing and the removal processing is performed;
a position change apparatus that is configured to change a positional relationship between the first placing apparatus and each of the first processing apparatus and the second processing apparatus such that the first placing apparatus relatively moves between the first processing area and the second processing area; and
an input unit that inputs information related to a timing of a change in the positional relationship by the position change apparatus, wherein
the first processing apparatus performs the additive manufacturing, thereby to additively build a first build part that is a part of the first build object, on the first placing apparatus,
the first placing apparatus relatively moves from the first processing area to the second processing area after the first build part is additively built, based on the information related to the timing inputted by the input unit,
the second processing apparatus performs the removal processing on a first processing target portion on which the removal processing is to be performed, of the first build part, after the first placing apparatus moves to the second processing area,
the first placing apparatus relatively moves from the second processing area to the first processing area after the removal processing is performed on the first processing target portion, and
the first processing apparatus performs the additive manufacturing after the first placing apparatus moves to the first processing area.

### [Supplementary Note 22]

The processing system according to Supplementary Note 21, wherein the first processing apparatus additively builds a second build part by performing the additive manufacturing after the first placing apparatus moves to the first processing area.

### [Supplementary Note 23]

The processing system according to Supplementary Note 21 or 22, further comprising a second placing apparatus on which each of the additive manufacturing and the removal processing for building a second build object is performed, wherein
the position change apparatus is configured to change a positional relationship between the second placing apparatus and each of the first processing apparatus and the second processing apparatus such that the second placing apparatus relatively moves between the first processing area and the second processing area.

### [Supplementary Note 24]

The processing system according to Supplementary Note 23, wherein the input unit inputs information related to a timing of a change in a positional relationship between the second placing apparatus and each of the first processing apparatus and the second processing apparatus.

### [Supplementary Note 25]

The processing system according to Supplementary Note 23 or 24, wherein the first built object and the second built object are similar build objects.

### [Supplementary Note 26]

The processing system according to any one of Supplementary Notes 23 to 25, wherein
the first processing apparatus performs the additive manufacturing, thereby to additively build a third build part that is a part of the second build object, on the second placing apparatus,
the second placing apparatus relatively moves from the first processing area to the second processing area after the third build part is additively built, based on the information related to the timing inputted by the input unit,
the second processing apparatus performs the removal processing on a second processing target portion on which the removal processing is to be performed, of the third build part, after the second placing apparatus moves to the second processing area,
the second placing apparatus relatively moves from the second processing area to the first processing area after the removal processing is performed on the second processing target portion, and
the first processing apparatus additively builds a fourth build part by performing the additive manufacturing after the second placing apparatus moves to the first processing area.

### [Supplementary Note 27]

A processing system that builds a first build object, the processing system including:
a first processing apparatus that performs an additive manufacturing in a first processing area by emitting a first energy beam;
a second processing apparatus that performs a removal processing in a second processing area by emitting a second energy beam;
a first placing apparatus on which each of the additive manufacturing and the removal processing is performed;
a position change apparatus that is configured to change a positional relationship between the first placing apparatus and each of the first processing apparatus and the second processing apparatus such that the first placing apparatus relatively moves between the first processing area and the second processing area; and
a control unit that determines a timing of a change in the positional relationship by the position change apparatus, based on information related to a shape of the first build object, wherein
the first processing apparatus performs the additive manufacturing, thereby to additively build a first build part that is a part of the first build object, on the first placing apparatus,
the first placing apparatus relatively moves from the first processing area to the second processing area after the first build part is additively built, based on the timing determined by the control unit,
the second processing apparatus performs the removal processing on a first processing target portion on which the removal processing is to be performed, of the first build part, after the first placing apparatus moves to the second processing area,
the first placing apparatus relatively moves from the second processing area to the first processing area after the removal processing is performed on the first processing target portion, and
the first processing apparatus performs the additive manufacturing after the first placing apparatus moves to the first processing area.

### [Supplementary Note 28]

The processing system according to Supplementary Note 27, further including: a second placing apparatus on which each of the additive manufacturing and the removal processing for building a second build object is performed, wherein
the position change apparatus is configured to change a positional relationship between the second placing apparatus and each of the first processing apparatus and the second processing apparatus such that the second placing apparatus relatively moves between the first processing area and the second processing area.

### [Supplementary Note 29]

The processing system according to Supplementary Note 28, wherein the control unit determines a timing of a change in a positional relationship between the second placing apparatus and each of the first processing apparatus and the second processing apparatus.

### [Supplementary Note 30]

The processing system according to Supplementary Note 28 or 29, wherein the first built object and the second built object are similar build objects.

### [Supplementary Note 31]

The processing system according to any one of Supplementary Notes 28 to 30, wherein
the first processing apparatus performs the additive manufacturing, thereby to additively build a third build part that is a part of the second build object, on the second placing apparatus,
the second placing apparatus relatively moves from the first processing area to the second processing area after the third build part is additively built, based on the timing determined by the control unit,
the second processing apparatus performs the removal processing on a second processing target portion on which the removal processing is to be performed, of the third build part, after the second placing apparatus moves to the second processing area,
the second placing apparatus relatively moves from the second processing area to the first processing area after the removal processing is performed on the second processing target portion, and
the first processing apparatus additively builds a fourth build part by performing the additive manufacturing after the second placing apparatus moves to the first processing area.

### [Supplementary Note 32]

The processing system according to any one of Supplementary Notes 21 to 31, wherein
the first processing apparatus additively builds a second build part by performing the additive manufacturing after the first placing apparatus moves to the first processing area, and
the first processing target portion on which the removal processing is performed by the second processing apparatus, includes a portion in which irradiation of the second energy beam is blocked in a case where the second build part is additively built in the first build part.

### [Supplementary Note 33]

The processing system according to any one of Supplementary Notes 21 to 32, wherein the first build object includes an object of at least one of a size and a shape by which irradiation with the second energy beam to the first processing target portion is blocked.

### [Supplementary Note 34]

The processing system according to any one of Supplementary Notes 22 to 26 and 32, wherein
the first build object includes a curved tube,
the first build part includes a first tube part extending along a first direction of the tube, and
the second build part includes a second tube part that is connected to the first tube part and that extends along a second direction intersecting the first direction of the tube.

### [Supplementary Note 35]

The processing system according to any one of Supplementary Notes 22 to 26, 32, and 34, wherein
the first processing apparatus additively builds a second build part by performing the additive manufacturing after the first placing apparatus moves to the first processing area,
a space is formed inside the first build object,
the first build part includes a first member partially surrounding the space, and
the second build part includes a second member partially closing the space.

### [Supplementary Note 36]

The processing system according to any one of Supplementary Notes 23 to 26 and 28 to 31, further including:
a first position detection apparatus that is configured to acquire the information related to the position of the first placing apparatus; and
a second position detection apparatus that is configured to acquire the information related to the position of the second placing apparatus, wherein
the first position detection apparatus is configured to acquire the information related to the position of the first placing apparatus moved by the position change apparatus, and
the second position detection apparatus is configured to acquire the information related to the position of the second placing apparatus moved by the position change apparatus.

### [Supplementary Note 37]

The processing system according to Supplementary Note 36, wherein at least one of the first position detection apparatus and the second position detection apparatus includes an interferometer.

### [Supplementary Note 38]

The processing system according to Supplementary Note 36 or 37, wherein at least one of the first position detection apparatus and the second position detection apparatus includes a linear encoder or a rotary encoder.

### [Supplementary Note 39]

The processing system according to any one of Supplementary Notes 36 to 38, wherein at least one of the first position detection apparatus and the second position detection apparatus includes a position detection apparatus of an open-loop control type.

### [Supplementary Note 40]

The processing system according to any one of Supplementary Notes 21 to 39, wherein the first processing apparatus additively builds a second build part by performing the additive manufacturing after the first placing apparatus moves to the first processing area.

### [Supplementary Note 41]

The processing system according to Supplementary Note 1, wherein
the first light receiving apparatus includes the first light receiving unit that is configured to optically receive the second energy beam, and
the second light receiving apparatus includes the second light receiving unit that is configured to optically receive the second energy beam.

### [Supplementary Note 42]

The processing system according to Supplementary Note 41, wherein
the first processing includes at least one of a removal processing, an additive manufacturing, and a melt processing, and
the second processing includes at least another one of the removal processing, the additive manufacturing, and the melt processing.

### [Supplementary Note 43]

A processing system including:
a first processing apparatus that performs a first processing in a first processing area by irradiating the first processing area with a first energy beam;
a second processing apparatus that performs a second processing, which is different in type from the first processing, in a second processing area by irradiating the second processing area with a second energy beam,
a first placing apparatus that is configured to place thereon a first object on which at least one of the first processing and the second processing is performed;
a second placing apparatus that is configured to place thereon a second object on which at least one of the first processing and the second processing is performed;
a first moving apparatus that is configured to move each of the first and second processing apparatuses; and
a second moving apparatus that is configured to move each of the first and second placing apparatuses.

### [Supplementary Note 44]

The processing apparatus according to Supplementary Note 43, wherein
the first moving apparatus includes: a first driving apparatus that is configured to move the first processing apparatus; and a second driving apparatus that is configured to move the second processing apparatus, and
the second moving apparatus includes: a fourth driving apparatus that is configured to move the first placing apparatus; and a fourth driving apparatus that is configured to move the second placing apparatus.

### [Supplementary Note 45]

The processing system according to Supplementary Note 43 or 44, wherein
the first moving apparatus is configured to move each of the first and second processing apparatuses along a first direction intersecting a beam traveling direction in which each of the first energy beam and the second energy beam travels,
the second moving apparatus is configured to move each of the first and second placing apparatuses along a second direction intersecting both the beam traveling direction and the first direction, and
the first and second moving apparatuses allow each of the first and second placing apparatuses to relatively move between the first processing area and the second processing area.

### [Supplementary Note 46]

The processing system according to Supplementary Note 45, wherein
the first processing apparatus is movable along a first shaft member extending along the first direction, and
the second processing apparatus is movable along a second shaft member extending along the first direction.

### [Supplementary Note 47]

The processing system according to Supplementary Note 45, wherein
each of the first and second processing apparatuses is movable along a first shaft member extending along the first direction.

### [Supplementary Note 48]

The processing system according to any one of Supplementary Notes 43 to 47, wherein
the first moving apparatus is configured to move each of the first and second processing apparatuses in a first moving space, and
the second moving apparatus is configured to move each of the first and second placing apparatuses in a second moving space that is away from the first moving space along the beam traveling direction.

### [Supplementary Note 49]

The processing system according to any one of Supplementary Notes 43 to 48, wherein the processing system further includes:
a measurement apparatus that is configured to measure a measurement area; and
a third moving apparatus that is configured to move the measurement apparatus along a third direction intersecting the beam traveling direction,
the first placing apparatus is configured to place thereon the first object that is measurable by the measurement apparatus,
the second placing apparatus is configured to place thereon the second object that is measurable by the measurement apparatus, and
the first to third moving apparatuses allow each of the first and second placing apparatuses to relatively move between the first processing area, the second processing area, and the measurement area.

### [Supplementary Note 50]

The processing system according to Supplementary Note 49, wherein
the first moving apparatus is configured to move each of the first and second processing apparatuses along a first direction intersecting a beam traveling direction in which each of the first energy beam and the second energy beam travels, and
the third direction is parallel to the first direction.

### [Supplementary Note 51]

The processing system according to Supplementary Note 50, wherein
the first processing apparatus is movable along a first shaft member extending along the first direction,
the second processing apparatus is movable along a second shaft member extending along the first direction,
the measurement apparatus is movable along any one of the first shaft member, the second shaft member, and a third shaft member extending along the first direction.

### [Supplementary Note 52]

The processing system according to Supplementary Note 50, wherein
each of the first and second processing apparatuses is movable along a first shaft member extending along the first direction, and
the measurement apparatus is movable along any one of the first shaft member and a second shaft member extending along the first direction.

### [Supplementary Note 53]

The processing system according to any one of Supplementary Notes 43 to 52, wherein
the first moving apparatus is configured to move each of the first and second processing apparatuses along a first direction intersecting a beam traveling direction in which each of the first energy beam and the second energy beam travels,
the second moving apparatus is configured to move each of the first and second placing apparatuses along a second direction intersecting both the beam traveling direction and the first direction,
the first processing apparatus is disposed in a first processing space including the first processing area, and
the second processing apparatus is disposed in a second processing space that includes the second processing area and that is located at a different position from that of the first processing space along the second direction.

### [Supplementary Note 54]

The processing system according to Supplementary Note 53, wherein a wall member that separates the first processing space and the second processing space, is disposed between the first processing space and the second processing space.

### [Supplementary Note 55]

The processing system according to Supplementary Note 53 or 54, wherein
the processing system further includes an exhaust apparatus that evacuates each of the first and second processing spaces, and
an exhaust flow rate of the first processing space by the exhaust apparatus is different from an exhaust flow rate of the second processing space by the exhaust apparatus.

### [Supplementary Note 56]

The processing system according to any one of Supplementary Notes 53 to 55, wherein
the first processing includes an additive manufacturing, and
the processing system further includes a measurement apparatus that is disposed in the second processing space and that is configured to measure a measurement area.

### [Supplementary Note 57]

The processing system according to any one of Supplementary Notes 43 to 56, wherein
the first processing includes at least one of a removal processing, an additive manufacturing, and a melt processing, and
the second processing includes at least another one of the removal processing, the additive manufacturing, and the melt processing.

### [Supplementary Note 58]

A processing system including:
a first processing apparatus that performs a first processing in a first processing area by irradiating the first processing area with a first energy beam;
a second processing apparatus that performs a second processing, which is different in type from the first processing, in a second processing area by irradiating the second processing area with a second energy beam;
a third processing apparatus that performs the second processing in a third processing area by irradiating the third processing area with a third energy beam;
a first placing apparatus that is configured to place thereon a first object on which at least one of the first processing and the second processing is performed;
a second placing apparatus that is configured to place thereon a second object on which at least one of the first processing and the second processing is performed; and
a position change apparatus that is configured to change a positional relationship between each of the first to third processing apparatuses and each of the first and second placing apparatuses such that each of the first and second processing apparatuses relatively moves between at least two of the first to third processing areas.

### [Supplementary Note 59]

The processing system according to Supplementary Note 58, wherein
the first processing includes an additive manufacturing, and
the second processing includes at least one of a removal processing and a melt processing.

### [Supplementary Note 60]

The processing system according to Supplementary Note 59, wherein
the first processing apparatus is disposed in a first processing space including the first processing area, and
the second and third processing apparatuses are disposed in a second processing space that includes the second and third processing areas and that is located at a different position from that of the first processing space.

### [Supplementary Note 61]

The processing system according to Supplementary Note 60, wherein
a wall member that separates the first processing space and the second processing space, is disposed between the first processing space and the second processing space.

### [Supplementary Note 62]

The processing system according to Supplementary Note 60 or 61, wherein
the processing system further includes an exhaust apparatus that evacuates each of the first and second processing spaces, and
an exhaust flow rate of the first processing space by the exhaust apparatus is different from an exhaust flow rate of the second processing space by the exhaust apparatus.

### [Supplementary Note 63]

The processing system according to any one of Supplementary Notes 60 to 62, wherein
the processing system further includes a measurement apparatus that is disposed in the second processing space and that is configured to measure a measurement area.

### [Supplementary Note 64]

A processing system including:
a first processing apparatus that performs a first processing in a first processing area by irradiating the first processing area with a first energy beam;
a second processing apparatus that performs a second processing, which is different in type from the first processing, in a second processing area by irradiating the second processing area with a second energy beam;
a first placing apparatus that is configured to place thereon a first object on which at least one of the first processing and the second processing is performed;
a second placing apparatus that is configured to place thereon a second object on which at least one of the first processing and the second processing is performed;
a shape measurement apparatus that is configured to measure a shape of an object processed on the first placing apparatus or the second placing apparatus;
a first moving apparatus that is configured to move each of the first and second processing apparatuses; and
a third moving apparatus that is configured to move the shape measurement apparatus.

### [Supplementary Note 65]

A processing system including:
a first processing apparatus that performs a first processing in a first processing area by irradiating the first processing area with a first energy beam;
a second processing apparatus that performs a second processing, which is different in type from the first processing, in a second processing area by irradiating the second processing area with a second energy beam;
a first placing apparatus that is configured to place thereon a first object on which at least one of the first processing and the second processing is performed;
a second placing apparatus that is configured to place thereon a second object on which at least one of the first processing and the second processing is performed;
a shape measurement apparatus that is configured to measure a shape of an object processed on the first placing apparatus or the second placing apparatus;
a second moving apparatus that is configured to move each of the first and second processing apparatuses; and
a third moving apparatus that is configured to move the shape measurement apparatus.

At least a part of the features of each example embodiment described above may be properly combined with at least another part of the features of each example embodiment described above. A part of the features of each example embodiment described above may not be used. Furthermore, the disclosures of all publications and United States patents that are cited in each example embodiment described above are incorporated in the disclosures of the present application by reference if it is legally permitted.

The present invention is not limited to the example embodiments described above and is allowed to be changed, if desired, without departing from the essence or spirit of the invention which can be read from the claims and the entire specification, and a processing system, which involves such changes, is also intended to be within the technical scope of the present invention.

### Description of Reference Codes

SYS Processing system
1 Processing unit
11, 11R, 11A Processing light source
12, 13 Processing head
14 Measurement head
15 Head driving system
16 Position detection apparatus
3 Stage unit
31 Surface plate
32, 32#1, 32#2 Stage
33 Stage driving system
34 Position detection apparatus
35d Light receiving apparatus
351d Beam passing member
4 Control apparatus
5 Housing
51b Wall member
71c Exhaust apparatus
72c Gas supply apparatus
W, W#1, W#2 Workpiece
L, RL, AL Processing light
RSA, ASA Processing area
MSA Measurement area
BLR, BLA Processing baseline
BLM Measurement baseline

## Claims

1. A processing system comprising:
a first processing apparatus that performs an additive manufacturing in a first processing area by emitting a first energy beam;
a second processing apparatus that performs a removal processing in a second processing area by emitting a second energy beam;
a first placing apparatus on which at least one of the additive manufacturing and the removal processing is performed;
a second placing apparatus on which at least one of the additive manufacturing and the removal processing is performed;
a positional change apparatus that is configured to change a positional relationship between each of the first processing apparatus and the second processing apparatus and each of the first placing apparatus and the second placing apparatus, such that each of the first placing apparatus and the second placing apparatus relatively moves between the first processing area and the second processing area;
a first light receiving apparatus disposed on the first placing apparatus; and
a second light receiving apparatus disposed on the second placing apparatus, wherein
the first light receiving apparatus includes a first light receiving unit that is configured to optically receive at least one of the first energy beam and the second energy beam,
the second light receiving apparatus includes a second light receiving unit that is configured to optically receive at least one of the first energy beam and the second energy beam, and
information related to a position of the first placing apparatus is acquired by an optical received result by the first light receiving unit, and information related to a position of the second placing apparatus is acquired by an optical received result by the second light receiving unit.

2. The processing system according to claim 1, wherein
the first light receiving apparatus includes:
a first beam passing member including a first attenuation area in which each of the first energy beam and the second energy beam is attenuated, and a first passing area through which each of the first energy beam and the second energy beam is allowed to pass; and
the first light receiving unit that optically receives each of the first energy beam and the second energy beam passing through the first passing area, and
the second light receiving apparatus includes:
a second beam passing member including a second attenuation area in which each of the first energy beam and the second energy beam is attenuated, and a second passing area through which each of the first energy beam and the second energy beam is allowed to pass; and
the second light receiving unit that optically receives each of the first energy beam and the second energy beam passing through the second passing area.

3. The processing system according to claim 1 or 2, wherein
the additive manufacturing by the first processing apparatus or the removal processing by the second processing apparatus is controlled based on the information related to the position of the first placing apparatus, and
the additive manufacturing by the first processing apparatus or the removal processing by the second processing apparatus is controlled based on the information related to the position of the second placing apparatus.

4. The processing system according to any one of claims 1 to 3, wherein
a coordinate system regarding the first placing apparatus is corrected based on the information related to the position of the first placing apparatus, and
a coordinate system regarding the second placing apparatus is corrected based on the information related to the position of the second placing apparatus.

5. The processing system according to any one of claims 1 to 4, wherein
a positional relationship between the first processing apparatus and the first placing apparatus is corrected based on the information related to the position of the first placing apparatus in a case where the first placing apparatus is located in the first processing area, and
a positional relationship between the second processing apparatus and the second placing apparatus is corrected based on the information related to the position of the second placing apparatus in a case where the second placing apparatus is located in the second processing area.

6. The processing system according to any one of claims 1 to 5, wherein
a positional relationship between the second processing apparatus and the first placing apparatus is corrected based on the information related to the position of the first placing apparatus in a case where the first placing apparatus is located in the second processing area, and
a positional relationship between the first processing apparatus and the second placing apparatus is corrected based on the information related to the position of the first placing apparatus in a case where the second placing apparatus is located in the first processing area.

7. The processing system according to any one of claims 1 to 6, wherein after each of the first placing apparatus and the second placing apparatus relatively moves between the first processing area and the second processing area, the information related to the position of the first placing apparatus is acquired by the optical received result by the first light receiving unit, and the information related to the position of the second placing apparatus is acquired by the optical received result by the second light receiving unit.

8. The processing system according to any one of claims 1 to 7, wherein at each time when each of the first placing apparatus and the second placing apparatus relatively moves between the first processing area and the second processing area, the information related to the position of the first placing apparatus is acquired by the optical received result by the first light receiving unit, and the information related to the position of the second placing apparatus is acquired by the optical received result by the second light receiving unit.

9. The processing system according to any one of claims 1 to 8, further comprising a control apparatus that controls the position change apparatus so as to change a positional relationship between each of the first and second processing apparatuses and the first placing apparatus, based on optical received results of the first energy beam and the second energy beam by the first light receiving apparatus, and that controls the position change apparatus so as to change a positional relationship between each of the first and second processing apparatuses and the second placing apparatus, based on optical received results of the first energy beam and the second energy beam by the second light receiving apparatus.

10. The processing system according to any one of claims 1 to 9, further comprising a measurement apparatus that is configured to measure a measurement area, wherein
the position change apparatus is configured to change a positional relationship between each of the first processing apparatus, the second processing apparatus, and the measurement apparatus, and each of the first and second placing apparatuses, such that each of the first and second placing apparatuses moves between the first processing area, the second processing area, and the measurement area, and
the measurement apparatus is configured to measure each of the first and second light receiving apparatuses.

11. The processing system according to claim 10, further comprising a control apparatus that controls the position change apparatus so as to change a positional relationship between the first placing apparatus and each of the first processing apparatus, the second processing apparatus, and the measurement apparatus, based on the optical received results of the first energy beam and the second energy beam by the first light receiving apparatus, and a measurement result of the first light receiving apparatus by the measurement apparatus, and that controls the position change apparatus so as to change a positional relationship between the second placing apparatus and each of the first processing apparatus, the second processing apparatus, and the measurement apparatus, based on the optical received results of the first energy beam and the second energy beam by the second light receiving apparatus, and a measurement result of the second light receiving apparatus by the measurement apparatus.

12. The processing system according to claim 10 or 11, wherein
the first light receiving apparatus includes:
a first beam passing member including a first attenuation area in which each of the first energy beam and the second energy beam is attenuated, and a first passing area through which each of the first energy beam and the second energy beam is allowed to pass; and
the first light receiving unit that optically receives each of the first energy beam and the second energy beam passing through the first passing area,
the second light receiving apparatus includes:
a second beam passing member including a second attenuation area in which each of the first energy beam and the second energy beam is attenuated, and a second passing area through which each of the first energy beam and the second energy beam is allowed to pass; and
the second light receiving unit that optically receives each of the first energy beam and the second energy beam passing through the second passing area,
measuring the first light receiving apparatus includes measuring a first mark formed by the first beam passing member, and
measuring the second light receiving apparatus includes measuring a second mark formed by the second beam passing member.

13. The processing system according to any one of claims 10 to 12, wherein in a period when the first processing apparatus performs the additive manufacturing on a first object placed on the first placing apparatus located in the first processing area, the second placing apparatus is located in the measurement area, and the measurement apparatus measures the second light receiving apparatus.

14. The processing system according to any one of claims 1 to 13, wherein in a period when the first processing apparatus performs the additive manufacturing on a first object placed on the first placing apparatus located in the first processing area, the second placing apparatus is located in the second processing area, and the second light receiving apparatus optically receives the second energy beam from the second processing apparatus.

15. The processing system according to any one of claims 1 to 14, wherein
the first processing apparatus includes: a beam irradiation unit that irradiates the first processing area with the first energy beam; and a material supply unit that supplies a build material to an irradiation position of the first energy beam, and
each of the first and second light receiving units is configured to optically receive a light from at least one of the material supply unit and the build material.

16. The processing system according to claim 15, wherein each of the first and second light receiving units includes an imaging element that is configured to image at least one of the material supply unit and the build material, by receiving the light from at least one of the material supply unit and the build material.

17. The processing system according to any one of claims 1 to 16, further comprising:
a first position detection apparatus that is configured to acquire the information related to the position of the first placing apparatus; and
a second position detection apparatus that is configured to acquire the information related to the position of the second placing apparatus, wherein
the first position detection apparatus is configured to acquire the information related to the position of the first placing apparatus moved by the position change apparatus, and
the second position detection apparatus is configured to acquire the information related to the position of the second placing apparatus moved by the position change apparatus.

18. The processing system according to claim 17, wherein at least one of the first position detection apparatus and the second position detection apparatus includes an interferometer.

19. The processing system according to claim 17 or 18, wherein at least one of the first position detection apparatus and the second position detection apparatus includes a linear encoder or a rotary encoder.

20. The processing system according to any one of claims 17 to 19, wherein at least one of the first position detection apparatus and the second position detection apparatus includes a position detection apparatus of an open-loop control type.

21. A processing system that builds a first build object, the processing system comprising:
a first processing apparatus that performs an additive manufacturing in a first processing area by emitting a first energy beam;
a second processing apparatus that performs a removal processing in a second processing area by emitting a second energy beam;
a first placing apparatus on which each of the additive manufacturing and the removal processing is performed;
a position change apparatus that is configured to change a positional relationship between the first placing apparatus and each of the first processing apparatus and the second processing apparatus such that the first placing apparatus relatively moves between the first processing area and the second processing area; and
an input unit that inputs information related to a timing of a change in the positional relationship by the position change apparatus, wherein
the first processing apparatus performs the additive manufacturing, thereby to additively build a first build part that is a part of the first build object, on the first placing apparatus,
the first placing apparatus relatively moves from the first processing area to the second processing area after the first build part is additively built, based on the information related to the timing inputted by the input unit,
the second processing apparatus performs the removal processing on a first processing target portion on which the removal processing is to be performed, of the first build part, after the first placing apparatus moves to the second processing area,
the first placing apparatus relatively moves from the second processing area to the first processing area after the removal processing is performed on the first processing target portion, and
the first processing apparatus performs the additive manufacturing after the first placing apparatus moves to the first processing area.

22. The processing system according to claim 21, wherein the first processing apparatus additively builds a second build part by performing the additive manufacturing after the first placing apparatus moves to the first processing area.

23. The processing system according to claim 21 or 22, further comprising a second placing apparatus on which each of the additive manufacturing and the removal processing for building a second build object is performed, wherein
the position change apparatus is configured to change a positional relationship between the second placing apparatus and each of the first processing apparatus and the second processing apparatus such that the second placing apparatus relatively moves between the first processing area and the second processing area.

24. The processing system according to claim 23, wherein the input unit inputs information related to a timing of a change in a positional relationship between the second placing apparatus and each of the first processing apparatus and the second processing apparatus.

25. The processing system according to claim 23 or 24, wherein the first built object and the second built object are similar build objects.

26. The processing system according to any one of claims 23 to 25, wherein
the first processing apparatus performs the additive manufacturing, thereby to additively build a third build part that is a part of the second build object, on the second placing apparatus,
the second placing apparatus relatively moves from the first processing area to the second processing area after the third build part is additively built, based on the information related to the timing inputted by the input unit,
the second processing apparatus performs the removal processing on a second processing target portion on which the removal processing is to be performed, of the third build part, after the second placing apparatus moves to the second processing area,
the second placing apparatus relatively moves from the second processing area to the first processing area after the removal processing is performed on the second processing target portion, and
the first processing apparatus additively builds a fourth build part by performing the additive manufacturing after the second placing apparatus moves to the first processing area.

27. A processing system that builds a first build object, the processing system comprising:
a first processing apparatus that performs an additive manufacturing in a first processing area by emitting a first energy beam;
a second processing apparatus that performs a removal processing in a second processing area by emitting a second energy beam;
a first placing apparatus on which each of the additive manufacturing and the removal processing is performed;
a position change apparatus that is configured to change a positional relationship between the first placing apparatus and each of the first processing apparatus and the second processing apparatus such that the first placing apparatus relatively moves between the first processing area and the second processing area; and
a control unit that determines a timing of a change in the positional relationship by the position change apparatus, based on information related to a shape of the first build object, wherein
the first processing apparatus performs the additive manufacturing, thereby to additively build a first build part that is a part of the first build object, on the first placing apparatus,
the first placing apparatus relatively moves from the first processing area to the second processing area after the first build part is additively built, based on the timing determined by the control unit,
the second processing apparatus performs the removal processing on a first processing target portion on which the removal processing is to be performed, of the first build part, after the first placing apparatus moves to the second processing area,
the first placing apparatus relatively moves from the second processing area to the first processing area after the removal processing is performed on the first processing target portion, and
the first processing apparatus performs the additive manufacturing after the first placing apparatus moves to the first processing area.

28. The processing system according to claim 27, further comprising a second placing apparatus on which each of the additive manufacturing and the removal processing for building a second build object is performed, wherein
the position change apparatus is configured to change a positional relationship between the second placing apparatus and each of the first processing apparatus and the second processing apparatus such that the second placing apparatus relatively moves between the first processing area and the second processing area.

29. The processing system according to claim 28, wherein the control unit determines a timing of a change in a positional relationship between the second placing apparatus and each of the first processing apparatus and the second processing apparatus.

30. The processing system according to claim 28 or 29, wherein the first built object and the second built object are similar build objects.

31. The processing system according to any one of claims 28 to 30, wherein
the first processing apparatus performs the additive manufacturing, thereby to additively build a third build part that is a part of the second build object, on the second placing apparatus,
the second placing apparatus relatively moves from the first processing area to the second processing area after the third build part is additively built, based on the timing determined by the control unit,
the second processing apparatus performs the removal processing on a second processing target portion on which the removal processing is to be performed, of the third build part, after the second placing apparatus moves to the second processing area,
the second placing apparatus relatively moves from the second processing area to the first processing area after the removal processing is performed on the second processing target portion, and
the first processing apparatus additively builds a fourth build part by performing the additive manufacturing after the second placing apparatus moves to the first processing area.

32. The processing system according to any one of claims 21 to 31, wherein
the first processing apparatus additively builds a second build part by performing the additive manufacturing after the first placing apparatus moves to the first processing area, and
the first processing target portion on which the removal processing is performed by the second processing apparatus, includes a portion in which irradiation of the second energy beam is blocked in a case where the second build part is additively built in the first build part.

33. The processing system according to any one of claims 21 to 32, wherein the first build object includes an object of at least one of a size and a shape by which irradiation with the second energy beam to the first processing target portion is blocked.

34. The processing system according to any one of claims 22 to 26 and 32, wherein
the first build object includes a curved tube,
the first build part includes a first tube part extending along a first direction of the tube, and
the second build part includes a second tube part that is connected to the first tube part and that extends along a second direction intersecting the first direction of the tube.

35. The processing system according to any one of claims 22 to 26, 32, and 34, wherein
the first processing apparatus additively builds a second build part by performing the additive manufacturing after the first placing apparatus moves to the first processing area,
a space is formed inside the first build object,
the first build part includes a first member partially surrounding the space, and
the second build part includes a second member partially closing the space.

36. The processing system according to any one of claims 23 to 26 and 28 to 31, further comprising:
a first position detection apparatus that is configured to acquire the information related to the position of the first placing apparatus; and
a second position detection apparatus that is configured to acquire the information related to the position of the second placing apparatus, wherein
the first position detection apparatus is configured to acquire the information related to the position of the first placing apparatus moved by the position change apparatus, and
the second position detection apparatus is configured to acquire the information related to the position of the second placing apparatus moved by the position change apparatus.

37. The processing system according to claim 36, wherein at least one of the first position detection apparatus and the second position detection apparatus includes an interferometer.

38. The processing system according to claim 36 or 37, wherein at least one of the first position detection apparatus and the second position detection apparatus includes a linear encoder or a rotary encoder.

39. The processing system according to any one of claims 36 to 38, wherein at least one of the first position detection apparatus and the second position detection apparatus includes a position detection apparatus of an open-loop control type.

40. The processing system according to any one of claims 21 to 39, wherein the first processing apparatus additively builds a second build part by performing the additive manufacturing after the first placing apparatus moves to the first processing area.

41. A processing system comprising:
a first processing apparatus that performs a first processing in a first processing area by irradiating the first processing area with a first energy beam;
a second processing apparatus that performs a second processing in a second processing area by irradiating the second processing area with a second energy beam;
a first placing apparatus on which at least one of the first processing and the second processing is performed;
a second placing apparatus on which at least one of the additive manufacturing and the removal processing is performed;
a positional change apparatus that is configured to change a positional relationship between each of the first processing apparatus and the second processing apparatus and each of the first placing apparatus and the second placing apparatus, such that each of the first placing apparatus and the second placing apparatus relatively moves between the first processing area and the second processing area;
a first light receiving apparatus disposed on the first placing apparatus; and
a second light receiving apparatus disposed on the second placing apparatus, wherein
the first light receiving apparatus includes a first light receiving unit that is configured to optically receive the first energy beam,
the second light receiving apparatus includes a second light receiving unit that is configured to optically receive the first energy beam, and
information related to a position of the first placing apparatus is acquired by an optical received result by the first light receiving unit, and information related to a position of the second placing apparatus is acquired by an optical received result by the second light receiving unit.

42. A processing system that builds a first build object, the processing system comprising:
a first processing apparatus that performs an additive manufacturing in a first processing area by irradiating the first processing area with a first energy beam;
a second processing apparatus that performs a removal processing in a second processing area by irradiating the second processing area with a second energy beam;
a first placing apparatus on which each of the additive manufacturing and the removal processing is performed; and
a position change apparatus that is configured to change a positional relationship between the first placing apparatus and each of the first processing apparatus and the second processing apparatus such that the first placing apparatus relatively moves between the first processing area and the second processing area, wherein
the first processing apparatus performs the additive manufacturing, thereby to additively build a first build part that is a part of the first build object, on the first placing apparatus,
the first placing apparatus relatively moves from the first processing area to the second processing area after the first build part is additively built,
the second processing apparatus performs the removal processing on a first processing target portion on which the removal processing is to be performed, of the first build part, after the first placing apparatus moves to the second processing area, and
the first placing apparatus relatively moves from the second processing area to the first processing area after the removal processing is performed on the first processing target portion.

43. A processing system comprising:
a first processing apparatus that performs a first processing in a first processing area by irradiating the first processing area with a first energy beam;
a second processing apparatus that performs a second processing, which is different in type from the first processing, in a second processing area by irradiating the second processing area with a second energy beam,
a first placing apparatus that is configured to place thereon a first object on which at least one of the first processing and the second processing is performed;
a second placing apparatus that is configured to place thereon a second object on which at least one of the first processing and the second processing is performed;
a first moving apparatus that is configured to move each of the first and second processing apparatuses; and
a second moving apparatus that is configured to move each of the first and second placing apparatuses.
